# EUROPEAN PATENT SPECIFICATION

(11) **EP 2 666 522 B1**
(45) Date of publication and mention of the grant of the patent: **28.03.2018**
(21) Application number: 13168897.0
(22) Date of filing: 23.05.2013
(51) Int. Cl.: A63B 37/00, C08K 5/098, C08K 5/14, C08K 5/09, C08L 21/00, B32B 25/02, B32B 25/08, A63B 37/02

(54) **Golf ball**
Golfball
Balle de golf

(30) Priority: 25.05.2012 JP 2012119603; 28.05.2012 JP 2012120502; 30.05.2012 JP 2012122840; 31.05.2012 JP 2012124079
(43) Date of publication of application: 27.11.2013
(60) Divisional application: 17154465.3
(73) Proprietor: Dunlop Sports Co., Ltd., Hyogo 651-0072 (JP)
(72) Inventor: Sajima, Takahiro, Kobe-shi, Hyogo 651-0072 (JP); Inoue, Hidetaka, Kobe-shi, Hyogo 651-0072 (JP)
(74) Representative: Manitz Finsterwald Patentanwälte PartmbB

(56) References cited:
- US-A1- 2008 085 784
- US-A1- 2009 111 611
- US-A1- 2011 159 998
- US-A1- 2012 088 604
- US-B2- 8 123 630

## Description

### BACKGROUND OF THE INVENTION

### Field of the Invention

The present invention relates to golf balls. Specifically, the present invention relates to golf balls that include a solid core and a cover.

### Description of the Related Art

Golf players' foremost requirement for golf balls is flight performance. In particular, golf players place importance on flight performance upon a shot with a driver. Flight performance correlates with the resilience performance of a golf ball. When a golf ball having excellent resilience performance is hit, the golf ball flies at a high speed, thereby achieving a large flight distance.

Golf players also place importance on spin performance of golf balls. When a backspin rate is high, the run is short. It is easy for golf players to cause a golf ball, to which backspin is easily provided, to stop at a target point. When a sidespin rate is high, the golf ball easily curves. It is easy for golf players to intentionally cause a golf ball, to which sidespin is easily provided, to curve. A golf ball to which spin is easilyprovidedhas excellent controllability. Inparticular, advanced golf players place importance on controllability upon a shot with a short iron.

Golf balls that include a core having excellent resilience performance are disclosed in JP61-37178, JP2008-212681 (US2008/0214324), JP2008-523952 (US2006/0135287 and US2007/0173607), and JP2009-119256 (US2009/0124757).

The core disclosed in JP61-37178 is obtained from a rubber composition that includes a co-crosslinking agent and a crosslinking activator. This publication discloses palmitic acid, stearic acid, and myristic acid as the crosslinking activator.

The core disclosed in JP2008-212681 is obtained from a rubber composition that includes an organic peroxide, a metal salt of an α,β-unsaturated carboxylic acid, and a copper salt of a fatty acid.

The core disclosed in JP2008-523952 is obtained from a rubber composition that includes a metal salt of an unsaturated monocarboxylic acid, a free radical initiator, and a non-conjugated diene monomer.

The core disclosed in JP2009-119256 is obtained from a rubber composition that includes a polybutadiene whose vinyl content is equal to or less than 2%, whose cis 1,4-bond content is equal to or greater than 80%, and which has an active end modified with an alkoxysilane compound.

An appropriate trajectory height is required in order to achieve a large flight distance. A trajectory height depends on a spin rate and a launch angle. In a golf ball that achieves a high trajectory by a high spin rate, a flight distance is insufficient. In a golf ball that achieves a high trajectory by a high launch angle, a large flight distance is obtained. Use of an outer-hard/inner-soft structure in a golf ball can achieve a low spin rate and a high launch angle. Modifications regarding a hardness distribution of a core are disclosed in JP6-154357 (USP5,403,010), JP2008-194471 (USP7,344,455, US2008/0194358, US2008/0194359, and US2008/0214325), JP2008-194473 (US2008/0194357 and US2008/0312008), and JP2010-253268 (US2010/0273575).

In the core disclosed in JP6-154357, a JIS-C hardness H1 at the central point of the core is 58 to 73, a JIS-C hardness H2 in a region that extends over a distance range from equal to or greater than 5 mm to equal to or less than 10 mm from the central point is equal to or greater than 65 but equal to or less than 75, a JIS-C hardness H3 at a point located at a distance of 15 mm from the central point is equal to or greater than 74 but equal to or less than 82, and a JIS-C hardness H4 at the surface of the core is equal to or greater than 76 but equal to or less than 84. The hardness H2 is greater than the hardness H1, the hardness H3 is greater than the hardness H2, and the hardness H4 is equal to or greater than the hardness H3.

In the core disclosed in JP2008-194471, a Shore D hardness at the central point of the core is equal to or greater than 30 but equal to or less than 48, a Shore D hardness at a point located at a distance of 4 mm from the central point is equal to or greater than 34 but equal to or less than 52, a Shore D hardness at a point located at a distance of 8 mm from the central point is equal to or greater than 40 but equal to or less than 58, a Shore D hardness at a point located at a distance of 12 mm from the central point is equal to or greater than 43 but equal to or less than 61, a Shore D hardness in a region that extends over a distance range from equal to or greater than 2 mm to equal to or less than 3 mm from the surface of the core is equal to or greater than 36 but equal to or less than 54, and a Shore D hardness at the surface is equal to or greater than 41 but equal to or less than 59.

In the core disclosed in JP2008-194473, a Shore D hardness at the central point of the core is equal to or greater than 25 but equal to or less than 45, a Shore D hardness in a region that extends over a distance range from equal to or greater than 5 mm to equal to or less than 10 mm from the central point is equal to or greater than 39 but equal to or less than 58, a Shore D hardness at a point located at a distance of 15 mm from the central point is equal to or greater than 36 but equal to or less than 55, and a Shore D hardness at the surface of the core is equal to or greater than 55 but equal to or less than 75.

JP2010-253268 discloses a golf ball that includes a core, an envelope layer, an inner cover, and an outer cover. In the core, the hardness gradually increases from the central point of the core toward the surface of the core. The difference between a JIS-C hardness at the surface and a JIS-C hardness at the central point is equal to or greater than 15. The hardness of the outer cover is greater than the hardness of the inner cover, and the hardness of the inner cover is greater than the hardness of the envelope layer.

US 2008/0085784 A1 discloses a multilayered golf ball, wherein the hardness increases gradually from the center to the surface of the core. The core has a diameter between 31 and 37 mm.

US 2009/0111611 A1 relates to a golf ball with a core made of a crosslinked rubber composition, which is encased by at least three layers made of a resin material.

The golf ball disclosed in US 2011/0159998 A1 comprises a center and an envelope layer which are made from a crosslinked rubber composition and form a sphere that is enclosed by a mid layer and a cover.

US 2012/088604 A1 relates to a golf ball that has a center, an envelope layer, a mid layer and a cover. From the central point of the core to its surface the JIS-C hardness increases by 15 to 30.

Golf players' requirements for flight distance have been escalatedmore than ever. Afirstobject of the present invention is to provide a golf ball having excellent flight performance and excellent controllability.

For a second shot on a par-four hole or a par-five hole, a fairway wood is frequently used. Golf players desire a large flight distance also upon a shot with a fairway wood. A second object of the present invention is to provide a golf ball that exerts excellent flight performance also upon a shot with a fairway wood.

Furthermore, golf players desire a large flight distance upon a second shot on a par-four hole or a par-five hole. A third object of the present invention is to provide a golf ball that exerts excellent flight performance also upon a shot with a middle iron.

Golf players desire further increase in a flight distance upon a shot with a driver. Golf players are also interested in feel at impact of golf balls. A hard cover deteriorates feel at impact. Golf players prefer soft feel at impact. Golf players desire golf balls from which soft feel at impact can be obtained with appropriate intensity when the golf balls are hit. A fourth object of the present invention is to provide a golf ball that has both excellent flight performance and favorable feel at impact upon a shot with a driver.

### SUMMARY OF THE INVENTION

A golf ball according to the present invention includes a core, an inner cover positioned outside the core, and an outer cover positioned outside the inner cover. The core includes a center and an envelope layer positioned outside the center. The center is formed by a rubber composition being crosslinked. The envelope layer is formed by a rubber composition being crosslinked. The rubber composition of the envelope layer includes:
(a) a base rubber;
(b) a co-crosslinking agent;
(c) a crosslinking initiator; and
(d) an acid and/or a salt, wherein the acid and/or salt excludes the co-crosslinking agent (b) and and is selectzed from carboxylic acids, phosphoric acid, hydroacids and salts thereof. The co-crosslinking agent (b) is:
   (b1) an α,β-unsaturated carboxylic acid having 3 to 8 carbon atoms; or
   (b2) a metal salt of an α,β-unsaturated carboxylic acid having 3 to 8 carbon atoms.
A JIS-C hardness Hi of the inner cover is greater than a JIS-C hardness Hs at a surface of the core. A JIS-C hardness Ho of the outer cover is less than the hardness Hi. The JIS-C hardnesses are measured with a JIS-C hardness scale mounted to an automated rubber hardness measurement machine with the trade name "P1", manufactured by Kobunshi Keiki Co. , Ltd. In the golf ball, a hardness distribution of the core is appropriate. When the golf ball is hit, the energy loss is low in the core. With the golf ball, a large flight distance is achieved. In the golf ball, the outer cover can contribute to controllability. The golf ball has both excellent flight performance and excellent controllability.

### BRIEF DESCRIPTION OF THE DRAWINGS

FIG. 1 is a partially cutaway cross-sectional view of a golf ball according to a first embodiment of the present invention;
FIG. 2 is a line graph showing a hardness distribution of an envelope layer of the golf ball in FIG. 1;

### DESCRIPTION OF THE PREFERRED EMBODIMENTS

The following will describe in detail the present invention, based on preferred embodiments with reference to the accompanying drawings.

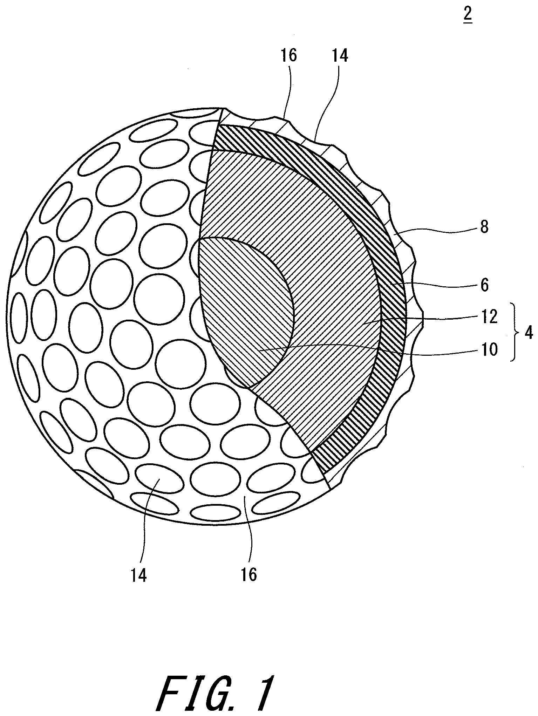

A golf ball 2 shown in FIG. 1 includes a spherical core 4, an inner cover 6 positioned outside the core 4, and an outer cover 8 positioned outside the inner cover 6. The core 4 includes a spherical center 10 and an envelope layer 12 positioned outside the center 10. On the surface of the outer cover 8, a large number of dimples 14 are formed. Of the surface of the golf ball 2, a part other than the dimples 14 is a land 16. The golf ball 2 includes a paint layer and a mark layer on the external side of the outer cover 8, but these layers are not shown in the drawing.

The golf ball 2 preferably has a diameter of 40 mm or greater but 45 mm or less. From the standpoint of conformity to the rules established by the United States Golf Association (USGA), the diameter is particularly preferably equal to or greater than 42.67 mm. In light of suppression of air resistance, the diameter is more preferably equal to or less than 44 mm and particularly preferably equal to or less than 42.80 mm. The golf ball 2 preferably has a weight of 40 g or greater but 50 g or less. In light of attainment of great inertia, the weight is more preferably equal to or greater than 44 g and particularly preferably equal to or greater than 45.00 g. From the standpoint of conformity to the rules established by the USGA, the weight is particularly preferably equal to or less than 45.93 g.

In the present invention, JIS-C hardnesses are measured at 13 measuring points from the central point of the core 4 to the surface of the core 4. The distances from the central point of the core 4 to these measuring points are as follows.
First point: 0.0 mm
Second point: 2.5 mm
Third point: 5.0 mm
Fourth point: 7.0 mm
Fifth point: 7.5 mm
Sixth point: 8.0 mm
Seventh point: 9.5 mm
Eighth point: 10.0 mm
Ninth point: 10.5 mm
Tenth pint: 12.5 mm
Eleventh point: 15.0 mm
Twelfth point: 17.5 mm
Thirteenth point: surface

Hardnesses at the first to twelfth points are measured by pressing a JIS-C type hardness scale against a cut plane of the core 4 that has been cut into two halves. A hardness at the thirteenth point is measured by pressing the JIS-C type hardness scale against the surface of the spherical core 4. For the measurement, an automated rubber hardness measurement machine (trade name "P1", manufactured by Kobunshi Keiki Co. , Ltd.), to which this hardness scale is mounted, is used.

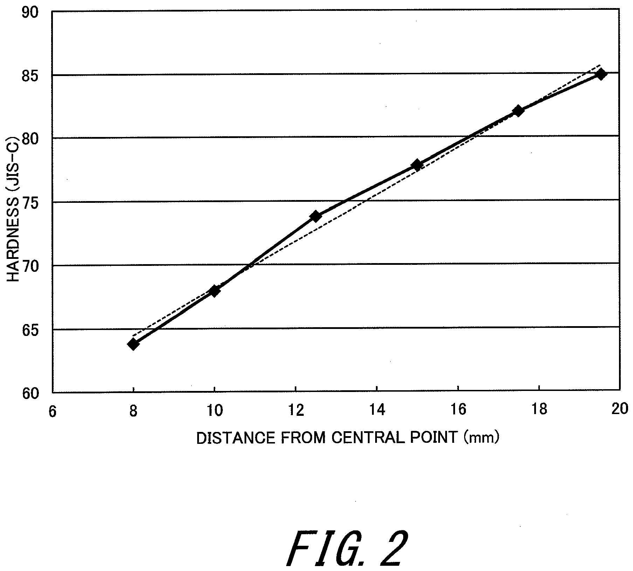

FIG. 2 is a line graph showing a hardness distribution of the envelope layer 12 of the golf ball 2 in FIG. 1. The horizontal axis of the graph indicates a distance (mm) from the central point of the core 4. The vertical axis of the graph indicates a JIS-C hardness. In the graph, the sixth point, the eighth point, and the tenth to thirteenth points are plotted.

FIG. 2 also shows a linear approximation curve obtained by a least-square method on the basis of the distances and the hardnesses of the six measuring points. The linear approximation curve is indicated by a dotted line. In FIG. 2, the broken line does not greatly deviate from the linear approximation curve. In other words, the broken line has a shape close to the linear approximation curve. In the envelope layer 12, the hardness linearly increases from its inside toward its outside. When the golf ball 2 is hit with a driver, the energy loss is low in the envelope layer 12. The golf ball 2 has excellent resilience performance. When the golf ball 2 is hit with a driver, the flight distance is large.

R² of the linear approximation curve for the envelope layer 12 which is obtained by the least-square method is preferably equal to or greater than 0.95. R² is an index indicating the linearity of the broken line. For the envelope layer 12 for which R² is equal to or greater than 0.95, the shape of the broken line of the hardness distribution is close to a straight line. The golf ball 2 that includes the envelope layer 12 for which R² is equal to or greater than 0.95 has excellent resilience performance. R² is more preferably equal to or greater than 0.96 and particularly preferably equal to or greater than 0.97. R² is calculated by squaring a correlation coefficient R. The correlation coefficient R is calculated by dividing the covariance of the distance (mm) from the central point and the hardness (JIS-C) by the standard deviation of the distance (mm) from the central point and the standard deviation of the hardness (JIS-C).

In light of suppression of spin, the gradient α of the linear approximation curve is preferably equal to or greater than 0.30, more preferably equal to or greater than 0.33, and particularly preferably equal to or greater than 0.35.

In the present invention, a JIS-C hardness at a measuring point whose distance from the central point of the core 4 is x (mm) is represented by H (x). The hardness at the central point of the core 4 is represented by H (0.0). In the present invention, the JIS-C hardness at the surface of the core 4 is represented by Hs. The difference (Hs-H(0.0)) between the surface hardness Hs and the central hardness H(0.0) is preferably equal to or greater than 15. The core 4 in which the difference (Hs-H(0.0)) is equal to or greater than 15 has an outer-hard/inner-soft structure. When the golf ball 2 is hit with a driver, the recoil (torsional return) in the core 4 is great, and thus spin is suppressed. The core 4 contributes to the flight performance of the golf ball 2. In light of flight performance, the difference (Hs-H(0.0)) is more preferably equal to or greater than 23 and particularly preferably equal to or greater than 24. From the standpoint that the core 4 can easily be formed, the difference (Hs-H(0.0)) is preferably equal to or less than 50. In the core 4, the hardness gradually increases from its central point toward its surface.

The center 10 is formed by crosslinking a rubber composition. Examples of base rubbers for use in the rubber composition include polybutadienes, polyisoprenes, styrene-butadiene copolymers, ethylene-propylene-diene copolymers, and natural rubbers. Two or more rubbers may be used in combination. In light of resilience performance, polybutadienes are preferred, and high-cis polybutadienes are particularly preferred.

Preferably, the rubber compositionof the center 10 includes a co-crosslinking agent. Examples of preferable co-crosslinking agents in light of resilience performance include zinc acrylate, magnesium acrylate, zinc methacrylate, and magnesium methacrylate. Preferably, the rubber composition includes an organic peroxide together with a co-crosslinking agent. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. Preferably, the rubber composition includes a sulfur compound.

According to need, various additives such as a filler, sulfur, a vulcanization accelerator, an anti-aging agent, a coloring agent, a plasticizer, a dispersant, and the like are included in the rubber composition of the center 10 in an adequate amount. Synthetic resin powder or crosslinked rubber powder may also be included in the rubber composition.

In the present embodiment, the center 10 is more flexible than the envelope layer 12. The center 10 can suppress spin. The center 10 has a diameter of 10 mm or greater but 20 mm or less. In the golf ball 2 that includes the center 10 having a diameter of 10 mm or greater, spin can be suppressed. In this respect, the diameter is more preferably equal to or greater than 12 mm and particularly preferably equal to or greater than 14 mm. The golf ball 2 that includes the center 10 having a diameter of 20 mm or less has excellent resilience performance even though the center 10 is flexible. In this respect, the diameter is more preferably equal to or less than 18 mm and particularly preferably equal to or less than 16 mm.

The envelope layer 12 is formed by crosslinking a rubber composition. The rubber composition includes:
(a) a base rubber;
(b) a co-crosslinking agent;
(c) a crosslinking initiator; and
(d) an acid and/or a salt, wherein the acid and/or salt excludes the co-crosslinking agent (b) and and is selectzed from carboxylic acids, phosphoric acid, hydroacids and salts thereof.

Examples of the base rubber (a) include polybutadienes, polyisoprenes, styrene-butadiene copolymers, ethylene-propylene-diene copolymers, and natural rubbers. In light of resilience performance, polybutadienes are preferred. When a polybutadiene and another rubber are used in combination, it is preferred that the polybutadiene is included as a principal component. Specifically, the proportion of the polybutadiene to the entire base rubber is preferably equal to or greater than 50% by weight and more preferably equal to or greater than 80% by weight. The proportion of cis-1,4bonds in the polybutadiene is preferably equal to or greater than 40% by weight and more preferably equal to or greater than 80% by weight.

A polybutadiene in which the proportion of 1, 2-vinyl bonds is equal to or less than 2.0% by weight is preferred. The polybutadiene can contribute to the resilience performance of the golf ball 2. In this respect, the proportion of 1, 2-vinyl bonds is preferably equal to or less than 1.7% by weight and particularly preferably equal to or less than 1.5% by weight.

From the standpoint that a polybutadiene having a low proportion of 1,2-vinyl bonds and excellent polymerization activity is obtained, a polybutadiene synthesized with a rare-earth-element-containing catalyst is preferred. In particular, a polybutadiene synthesized with a catalyst containing neodymium, which is a lanthanum-series rare earth element compound, is preferred.

The polybutadiene has a Mooney viscosity (ML₁₊₄ (100°C)) of preferably 30 or greater, more preferably 32 or greater, and particularly preferably 35 or greater. The Mooney viscosity (ML₁₊₄(100°C)) is preferably equal to or less than 140, more preferably equal to or less than 120, even more preferably equal to or less than 100, and particularly preferably equal to or less than 80. The Mooney viscosity (ML₁₊₄(100°C)) is measured according to the standards of "JIS K6300". The measurement conditions are as follows.
Rotor: L rotor
Preheating time: 1 minute
Rotating time of rotor: 4 minutes
Temperature: 100°C

In light of workability, the polybutadiene has a molecular weight distribution (Mw/Mn) of preferably 2.0 or greater, more preferably 2.2 or greater, even more preferably 2.4 or greater, and particularly preferably 2.6 or greater. In light of resilience performance, the molecular weight distribution (Mw/Mn) is preferably equal to or less than 6.0, more preferably equal to or less than 5.0, even more preferably equal to or less than 4.0, and particularly preferably equal to or less than 3.4. The molecular weight distribution (Mw/Mn) is calculated by dividing the weight average molecular weight Mw by the number average molecular weight Mn.

The molecular weight distribution is measured by gel permeation chromatography ("HLC-8120GPC" manufactured by Tosoh Corporation). The measurement conditions are as follows.
Detector: differential refractometer
Column: GMHHXL (manufactured by Tosoh Corporation)
Column temperature: 40°C
Mobile phase: tetrahydrofuran
The molecular weight distribution is calculated as a value obtained by conversion using polystyrene standard.

Examples of preferable co-crosslinking agents(b) include:
(b1) an α,β-unsaturated carboxylic acid having 3 to 8 carbon atoms; and
(b2) a metal salt of an α,β-unsaturated carboxylic acid having 3 to 8 carbon atoms.

The rubber composition may include only the α,β-unsaturated carboxylic acid (b1) or only the metal salt (b2) of the α,β-unsaturated carboxylic acid as the co-crosslinking agent (b). The rubber composition may include both the α,β-unsaturated carboxylic acid (b1) and the metal salt (b2) of the α,β-unsaturated carboxylic acid as the co-crosslinking agent (b).

The metal salt (b2) of the α,β-unsaturated carboxylic acid graft-polymerizes with the molecular chain of the base rubber, thereby crosslinking the rubber molecules. When the rubber composition includes the α,β-unsaturated carboxylic acid (b1), the rubber composition preferably further includes a metal compound (f). The metal compound (f) reacts with the α,β-unsaturated carboxylic acid (b1) in the rubber composition. A salt obtained by this reaction graft-polymerizes with the molecular chain of the base rubber.

Examples of the metal compound (f) include metal hydroxides such as magnesium hydroxide, zinc hydroxide, calcium hydroxide, sodium hydroxide, lithium hydroxide, potassium hydroxide, and copper hydroxide; metal oxides such as magnesium oxide, calcium oxide, zinc oxide, and copper oxide; and metal carbonates such as magnesium carbonate, zinc carbonate, calcium carbonate, sodium carbonate, lithium carbonate, and potassium carbonate. A compound that includes a bivalent metal is preferred. The compound that includes the bivalent metal reacts with the co-crosslinking agent (b) to form metal crosslinks. The metal compound (f) is particularly preferably a zinc compound. Two or more metal compounds may be used in combination.

Examples of the α,β-unsaturated carboxylic acids include acrylic acid, methacrylic acid, fumaric acid, maleic acid, and crotonic acid. Examples of the metal component in the metal salt (b2) of the α,β-unsaturated carboxylic acid include sodium ion, potassium ion, lithium ion, magnesium ion, calcium ion, zinc ion, barium ion, cadmium ion, aluminum ion, tin ion, and zirconium ion. The metal salt (b2) of the α,β-unsaturated carboxylic acid may include two or more types of ions. From the standpoint that metal crosslinks are likely to occur between the rubber molecules, bivalent metal ions such as magnesium ion, calcium ion, zinc ion, barium ion, and cadmium ion are preferred. The metal salt (b2) of the α,β-unsaturated carboxylic acid is particularly preferably zinc acrylate.

In light of resilience performance of the golf ball 2, the amount of the co-crosslinking agent (b) is preferably equal to or greater than 15 parts by weight and particularly preferably equal to or greater than 20 parts by weight, per 100 parts by weight of the base rubber. In light of feel at impact, the amount is preferably equal to or less than 50 parts by weight, more preferably equal to or less than 45 parts by weight, and particularly preferably equal to or less than 40 parts by weight, per 100 parts by weight of the base rubber.

The crosslinking initiator (c) is preferably an organic peroxide. The organic peroxide contributes to the resilience performance of the golf ball 2. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. In light of versatility, dicumyl peroxide is preferred.

In light of resilience performance of the golf ball 2, the amount of the crosslinking initiator (c) is preferably equal to or greater than 0.2 parts by weight and particularly preferably equal to or greater than 0.5 parts by weight, per 100 parts by weight of the base rubber. In light of feel at impact and durability of the golf ball 2, the amount is preferably equal to or less than 5.0 parts by weight and particularly preferably equal to or less than 2.5 parts by weight, per 100 parts by weight of the base rubber.

In the present invention, the co-crosslinking agent (b) is not included in the concept of the acid and/or the salt (d) . It is inferred that during heating and forming of the core 4, the acid and/or the salt (d) breaks the metal crosslinks by the co-crosslinking agent (b) near the inner surface of the envelope layer 12. The acid and/or the salt (d) is a carboxylic acid, phosphoric acid, hydroacid or a salts thereof. A carboxylic acid and/or a salt thereof (d1) is more preferred. Carboxylates are particularly preferred.

The carbon number of the carboxylic acid component of the carboxylic acid and/or the salt thereof (d1) is preferably equal to or greater than 1 but equal to or less than 30, more preferably equal to or greater than 3 but equal to or less than 30, and even more preferably equal to or greater than 5 but equal to or less than 28. Examples of the carboxylic acid include aliphatic carboxylic acids (fatty acids) and aromatic carboxylic acids. Fatty acids and salts thereof are preferred.

The rubber composition may include a saturated fatty acid and/or a salt thereof, or may include an unsaturated fatty acid and/or a salt thereof. The saturated fatty acid and the salt thereof are preferred.

Examples of fatty acids include butyric acid (C4), valeric acid (C5), caproic acid (C6), enanthic acid (C7), caprylic acid (C8), pelargonic acid (C9), capric acid (decanoic acid) (C10), lauric acid (C12), myristic acid (C14), myristoleic acid (C14), pentadecylic acid (C15), palmitic acid (C16), palmitoleic acid (C16), margaric acid (C17), stearic acid (C18), elaidic acid (C18), vaccenic acid (C18), oleic acid (C18), linolic acid (C18), linolenic acid (C18), 12-hydroxystearic acid (C18), arachidic acid (C20), gadoleic acid (C20), arachidonic acid (C20), eicosenoic acid (C20), behenic acid (C22), erucic acid (C22), lignoceric acid (C24), nervonic acid (C24), cerotic acid (C26), montanic acid (C28), and melissic acid (C30). Salts of two or more fatty acids may be used in combination.

An aromatic carboxylic acid has an aromatic ring and a carboxyl group. Examples of aromatic carboxylic acids include benzoic acid, phthalic acid, isophthalic acid, terephthalic acid, hemimellitic acid (benzene-1,2,3-tricarboxylic acid), trimellitic acid (benzene-1,2,4-tricarboxylic acid), trimesic acid (benzene-1,3,5-tricarboxylic acid), mellophanic acid (benzene-1,2,3,4-tetracarboxylic acid), prehnitic acid (benzene-1,2,3,5-tetracarboxylic acid), pyromellitic acid (benzene-1,2,4,5-tetracarboxylicacid),melliticacid(benzene hexacarboxylic acid), diphenic acid (biphenyl-2,2'-dicarboxylic acid), toluic acid (methylbenzoic acid), xylic acid, prehnitylic acid (2,3,4-trimethylbenzoic acid), γ-isodurylic acid (2,3,5-trimethylbenzoic acid), durylic acid (2,4,5-trimethylbenzoic acid), β-isodurylic acid (2,4,6-trimethylbenzoic acid), α-isodurylic acid (3,4,5-trimethylbenzoic acid), cuminic acid (4-isopropylbenzoic acid), uvitic acid (5-methylisophthalic acid), α-toluic acid (phenylacetic acid), hydratropic acid (2-phenylpropanoic acid), and hydrocinnamic acid (3-phenylpropanoic acid).

The rubber composition may include an aromatic carboxylate substituted with a hydroxyl group, an alkoxy group, or an oxo group. Examples of this carboxylic acid can include salicylic acid (2-hydroxybenzoic acid), anisic acid (methoxybenzoic acid), cresotinic acid (hydroxy(methyl) benzoic acid), o-homosalicylic acid (2-hydroxy-3-methylbenzoic acid), m-homosalicylic acid (2-hydroxy-4-methylbenzoic acid), p-homosalicylic acid (2-hydroxy-5-methylbenzoic acid), o-pyrocatechuic acid(2,3-dihydroxybenzoic acid), β-resorcylic acid (2,4-dihydroxybenzoic acid), γ-resorcylic acid (2,6-dihydroxybenzoic acid), protocatechuic acid (3,4-dihydroxybenzoic acid), α-resorcylic acid (3,5-dihydroxybenzoic acid), vanillic acid (4-hydroxy-3-methoxybenzoic acid), isovanillic acid (3-hydroxy-4-methoxybenzoic acid), veratric acid (3,4-dimethoxybenzoic acid), o-veratric acid (2,3-dimethoxybenzoic acid), orsellinic acid (2,4-dihydroxy-6-methylbenzoic acid), m-hemipinic acid (4,5-dimethoxyphthalic acid), gallic acid (3,4,5-trihydroxybenzoic acid), syringic acid (4-hydroxy-3,5-dimethoxybenzoic acid), asaronic acid (2,4,5-trimethoxybenzoic acid), mandelic acid (hydroxy(phenyl)acetic acid), vanillylmandelic acid (hydroxy(4-hydroxy-3-methoxyphenyl)acetic acid), homoanisic acid ((4-methoxyphenyl)acetic acid), homogentisic acid ((2,5-dihydroxyphenyl)acetic acid), homoprotocatechuic acid ((3,4-dihydroxyphenyl)acetic acid), homovanillic acid ((4-hydroxy-3-methoxyphenyl)acetic acid), homoisovanillic acid ((3-hydroxy-4-methoxyphenyl)acetic acid), homoveratric acid ((3,4-dimethoxyphenyl)acetic acid), o-homoveratric acid ((2,3-dimethoxyphenyl)acetic acid), homophthalic acid (2-(carboxymethyl)benzoic acid), homoisophthalic acid (3-(carboxymethyl)benzoic acid), homoterephthalic acid (4-(carboxymethyl)benzoic acid), phthalonic acid (2-(carboxycarbonyl)benzoic acid), isophthalonic acid (3-(carboxycarbonyl)benzoic acid), terephthalonic acid (4-(carboxycarbonyl)benzoic acid), benzilic acid (hydroxydiphenylacetic acid), atrolactic acid (2-hydroxy-2-phenylpropanoic acid), tropic acid (3-hydroxy-2-phenylpropanoic acid), melilotic acid (3-(2-hydroxyphenyl)propanoic acid), phloretic acid (3-(4-hydroxyphenyl)propanoic acid), hydrocaffeic acid (3-(3,4-dihydroxyphenyl)propanoic acid), hydroferulic acid (3-(4-hydroxy-3-methoxyphenyl)propanoic acid), hydroisoferulic acid (3-(3-hydroxy-4-methoxyphenyl)propanoic acid), p-coumaric acid (3-(4-hydroxyphenyl)acrylic acid), umbellic acid (3-(2,4-dihydroxyphenyl)acrylic acid), caffeic acid (3-(3,4-dihydroxyphenyl)acrylic acid), ferulic acid (3-(4-hydroxy-3-methoxyphenyl)acrylic acid), isoferulic acid (3- (3-hydroxy-4-methoxyphenyl) acrylic acid), and sinapic acid (3-(4-hydroxy-3,5-dimethoxyphenyl)acrylic acid).

The cationic component of the carboxylate is a metal ion or an organic cation. Examples of the metal ion include sodium ion, potassium ion, lithium ion, silver ion, magnesium ion, calcium ion, zinc ion, barium ion, cadmium ion, copper ion, cobalt ion, nickel ion, manganese ion, aluminum ion, iron ion, tin ion, zirconium ion, and titanium ion. Two or more types of ions may be used in combination.

The organic cation has a carbon chain. Examples of the organic cation include organic ammonium ions. Examples of organic ammonium ions include primary ammonium ions such as stearylammonium ion, hexylammonium ion, octylammonium ion, and 2-ethylhexylammonium ion; secondary ammonium ions such as dodecyl(lauryl)ammonium ion, and octadecyl(stearyl)ammonium ion; tertiary ammonium ions such as trioctylammonium ion; and quaternary ammonium ions such as dioctyldimethylammonium ion, and distearyldimethylammonium ion. Two or more types of organic cations may be used in combination.

Examples of preferable carboxylates include a potassium salt, a magnesium salt, an aluminum salt, a zinc salt, an iron salt, a copper salt, a nickel salt, or a cobalt salt of caprylic acid (octanoic acid), lauric acid, myristic acid, palmitic acid, stearic acid, oleic acid, or behenic acid. Zinc salts of carboxylic acids are particularly preferred. Specific examples of preferable carboxylates include zinc octoate, zinc laurate, zinc myristate, and zinc stearate. A particularly preferable carboxylate is zinc octoate.

In light of linearity of the hardness distribution of the envelope layer 12, the amount of the acid and/or the salt (d) is preferably equal to or greater than 0.5 parts by weight, more preferably equal to or greater than 1.0 parts by weight, and particularly preferably equal to or greater than 2.0 parts by weight, per 100 parts by weight of the base rubber. In light of resilience performance, the amount is preferably equal to or less than 40 parts by weight, more preferably equal to or less than 30 parts by weight, and particularly preferably equal to or less than 20 parts by weight, per 100 parts by weight of the base rubber.

The weight ratio of the co-crosslinking agent (b) and the acid and/or the salt (d) in the rubber composition is preferably equal to or greater than 3/7 but equal to or less than 9/1, and is particularly preferably equal to or greater than 4/6 but equal to or less than 8/2. From the rubber composition in which this weight ratio is within the above range, the core 4 whose hardness linearly increases from its central point toward its surface can be obtained.

As the co-crosslinking agent (b), zinc acrylate is preferably used. Zinc acrylate whose surface is coated with stearic acid or zinc stearate for the purpose of improving dispersibility to rubber is present. In the present invention, when the rubber composition includes this zinc acrylate, this coating material is not included in the concept of the acid and/or the salt (d).

The rubber composition preferably further includes an organic sulfur compound (e). The organic sulfur compound (e) can contribute to control of: the linearity of the hardness distribution of the envelope layer 12; and the degree of the outer-hard/inner-soft structure. An example of the organic sulfur compound (e) is an organic compound having a thiol group or a polysulfide linkage having 2 to 4 sulfur atoms. A metal salt of this organic compound is also included in the organic sulfur compound (e). Examples of the organic sulfur compound (e) include aliphatic compounds such as aliphatic thiols, aliphatic thiocarboxylic acids, aliphatic dithiocarboxylic acids, and aliphatic polysulfides; heterocyclic compounds; alicyclic compounds such as alicyclic thiols, alicyclic thiocarboxylic acids, alicyclic dithiocarboxylic acids, and alicyclic polysulfides; and aromatic compounds. Specific examples of the organic sulfur compound (e) include thiophenols, thionaphthols, polysulfides, thiocarboxylic acids, dithiocarboxylic acids, sulfenamides, thiurams, dithiocarbamates, and thiazoles. Preferable organic sulfur compounds (e) is at least one member selected from the group consisting of thiophenols, diphenyl disulfides, thionaphthols, thiuram disulfides, and metal salts thereof.

Specific examples of the organic sulfur compound (e) are represented by the following chemical formulas (1) to (4).

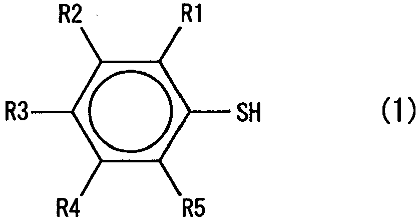

In the chemical formula (1), R1 to R5 each represent H or a substituent.

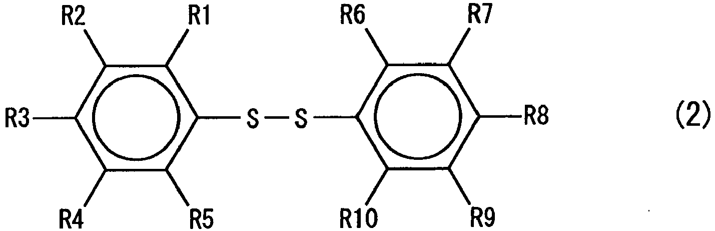

In the chemical formula (2), R1 to R10 each represent H or a substituent.

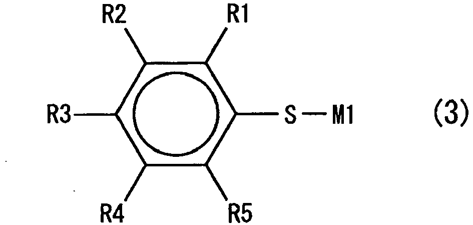

In the chemical formula (3), R1 to R5 each represent H or a substituent, and M1 represents a monovalent metal atom.

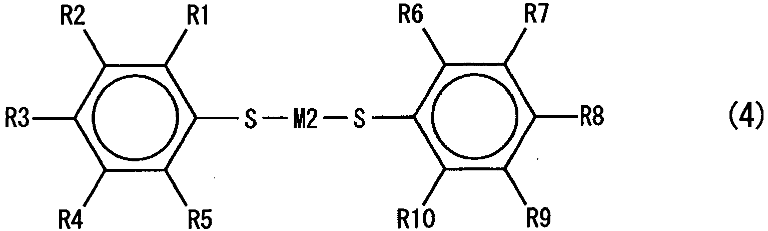

In the chemical formula (4), R1 to R10 each represent H or a substituent, and M2 represents a bivalent metal atom.

In the formulas (1) to (4), each substituent is at least one group selected from the group consisting of a halogen group (F, Cl, Br, I), an alkyl group, a carboxyl group (-COOH), an ester (-COOR)of a carboxyl group, a formyl group (-CHO), an acyl group (-COR), a carbonyl halide group (-COX), a sulfo group (-SO₃H), an ester(-SO₃R) of a sulfo group, a sulfonyl halide group (-SO₂X), a sulfino group (-SO₂H), an alkylsulfinyl group (-SOR), a carbamoyl group (-CONH₂), an alkyl halide group, a cyano group (-CN), and an alkoxy group (-OR).

Examples of the organic sulfur compound represented by the chemical formula (1) include thiophenol; thiophenols substituted with halogen groups, such as 4-fluorothiophenol, 2,5-difluorothiophenol, 2,4,5-trifluorothiophenol, 2,4,5,6-tetrafluorothiophenol, pentafluorothiophenol, 2-chlorothiophenol, 4-chlorothiophenol, 2,4-dichlorothiophenol, 2,5-dichlorothiophenol, 2,6-dichlorothiophenol, 2,4,5-trichlorothiophenol, 2,4,5,6-tetrachlorothiophenol, pentachlorothiophenol, 4-bromothiophenol, 2,5-dibromothiophenol, 2,4,5-tribromothiophenol, 2,4,5,6-tetrabromothiophenol, pentabromothiophenol, 4-iodothiophenol, 2,5-diiodothiophenol, 2,4,5-triiodothiophenol, 2,4,5,6-tetraiodothiophenol, and pentaiodothiophenol; thiophenols substituted with alkyl groups, such as 4-methylthiophenol, 2,4,5-trimethylthiophenol, pentamethylthiophenol, 4-t-butylthiophenol, 2,4,5-tri-t-butylthiophenol, and penta-t-butylthiophenol; thiophenols substituted with carboxyl groups, such as 4-carboxythiophenol, 2,4,6-tricarboxythiophenol, and pentacarboxythiophenol; thiophenols substituted with alkoxycarbonyl groups, such as 4-methoxycarbonylthiophenol, 2,4,6-trimethoxycarbonylthiophenol, and pentamethoxycarbonylthiophenol; thiophenols substituted with formyl groups, such as 4-formylthiophenol, 2,4,6-triformylthiophenol, and pentaformylthiophenol; thiophenols substituted with acyl groups, such as 4-acetylthiophenol, 2,4,6-triacetylthiophenol, and pentaacetylthiophenol; thiophenols substituted with carbonyl halide groups, such as 4-chlorocarbonylthiophenol, 2,4,6-tri(chlorocarbonyl)thiophenol, and penta(chlorocarbonyl)thiophenol; thiophenols substituted with sulfo groups, such as 4-sulfothiophenol, 2,4,6-trisulfothiophenol, and pentasulfothiophenol; thiophenols substituted with alkoxysulfonyl groups, such as 4-methoxysulfonylthiophenol, 2,4,6-trimethoxysulfonylthiophenol, and pentamethoxysulfonylthiophenol; thiophenols substituted with sulfonyl halide groups, such as 4-chlorosulfonylthiophenol, 2,4,6-tri(chlorosulfonyl)thiophenol, and penta(chlorosulfonyl)thiophenol; thiophenols substituted with sulfino groups, such as 4-sulfinothiophenol, 2,4,6-trisulfinothiophenol, and pentasulfinothiophenol; thiophenols substituted with alkylsulfinyl groups, such as 4-methylsulfinylthiophenol, 2,4,6-tri(methylsulfinyl)thiophenol, and penta(methylsulfinyl)thiophenol; thiophenols substituted with carbamoyl groups, such as 4-carbamoylthiophenol, 2,4,6-tricarbamoylthiophenol, and pentacarbamoylthiophenol; thiophenols substituted with alkyl halide groups, such as 4-trichloromethylthiophenol, 2,4,6-tri(trichloromethyl)thiophenol, and penta(trichloromethyl)thiophenol; thiophenols substituted with cyano groups, such as 4-cyanothiophenol, 2,4,6-tricyanothiophenol, and pentacyanothiophenol; and thiophenols substituted with alkoxy groups, such as 4-methoxythiophenol, 2,4,6-trimethoxythiophenol, and pentamethoxythiophenol. Each of these thiophenols is substituted with one type of substituent.

Another example of the organic sulfur compound represented by the chemical formula. (1) is a compound substituted with at least one type of the above substituents and another substituent. Examples of the other substituent include a nitro group (-NO₂), an amino group (-NH₂), a hydroxyl group (-OH), and a phenylthio group (-SPh). Specific examples of the compound include 4-chloro-2-nitrothiophenol, 4-chloro-2-aminothiophenol, 4-chloro-2-hydroxythiophenol, 4-chloro-2-phenylthiothiophenol, 4-methyl-2-nitrothiophenol, 4-methyl-2-aminothiophenol, 4-methyl-2-hydroxythiophenol, 4-methyl-2-phenylthiothiophenol, 4-carboxy-2-nitrothiophenol, 4-carboxy-2-aminothiophenol, 4-carboxy-2-hydroxythiophenol, 4-carboxy-2-phenylthiothiophenol, 4-methoxycarbonyl-2-nitrothiophenol, 4-methoxycarbonyl-2-aminothiophenol, 4-methoxycarbonyl-2-hydroxythiophenol, 4-methoxycarbonyl-2-phenylthiothiophenol, 4-formyl-2-nitrothiophenol, 4-formyl-2-aminothiophenol, 4-formyl-2-hydroxythiophenol, 4-formyl-2-phenylthiothiophenol, 4-acetyl-2-nitrothiophenol, 4-acetyl-2-aminothiophenol, 4-acetyl-2-hydroxythiophenol, 4-acetyl-2-phenylthiothiophenol, 4-chlorocarbonyl-2-nitrothiophenol, 4-chlorocarbonyl-2-aminothiophenol, 4-chlorocarbonyl-2-hydroxythiophenol, 4-chlorocarbonyl-2-phenylthiothiophenol, 4-sulfo-2-nitrothiophenol, 4-sulfo-2-aminothiophenol, 4-sulfo-2-hydroxythiophenol, 4-sulfo-2-phenylthiothiophenol, 4-methoxysulfonyl-2-nitrothiophenol, 4-methoxysulfonyl-2-aminothiophenol, 4-methoxysulfonyl-2-hydroxythiophenol, 4-methoxysulfonyl-2-phenylthiothiophenol, 4-chlorosulfonyl-2-nitrothiophenol, 4-chlorosulfonyl-2-aminothiophenol, 4-chlorosulfonyl-2-hydroxythiophenol, 4-chlorosulfonyl-2-phenylthiothiophenol, 4-sulfino-2-nitrothiophenol, 4-sulfino-2-aminothiophenol, 4-sulfino-2-hydroxythiophenol, 4-sulfino-2-phenylthiothiophenol, 4-methylsulfinyl-2-nitrothiophenol, 4-methylsulfinyl-2-aminothiophenol, 4-methylsulfinyl-2-hydroxythiophenol, 4-methylsulfinyl-2-phenylthiothiophenol, 4-carbamoyl-2-nitrothiophenol, 4-carbamoyl-2-aminothiophenol, 4-carbamoyl-2-hydroxythiophenol, 4-carbamoyl-2-phenylthiothiophenol, 4-trichloromethyl-2-nitrothiophenol, 4-trichloromethyl-2-aminothiophenol, 4-trichloromethyl-2-hydroxythiophenol, 4-trichloromethyl-2-phenylthiothiophenol, 4-cyano-2-nitrothiophenol, 4-cyano-2-aminothiophenol, 4-cyano-2-hydroxythiophenol, 4-cyano-2-phenylthiothiophenol, 4-methoxy-2-nitrothiophenol, 4-methoxy-2-aminothiophenol, 4-methoxy-2-hydroxythiophenol, and 4-methoxy-2-phenylthiothiophenol.

Still another example of the organic sulfur compound represented by the chemical formula (1) is a compound substituted with two or more types of substituents. Specific examples of the compound include 4-acetyl-2-chlorothiophenol, 4-acetyl-2-methylthiophenol, 4-acetyl-2-carboxythiophenol, 4-acetyl-2-methoxycarbonylthiophenol, 4-acetyl-2-formylthiophenol, 4-acetyl-2-chlorocarbonylthiophenol, 4-acetyl-2-sulfothiophenol, 4-acetyl-2-methoxysulfonylthiophenol, 4-acetyl-2-chlorosulfonylthiophenol, 4-acetyl-2-sulfinothiophenol, 4-acetyl-2-methylsulfinylthiophenol, 4-acetyl-2-carbamoylthiophenol, 4-acetyl-2-trichloromethylthiophenol, 4-acetyl-2-cyanothiophenol, and 4-acetyl-2-methoxythiophenol.

Examples of the organic sulfur compound represented by the chemical formula (2) include diphenyl disulfide; diphenyl disulfides substituted with halogen groups, such as bis(4-fluorophenyl)disulfide, bis(2,5-difluorophenyl)disulfide, bis(2,4,5-trifluorophenyl)disulfide, bis(2,4,5,6-tetrafluorophenyl)disulfide, bis(pentafluorophenyl)disulfide, bis(4-chlorophenyl)disulfide, bis(2,5-dichlorophenyl)disulfide, bis(2,4,5-trichlorophenyl)disulfide, bis(2,4,5,6-tetrachlorophenyl)disulfide, bis(pentachlorophenyl)disulfide, bis(4-bromophenyl)disulfide, bis(2,5-dibromophenyl)disulfide, bis(2,4,5-tribromophenyl)disulfide, bis(2,4,5,6-tetrabromophenyl)disulfide, bis(pentabromophenyl)disulfide, bis(4-iodophenyl)disulfide, bis(2,5-diiodophenyl)disulfide, bis(2,4,5-triiodophenyl)disulfide, bis(2,4,5,6-tetraiodophenyl)disulfide, and bis(pentaiodophenyl)disulfide; diphenyl disulfides substituted with alkyl groups, such as bis(4-methylphenyl)disulfide, bis(2,4,5-trimethylphenyl)disulfide, bis(pentamethylphenyl)disulfide, bis(4-t-butylphenyl)disulfide, bis(2,4,5-tri-t-butylphenyl)disulfide, and bis(penta-t-butylphenyl)disulfide; diphenyl disulfides substituted with carboxyl groups, such as bis(4-carboxyphenyl)disulfide, bis(2,4,6-tricarboxyphenyl)disulfide, and bis(pentacarboxyphenyl)disulfide; diphenyl disulfides substituted with alkoxycarbonyl groups, such as bis(4-methoxycarbonylphenyl)disulfide, bis(2,4,6-trimethoxycarbonylphenyl)disulfide, and bis(pentamethoxycarbonylphenyl)disulfide; diphenyl disulfides substituted with formyl groups, such as bis(4-formylphenyl)disulfide, bis(2,4,6-triformylphenyl)disulfide, and bis(pentaformylphenyl)disulfide; diphenyl disulfides substituted with acyl groups, such as bis(4-acetylphenyl)disulfide, bis(2,4,6-triacetylphenyl)disulfide, and bis(pentaacetylphenyl)disulfide; diphenyl disulfides substituted with carbonyl halide groups, such as bis(4-chlorocarbonylphenyl)disulfide, bis(2,4,6-tri(chlorocarbonyl)phenyl)disulfide, and bis(penta(chlorocarbonyl)phenyl)disulfide; diphenyl disulfides substituted with sulfo groups, such as bis(4-sulfophenyl)disulfide, bis(2,4,6-trisulfophenyl)disulfide, and bis(pentasulfophenyl)disulfide; diphenyl disulfides substituted with alkoxysulfonyl groups, such as bis(4-methoxysulfonylphenyl)disulfide, bis(2,4,6-trimethoxysulfonylphenyl)disulfide, and bis(pentamethoxysulfonylphenyl)disulfide; diphenyl disulfides substituted with sulfonyl halide groups, such as bis(4-chlorosulfonylphenyl)disulfide, bis(2,4,6-tri(chlorosulfonyl)phenyl)disulfide, and bis(penta(chlorosulfonyl)phenyl)disulfide; diphenyl disulfides substituted with sulfino groups, such as bis(4-sulfinophenyl)disulfide, bis(2,4,6-trisulfinophenyl)disulfide, and bis(pentasulfinophenyl)disulfide; diphenyl disulfides substituted with alkylsulfinyl groups, such as bis(4-methylsulfinylphenyl)disulfide, bis(2,4,6-tri(methylsulfinyl)phenyl)disulfide, and bis(penta(methylsulfinyl)phenyl)disulfide; diphenyl disulfides substituted with carbamoyl groups, such as bis(4-carbamoylphenyl)disulfide, bis(2,4,6-tricarbamoylphenyl)disulfide, and bis(pentacarbamoylphenyl)disulfide; diphenyl disulfides substituted with alkyl halide groups, such as bis(4-trichloromethylphenyl)disulfide, bis(2,4,6-tri(trichloromethyl)phenyl)disulfide, and bis(penta(trichloromethyl)phenyl)disulfide; diphenyl disulfides substituted with cyano groups, such as bis(4-cyanophenyl)disulfide, bis(2,4,6-tricyanophenyl)disulfide, and bis(pentacyanophenyl)disulfide; and diphenyl disulfides substituted with alkoxy groups, such as bis(4-methoxyphenyl)disulfide, bis(2,4,6-trimethoxyphenyl)disulfide, and bis(pentamethoxyphenyl)disulfide. Each of these diphenyl disulfides is substituted with one type of substituent.

Another example of the organic sulfur compound represented by the chemical formula (2) is a compound substituted with at least one type of the above substituents and another substituent. Examples of the other substituent include a nitro group (-NO₂), an amino group (-NH₂), a hydroxyl group (-OH), and a phenylthio group (-SPh). Specific examples of the compound include bis(4-chloro-2-nitrophenyl)disulfide, bis(4-chloro-2-aminophenyl)disulfide, bis(4-chloro-2-hydroxyphenyl)disulfide, bis(4-chloro-2-phenylthiophenyl)disulfide, bis(4-methyl-2-nitrophenyl)disulfide, bis(4-methyl-2-aminophenyl)disulfide, bis(4-methyl-2-hydroxyphenyl)disulfide, bis(4-methyl-2-phenylthiophenyl)disulfide, bis(4-carboxy-2-nitrophenyl)disulfide, bis(4-carboxy-2-aminophenyl)disulfide, bis(4-carboxy-2-hydroxyphenyl)disulfide, bis(4-carboxy-2-phenylthiophenyl)disulfide, bis(4-methoxycarbonyl-2-nitrophenyl)disulfide, bis(4-methoxycarbonyl-2-aminophenyl)disulfide, bis(4-methoxycarbonyl-2-hydroxyphenyl)disulfide, bis(4-methoxycarbonyl-2-phenylthiophenyl)disulfide, bis(4-formyl-2-nitrophenyl)disulfide, bis(4-formyl-2-aminophenyl)disulfide, bis(4-formyl-2-hydroxyphenyl)disulfide, bis(4-formyl-2-phenylthiophenyl)disulfide, bis(4-acetyl-2-nitrophenyl)disulfide, bis(4-acetyl-2-aminophenyl)disulfide, bis(4-acetyl-2-hydroxyphenyl)disulfide, bis(4-acetyl-2-phenylthiophenyl)disulfide, bis(4-chlorocarbonyl-2-nitrophenyl)disulfide, bis(4-chlorocarbonyl-2-aminophenyl)disulfide; bis(4-chlorocarbonyl-2-hydroxyphenyl)disulfide, bis(4-chlorocarbonyl-2-phenylthiophenyl)disulfide, bis(4-sulfo-2-nitrophenyl)disulfide, bis(4-sulfo-2-aminophenyl)disulfide, bis(4-sulfo-2-hydroxyphenyl)disulfide, bis(4-sulfo-2-phenylthiophenyl)disulfide, bis(4-methoxysulfonyl-2-nitrophenyl)disulfide, bis(4-methoxysulfonyl-2-aminophenyl)disulfide, bis(4-methoxysulfonyl-2-hydroxyphenyl)disulfide, bis(4-methoxysulfonyl-2-phenylthiophenyl)disulfide, bis(4-chlorosulfonyl-2-nitrophenyl)disulfide, bis(4-chlorosulfonyl-2-aminophenyl)disulfide, bis(4-chlorosulfonyl-2-hydroxyphenyl)disulfide, bis(4-chlorosulfonyl-2-phenylthiophenyl)disulfide, bis(4-sulfino-2-nitrophenyl)disulfide, bis(4-sulfino-2-aminophenyl)disulfide, bis(4-sulfino-2-hydroxyphenyl)disulfide, bis(4-sulfino-2-phenylthiophenyl)disulfide, bis(4-methylsulfinyl-2-nitrophenyl)disulfide, bis(4-methylsulfinyl-2-aminophenyl)disulfide, bis(4-methylsulfinyl-2-hydroxyphenyl)disulfide, bis(4-methylsulfinyl-2-phenylthiophenyl)disulfide, bis(4-carbamoyl-2-nitrophenyl)disulfide, bis(4-carbamoyl-2-aminophenyl)disulfide, bis(4-carbamoyl-2-hydroxyphenyl)disulfide, bis(4-carbamoyl-2-phenylthiophenyl)disulfide, bis(4-trichloromethyl-2-nitrophenyl)disulfide, bis(4-trichloromethyl-2-aminophenyl)disulfide, bis(4-trichloromethyl-2-hydroxyphenyl)disulfide, bis(4-trichloromethyl-2-phenylthiophenyl)disulfide, bis(4-cyano-2-nitrophenyl)disulfide, bis(4-cyano-2-aminophenyl)disulfide, bis(4-cyano-2-hydroxyphenyl)disulfide, bis(4-cyano-2-phenylthiophenyl)disulfide, bis(4-methoxy-2-nitrophenyl)disulfide, bis(4-methoxy-2-aminophenyl)disulfide, bis(4-methoxy-2-hydroxyphenyl)disulfide, and bis(4-methoxy-2-phenylthiophenyl)disulfide.

Still another example of the organic sulfur compound represented by the chemical formula (2) is a compound substituted with two or more types of substituents. Specific examples of the compound include bis(4-acetyl-2-chlorophenyl)disulfide, bis(4-acetyl-2-methylphenyl)disulfide, bis(4-acetyl-2-carboxyphenyl)disulfide, bis(4-acetyl-2-methoxycarbonylphenyl)disulfide, bis(4-acetyl-2-formylphenyl)disulfide, bis(4-acetyl-2-chlorocarbonylphenyl)disulfide, bis(4-acetyl-2-sulfophenyl)disulfide, bis(4-acetyl-2-methoxysulfonylphenyl)disulfide, bis(4-acetyl-2-chlorosulfonylphenyl)disulfide, bis(4-acetyl-2-sulfinophenyl)disulfide, bis(4-acetyl-2-methylsulfinylphenyl)disulfide, bis(4-acetyl-2-carbamoylphenyl)disulfide, bis(4-acetyl-2-trichloromethylphenyl)disulfide, bis(4-acetyl-2-cyanophenyl)disulfide, and bis(4-acetyl-2-methoxyphenyl)disulfide.

Examples of the organic sulfur compound represented by the chemical formula (3) include thiophenol sodium salt; thiophenol sodium salts substituted with halogen groups, such as 4-fluorothiophenol sodium salt, 2,5-difluorothiophenol sodium salt, 2,4,5-trifluorothiophenol sodium salt, 2,4,5,6-tetrafluorothiophenol sodium salt, pentafluorothiophenol sodium salt, 4-chlorothiophenol sodium salt, 2,5-dichlorothiophenol sodium salt, 2,4,5-trichlorothiophenol sodium salt, 2,4,5,6-tetrachlorothiophenol sodium salt, pentachlorothiophenol sodium salt, 4-bromothiophenol sodium salt, 2,5-dibromothiophenol sodium salt, 2,4,5-tribromothiophenol sodium salt, 2,4,5,6-tetrabromothiophenol sodium salt, pentabromothiophenol sodium salt, 4-iodothiophenol sodium salt, 2,5-diiodothiophenol sodium salt, 2,4,5-triiodothiophenol sodium salt, 2,4,5,6-tetraiodothiophenol sodium salt, and pentaiodothiophenol sodium salt; thiophenol sodium salts substituted with alkyl groups, such as 4-methylthiophenol sodium salt, 2,4,5-trimethylthiophenol sodium salt, pentamethylthiophenol sodium salt, 4-t-butylthiophenol sodium salt, 2,4,5-tri-t-butylthiophenol sodium salt, and penta(t-butyl)thiophenol sodium salt; thiophenol sodium salts substituted with carboxyl groups, such as 4-carboxythiophenol sodium salt, 2,4,6-tricarboxythiophenol sodium salt, and pentacarboxythiophenol sodium salt; thiophenol sodium salts substituted with alkoxycarbonyl groups, such as 4-methoxycarbonylthiophenol sodium salt, 2,4,6-trimethoxycarbonylthiophenol sodium salt, and pentamethoxycarbonylthiophenol sodium salt; thiophenol sodium salts substituted with formyl groups, such as 4-formylthiophenol sodium salt, 2,4,6-triformylthiophenol sodium salt, and pentaformylthiophenol sodium salt; thiophenol sodium salts substituted with acyl groups, such as 4-acetylthiophenol sodium salt, 2,4,6-triacetylthiophenol sodium salt, and pentaacetylthiophenol sodium salt; thiophenol sodium salts substituted with carbonyl halide groups, such as 4-chlorocarbonylthiophenol sodium salt, 2,4,6-tri(chlorocarbonyl)thiophenol sodium salt, and penta(chlorocarbonyl)thiophenol sodium salt; thiophenol sodium salts substituted with sulfo groups, such as 4-sulfothiophenol sodium salt, 2,4,6-trisulfothiophenol sodium salt, and pentasulfothiophenol sodium salt; thiophenol sodium salts substituted with alkoxysulfonyl groups, such as 4-methoxysulfonylthiophenol sodium salt, 2,4,6-trimethoxysulfonylthiophenol sodium salt, and pentamethoxysulfonylthiophenol sodium salt; thiophenol sodium salts substituted with sulfonyl halide groups, such as 4-chlorosulfonylthiophenol sodium salt, 2,4,6-tri(chlorosulfonyl)thiophenol sodium salt, and penta(chlorosulfonyl)thiophenol sodium salt; thiophenol sodium salts substituted with sulfino groups, such as 4-sulfinothiophenol sodium salt, 2,4,6-trisulfinothiophenol sodium salt, and pentasulfinothiophenol sodium salt; thiophenol sodium salts substituted with alkylsulfinyl groups, such as 4-methylsulfinylthiophenol sodium salt, 2,4,6-tri(methylsulfinyl)thiophenol sodium salt, and penta(methylsulfinyl)thiophenol sodium salt; thiophenol sodium salts substituted with carbamoyl groups, such as 4-carbamoylthiophenol sodium salt, 2,4,6-tricarbamoylthiophenol sodium salt, and pentacarbamoylthiophenol sodium salt; thiophenol sodium salts substituted with alkyl halide groups, such as 4-trichloromethylthiophenol sodium salt, 2,4,6-tri(trichloromethyl)thiophenol sodium salt, and penta(trichloromethyl)thiophenol sodium salt; thiophenol sodium salts substituted with cyano groups, such as 4-cyanothiophenol sodium salt ,2,4,6-tricyanothiophenol sodium salt, and pentacyanothiophenol sodium salt; and thiophenol sodium salts substituted with alkoxy groups, such as 4-methoxythiophenol sodium salt, 2,4,6-trimethoxythiophenol sodium salt, and pentamethoxythiophenol sodium salt. Each of these thiophenol sodium salts is substituted with one type of substituent.

Another example of the organic sulfur compound represented by the chemical formula (3) is a compound substituted with at least one type of the above substituents and another substituent. Examples of the other substituent include a nitro group (-NO₂), an amino group (-NH₂), a hydroxyl group (-OH), and a phenylthio group (-SPh). Specific examples of the compound include 4-chloro-2-nitrothiophenol sodium salt, 4-chloro-2-aminothiophenol sodium salt, 4-chloro-2-hydroxythiophenol sodium salt, 4-chloro-2-phenylthiothiophenol sodium salt, 4-methyl-2-nitrothiophenol sodium salt, 4-methyl-2-aminothiophenol sodium salt, 4-methyl-2-hydroxythiophenol sodium salt, 4-methyl-2-phenylthiothiophenol sodium salt, 4-carboxy-2-nitrothiophenol sodium salt, 4-carboxy-2-aminothiophenol sodium salt, 4-carboxy-2-hydroxythiophenol sodium salt, 4-carboxy-2-phenylthiothiophenol sodium salt, 4-methoxycarbonyl-2-nitrothiophenol sodium salt, 4-methoxycarbonyl-2-aminothiophenol sodium salt, 4-methoxycarbonyl-2-hydroxythiophenol sodium salt, 4-methoxycarbonyl-2-phenylthiothiophenol sodium salt, 4-formyl-2-nitrothiophenol sodium salt, 4-formyl-2-aminothiophenol sodium salt, 4-formyl-2-hydroxythiophenol sodium salt, 4-formyl-2-phenylthiothiophenol sodium salt, 4-acetyl-2-nitrothiophenol sodium salt, 4-acetyl-2-aminothiophenol sodium salt, 4-acetyl-2-hydroxythiophenol sodium salt, 4-acetyl-2-phenylthiothiophenol sodium salt, 4-chlorocarbonyl-2-nitrothiophenol sodium salt, 4-chlorocarbonyl-2-aminothiophenol sodium salt, 4-chlorocarbonyl-2-hydroxythiophenol sodium salt, 4-chlorocarbonyl-2-phenylthiothiophenol sodium salt, 4-sulfo-2-nitrothiophenol sodium salt, 4-sulfo-2-aminothiophenol sodium salt, 4-sulfo-2-hydroxythiophenol sodium salt, 4-sulfo-2-phenylthiothiophenol sodium salt, 4-methoxysulfonyl-2-nitrothiophenol sodium salt, 4-methoxysulfonyl-2-aminothiophenol sodium salt, 4-methoxysulfonyl-2-hydroxythiophenol sodium salt, 4-methoxysulfonyl-2-phenylthiothiophenol sodium salt, 4-chlorosulfonyl-2-nitrothiophenol sodium salt, 4-chlorosulfonyl-2-aminothiophenol sodium salt, 4-chlorosulfonyl-2-hydroxythiophenol sodium salt, 4-chlorosulfonyl-2-phenylthiothiophenol sodium salt, 4-sulfino-2-nitrothiophenol sodium salt, 4-sulfino-2-aminothiophenol sodium salt, 4-sulfino-2-hydroxythiophenol sodium salt, 4-sulfino-2-phenylthiothiophenol sodium salt, 4-methylsulfinyl-2-nitrothiophenol sodium salt, 4-methylsulfinyl-2-aminothiophenol sodium salt, 4-methylsulfinyl-2-hydroxythiophenol sodium salt, 4-methylsulfinyl-2-phenylthiothiophenol sodium salt, 4-carbamoyl-2-nitrothiophenol sodium salt, 4-carbamoyl-2-aminothiophenol sodium salt, 4-carbamoyl-2-hydroxythiophenol sodium salt, 4-carbamoyl-2-phenylthiothiophenol sodium salt, 4-trichloromethyl-2-nitrothiophenol sodium salt, 4-trichloromethyl-2-aminothiophenol sodium salt, 4-trichloromethyl-2-hydroxythiophenol sodium salt, 4-trichloromethyl-2-phenylthiothiophenol sodium salt, 4-cyano-2-nitrothiophenol sodium salt, 4-cyano-2-aminothiophenol sodium salt, 4-cyano-2-hydroxythiophenol sodium salt, 4-cyano-2-phenylthiothiophenol sodium salt, 4-methoxy-2-nitrothiophenol sodium salt, 4-methoxy-2-aminothiophenol sodium salt, 4-methoxy-2-hydroxythiophenol sodium salt, and 4-methoxy-2-phenylthiothiophenol sodium salt.

Still another example of the organic sulfur compound represented by the chemical formula (3) is a compound substituted with two or more types of substituents. Specific examples of the compound include 4-acetyl-2-chlorothiophenol sodium salt, 4-acetyl-2-methylthiophenol sodium salt, 4-acetyl-2-carboxythiophenol sodium salt, 4-acetyl-2-methoxycarbonylthiophenol sodium salt, 4-acetyl-2-formylthiophenol sodium salt, 4-acetyl-2-chlorocarbonylthiophenol sodium salt, 4-acetyl-2-sulfothiophenol sodium salt, 4-acetyl-2-methoxysulfonylthiophenol sodium salt, 4-acetyl-2-chlorosulfonylthiophenol sodium salt, 4-acetyl-2-sulfinothiophenol sodium salt, 4-acetyl-2-methylsulfinylthiophenol sodium salt, 4-acetyl-2-carbamoylthiophenol sodium salt, 4-acetyl-2-trichloromethylthiophenol sodium salt, 4-acetyl-2-cyanothiophenol sodium salt, and 4-acetyl-2-methoxythiophenol sodium salt. Examples of the monovalent metal represented by M1 in the chemical formula (3) include sodium, lithium, potassium, copper (I), and silver (I) .

Examples of the organic sulfur compound represented by the chemical formula (4) include thiophenol zinc salt; thiophenol zinc salts substituted with halogen groups, such as 4-fluorothiophenol zinc salt, 2,5-difluorothiophenol zinc salt, 2,4,5-trifluorothiophenol zinc salt, 2,4,5,6-tetrafluorothiophenol zinc salt, pentafluorothiophenol zinc salt, 4-chlorothiophenol zinc salt, 2,5-dichlorothiophenol zinc salt, 2,4,5-trichlorothiophenol zinc salt, 2,4,5,6-tetrachlorothiophenol zinc salt, pentachlorothiophenol zinc salt, 4-bromothiophenol zinc salt, 2,5-dibromothiophenol zinc salt, 2,4,5-tribromothiophenol zinc salt, 2,4,5,6-tetrabromothiophenol zinc salt, pentabromothiophenol zinc salt, 4-iodothiophenol zinc salt, 2,5-diiodothiophenol zinc salt, 2,4,5-triiodothiophenol zinc salt, 2,4,5,6-tetraiodothiophenol zinc salt, and pentaiodothiophenol zinc salt; thiophenol zinc salts substituted with alkyl groups, such as 4-methylthiophenol zinc salt, 2,4,5-trimethylthiophenol zinc salt, pentamethylthiophenol zinc salt, 4-t-butylthiophenol zinc salt, 2,4,5-tri-t-butylthiophenol zinc salt, and penta-t-butylthiophenol zinc salt; thiophenol zinc salts substituted with carboxyl groups, such as 4-carboxythiophenol zinc salt, 2,4,6-tricarboxythiophenol zinc salt, and pentacarboxythiophenol zinc salt; thiophenol zinc salts substituted with alkoxycarbonyl groups, such as 4-methoxycarbonylthiophenol zinc salt, 2,4,6-trimethoxycarbonylthiophenol zinc salt, and pentamethoxycarbonylthiophenol zinc salt; thiophenol zinc salts substituted with formyl groups, such as 4-formylthiophenol zinc salt, 2,4,6-triformylthiophenol zinc salt, and pentaformylthiophenol zinc salt; thiophenol zinc salts substituted with acyl groups, such as 4-acetylthiophenol zinc salt, 2,4,6-triacetylthiophenol zinc salt, and pentaacetylthiophenol zinc salt; thiophenol zinc salts substituted with carbonyl halide groups, such as 4-chlorocarbonylthiophenol zinc salt, 2,4,6-tri(chlorocarbonyl)thiophenol zinc salt, and penta(chlorocarbonyl)thiophenol zinc salt; thiophenol zinc salts substituted with sulfo groups, such as 4-sulfothiophenol zinc salt, 2,4,6-trisulfothiophenol zinc salt, and pentasulfothiophenol zinc salt; thiophenol zinc salts substituted with alkoxysulfonyl groups, such as 4-methoxysulfonylthiophenol zinc salt, 2,4,6-trimethoxysulfonylthiophenol zinc salt, and pentamethoxysulfonylthiophenol zinc salt; thiophenol zinc salts substituted with sulfonyl halide groups, such as 4-chlorosulfonylthiophenol zinc salt, 2,4,6-tri(chlorosulfonyl)thiophenol zinc salt, and penta(chlorosulfonyl)thiophenol zinc salt; thiophenol zinc salts substituted with sulfino groups, such as 4-sulfinothiophenol zinc salt, 2,4,6-trisulfinothiophenol zinc salt, and pentasulfinothiophenol zinc salt; thiophenol zinc salts substituted with alkylsulfinyl groups, such as 4-methylsulfinylthiophenol zinc salt, 2,4,6-tri(methylsulfinyl)thiophenol zinc salt, and penta(methylsulfinyl)thiophenol zinc salt; thiophenol zinc salts substituted with carbamoyl groups, such as 4-carbamoylthiophenol zinc salt,2,4,6-tricarbamoylthiophenol zinc salt, and pentacarbamoylthiophenol zinc salt; thiophenol zinc salts substituted with alkyl halide groups, such as 4-trichloromethylthiophenol zinc salt, 2,4,6-tri(trichloromethyl)thiophenol zinc salt, and penta(trichloromethyl)thiophenol zinc salt; thiophenol zinc salts substituted with cyano groups, such as 4-cyanothiophenol zinc salt, 2,4,6-tricyanothiophenol zinc salt, and pentacyanothiophenol zinc salt; and thiophenol zinc salts substituted with alkoxy groups, such as 4-methoxythiophenol zinc salt, 2,4,6-trimethoxythiophenol zinc salt, and pentamethoxythiophenol zinc salt. Each of these thiophenol zinc salts is substituted with one type of substituent.

Another example of the organic sulfur compound represented by the chemical formula (4) is a compound substituted with at least one type of the above substituents and another substituent. Examples of the other substituent include a nitro group (-NO₂), an amino group (-NH₂), a hydroxyl group (-OH), and a phenylthio group (-SPh). Specific examples of the compound include 4-chloro-2-nitrothiophenol zinc salt, 4-chloro-2-aminothiophenol zinc salt, 4-chloro-2-hydroxythiophenol zinc salt, 4-chloro-2-phenylthiothiophenol zinc salt, 4-methyl-2-nitrothiophenol zinc salt, 4-methyl-2-aminothiophenol zinc salt, 4-methyl-2-hydroxythiophenol zinc salt, 4-methyl-2-phenylthiothiophenol zinc salt, 4-carboxy-2-nitrothiophenol zinc salt, 4-carboxy-2-aminothiophenol zinc salt, 4-carboxy-2-hydroxythiophenol zinc salt, 4-carboxy-2-phenylthiothiophenol zinc salt, 4-methoxycarbonyl-2-nitrothiophenol zinc salt, 4-methoxycarbonyl-2-aminothiophenol zinc salt, 4-methoxycarbonyl-2-hydroxythiophenol zinc salt, 4-methoxycarbonyl-2-phenylthiothiophenol zinc salt, 4-formyl-2-nitrothiophenol zinc salt, 4-formyl-2-aminothiophenol zinc salt, 4-formyl-2-hydroxythiophenol zinc salt, 4-formyl-2-phenylthiothiophenol zinc salt, 4-acetyl-2-nitrothiophenol zinc salt, 4-acetyl-2-aminothiophenol zinc salt, 4-acetyl-2-hydroxythiophenol zinc salt, 4-acetyl-2-phenylthiothiophenol zinc salt, 4-chlorocarbonyl-2-nitrothiophenol zinc salt, 4-chlorocarbonyl-2-aminothiophenol zinc salt, 4-chlorocarbonyl-2-hydroxythiophenol zinc salt, 4-chlorocarbonyl-2-phenylthiothiophenol zinc salt, 4-sulfo-2-nitrothiophenol zinc salt, 4-sulfo-2-aminothiophenol zinc salt, 4-sulfo-2-hydroxythiophenol zinc salt, 4-sulfo-2-phenylthiothiophenol zinc salt, 4-methoxysulfonyl-2-nitrothiophenol zinc salt, 4-methoxysulfonyl-2-aminothiophenol zinc salt, 4-methoxysulfonyl-2-hydroxythiophenol zinc salt, 4-methoxysulfonyl-2-phenylthiothiophenol zinc salt, 4-chlorosulfonyl-2-nitrothiophenol zinc salt, 4-chlorosulfonyl-2-aminothiophenol zinc salt, 4-chlorosulfonyl-2-hydroxythiophenol zinc salt, 4-chlorosulfonyl-2-phenylthiothiophenol zinc salt, 4-sulfino-2-nitrothiophenol zinc salt, 4-sulfino-2-aminothiophenol zinc salt, 4-sulfino-2-hydroxythiophenol zinc salt, 4-sulfino-2-phenylthiothiophenol zinc salt, 4-methylsulfinyl-2-nitrothiophenol zinc salt, 4-methylsulfinyl-2-aminothiophenol zinc salt, 4-methylsulfinyl-2-hydroxythiophenol zinc salt, 4-methylsulfinyl-2-phenylthiothiophenol zinc salt, 4-carbamoyl-2-nitrothiophenol zinc salt, 4-carbamoyl-2-aminothiophenol zinc salt, 4-carbamoyl-2-hydroxythiophenol zinc salt, 4-carbamoyl-2-phenylthiothiophenol zinc salt, 4-trichloromethyl-2-nitrothiophenol zinc salt, 4-trichloromethyl-2-aminothiophenol zinc salt, 4-trichloromethyl-2-hydroxythiophenol zinc salt, 4-trichloromethyl-2-phenylthiothiophenol zinc salt, 4-cyano-2-nitrothiophenol zinc salt, 4-cyano-2-aminothiophenol zinc salt, 4-cyano-2-hydroxythiophenol zinc salt, 4-cyano-2-phenylthiothiophenol zinc salt, 4-methoxy-2-nitrothiophenol zinc salt, 4-methoxy-2-aminothiophenol zinc salt, 4-methoxy-2-hydroxythiophenol zinc salt, and 4-methoxy-2-phenylthiothiophenol zinc salt.

Still another example of the organic sulfur compound represented by the chemical formula (4) is a compound substituted with two or more types of substituents. Specific examples of the compound include 4-acetyl-2-chlorothiophenol zinc salt, 4-acetyl-2-methylthiophenol zinc salt, 4-acetyl-2-carboxythiophenol zinc salt, 4-acetyl-2-methoxycarbonylthiophenol zinc salt, 4-acetyl-2-formylthiophenol zinc salt, 4-acetyl-2-chlorocarbonylthiophenol zinc salt, 4-acetyl-2-sulfothiophenol zinc salt, 4-acetyl-2-methoxysulfonylthiophenol zinc salt, 4-acetyl-2-chlorosulfonylthiophenol zinc salt, 4-acetyl-2-sulfinothiophenol zinc salt, 4-acetyl-2-methylsulfinylthiophenol zinc salt, 4-acetyl-2-carbamoylthiophenol zinc salt, 4-acetyl-2-trichloromethylthiophenol zinc salt, 4-acetyl-2-cyanothiophenol zinc salt, and 4-acetyl-2-methoxythiophenol zinc salt. Examples of the bivalent metal represented by M2 in the chemical formula (4) include zinc, magnesium, calcium, strontium, barium, titanium (II), manganese (II), iron (II), cobalt (II), nickel (II), zirconium (II), and tin (II).

Examples of thionaphthols include 2-thionaphthol, 1-thionaphthol, 2-chloro-1-thionaphthol, 2-bromo-1-thionaphthol, 2-fluoro-1-thionaphthol, 2-cyano-1-thionaphthol, 2-acetyl-1-thionaphthol, 1-chloro-2-thionaphthol, 1-bromo-2-thionaphthol, 1-fluoro-2-thionaphthol, 1-cyano-2-thionaphthol, 1-acetyl-2-thionaphthol, and metal salts thereof. 1-thionaphthol, 2-thionaphthol, and zinc salts thereof are preferred.

Examples of sulfenamide type organic sulfur compounds include N-cyclohexyl-2-benzothiazole sulfenamide, N-oxydiethylene-2-benzothiazole sulfenamide, and N-t-butyl-2-benzothiazole sulfenamide. Examples of thiuram type organic sulfur compounds include tetramethylthiuram monosulfide, tetramethylthiuram disulfide, tetraethylthiuram disulfide, tetrabutylthiuram disulfide, and dipentamethylenethiuram tetrasulfide. Examples of dithiocarbamates include zinc dimethyldithiocarbamate, zinc diethyldithiocarbamate, zinc dibutyldithiocarbamate, zinc ethylphenyldithiocarbamate, sodium dimethyldithiocarbamate, sodium diethyldithiocarbamate, copper (II) dimethyldithiocarbamate, iron (III) dimethyldithiocarbamate, selenium diethyldithiocarbamate, and tellurium diethyldithiocarbamate. Examples of thiazole type organic sulfur compounds include 2-mercaptobenzothiazole (MBT); dibenzothiazyl disulfide (MBTS); a sodium salt, a zinc salt, a copper salt, or a cyclohexylamine salt of 2-mercaptobenzothiazole; 2-(2,4-dinitrophenyl)mercaptobenzothiazole; and 2-(2,6-diethyl-4-morpholinothio)benzothiazole.

From the standpoint that an outer-hard/inner-soft structure is easily obtained, particularly preferable organic sulfur compounds (e) are 2-thionaphthol, bis(pentabromophenyl)disulfide, and 2,6-dichlorothiophenol.

From the standpoint that an outer-hard/inner-soft structure is easily obtained, the amount of the organic sulfur compound (e) is preferably equal to or greater than 0.05 parts by weight, more preferably equal to or greater than 0.1 parts by weight, and particularly preferably equal to or greater than 0.2 parts by weight, per 100 parts by weight of the base rubber. In light of resilience performance, the amount is preferably equal to or less than 5.0 parts by weight, more preferably equal to or less than 3.0 parts by weight, and particularly preferably equal to or less than 1.0 parts by weight, per 100 parts by weight of the base rubber.

For the purpose of adjusting specific gravity and the like, a filler may be included in the envelope layer 12. Examples of suitable fillers include zinc oxide, barium sulfate, calcium carbonate, and magnesium carbonate. The amount of the filler is determined as appropriate so that the intended specific gravity of the core 4 is accomplished. A particularly preferable filler is zinc oxide. Zinc oxide serves not only as a specific gravity adjuster but also as a crosslinking activator.

According to need, an anti-aging agent, a coloring agent, a plasticizer, a dispersant, sulfur, a vulcanization accelerator, and the like are added to the rubber composition of the envelope layer 12. Crosslinkedrubberpowderor synthetic resin powder may also be dispersed in the rubber composition.

During heating and forming of the core 4, the base rubber (a) is crosslinked by the co-crosslinking agent (b). The heat of the crosslinking reaction remains near the central point of the core 4. Thus, during heating and forming of the core 4, the temperature at the central portion is high. The temperature gradually decreases from the central point toward the surface. It is inferred that in the rubber composition, the acid reacts with the metal salt of the co-crosslinking agent (b) to bond to cation. It is inferred that in the rubber composition, the salt reacts with the metal salt of the co-crosslinking agent (b) to exchange cation. By the bonding and the exchange, metal crosslinks are broken. The bonding and the exchange are likely to occur near the innermost portion of the envelope layer 12 where the temperature is high, and are unlikely to occur near the surface of the envelope layer 12. In other words, breaking of metal crosslinks is likely to occur near the innermost portion of the envelope layer 12 and is unlikely to occur near the surface of the envelope layer 12. As a result, the crosslinking density of the envelope layer 12 increases from its inside toward its outside. In the envelope layer 12, the hardness linearly increases from its inside toward its outside. Furthermore, since the rubber composition includes the organic sulfur compound (e) together with the acid and/or the salt (d), the gradient of the hardness distribution can be controlled, and the degree of the outer-hard/inner-soft structure of the core 4 can be increased.

The hardness H(0.0) at the central point of the core 4 is preferably equal to or greater than 40.0 but equal to or less than 70.0. The golf ball 2 having a hardness H(0.0) of 40.0 or greater has excellent resilience performance. In this respect, the hardness H(0.0) is more preferably equal to or greater than 45.0 and particularly preferably equal to or greater than 47.0. In the core 4 having a hardness H(0.0) of 70.0 or less, an outer-hard/inner-soft structure can be achieved. In the golf ball 2 that includes the core 4, spin can be suppressed. In this respect, the hardness H(0.0) is more preferably equal to or less than 68.0 and particularly preferably equal to or less than 65.0.

The hardness Hs at the surface of the core 4 is preferably equal to or greater than 75.0 but equal to or less than 95.0. In the core 4 having a hardness Hs of 75.0 or greater, an outer-hard/inner-soft structure can be achieved. In the golf ball 2 that includes the core 4, spin can be suppressed. In this respect, the hardness Hs is more preferably equal to or greater than 80.0 and particularly preferably equal to or greater than 82.0. The golf ball 2 having a hardness Hs of 95.0 or less has excellent durability. In this respect, the hardness Hs is more preferably equal to or less than 94.0 and particularly preferably equal to or less than 92.0.

The core 4 preferably has a diameter of 38.0 mm or greater but 41.5 mm or less. The core 4 having a diameter of 38.0 mm or greater can achieve excellent resilience performance of the golf ball 2. In this respect, the diameter is more preferably equal to or greater than 38.5 mm and particularly preferably equal to or greater than 39.0 mm. In the golf ball 2 that includes the core 4 having a diameter of 41.5 mm or less, the inner cover 6 and the outer cover 8 can have sufficient thicknesses. The golf ball 2 that includes the inner cover 6 and the outer cover 8 which have large thicknesses has excellent durability. In this respect, the diameter is more preferably equal to or less than 41. 0 mm and particularly preferably equal to or less than 40.5 mm.

In light of feel at impact, the core 4 has an amount of compressive deformation Dc of preferably 3.5 mm or greater and particularly preferably 3.8 mm or greater. In light of resilience performance of the core 4, the amount of compressive deformation Dc is preferably equal to or less than 4.5 mm and particularly preferably equal to or less than 4.0 mm.

For the inner cover 6, a resin composition is suitably used. Examples of the base polymer of the resin composition include ionomer resins, polystyrenes, polyesters, polyamides, and polyolefins.

Particularly preferable base polymers are ionomer resins. The golf ball 2 that includes the inner cover 6 including an ionomer resin has excellent resilience performance. An ionomer resin and another resin may be used in combination for the inner cover 6. In this case, the principal component of the base polymer is preferably the ionomer resin. Specifically, the proportion of the ionomer resin to the entire base polymer is preferably equal to or greater than 50% by weight, more preferably equal to or greater than 60% by weight, and particularly preferably equal to or greater than 70% by weight.

Examples of preferable ionomer resins include binary copolymers formed with an α-olefin and an α,β-unsaturated carboxylic acid having 3 to 8 carbon atoms. A preferable binary copolymer includes 80% by weight or greater but 90% by weight or less of an α-olefin, and 10% by weight or greater but 20% by weight or less of an α,β-unsaturated carboxylic acid. The binary copolymer has excellent resilience performance. Examples of other preferable ionomer resins include ternary copolymers formed with: an α-olefin; an α,β-unsaturated carboxylic acid having 3 to 8 carbon atoms; and an α,β-unsaturated carboxylate ester having 2 to 22 carbon atoms. A preferable ternary copolymer includes 70% by weight or greater but 85% by weight or less of an α-olefin, 5% by weight or greater but 30% by weight or less of an α,β-unsaturated carboxylic acid, and 1% by weight or greater but 25% by weight or less of an α,β-unsaturated carboxylate ester. The ternary copolymer has excellent resilience performance. For the binary copolymers and the ternary copolymers, preferable α-olefins are ethylene and propylene, while preferable α,β-unsaturated carboxylic acids are acrylic acid and methacrylic acid. Particularly preferable ionomer resins are a copolymer formed with ethylene and acrylic acid and a copolymer formed with ethylene and methacrylic acid.

In the binary copolymers and the ternary copolymers, some of the carboxyl groups are neutralized with metal ions. Examples of metal ions for use in neutralization include sodium ion, potassium ion, lithium ion, zinc ion, calcium ion, magnesium ion, aluminum ion, and neodymium ion. The neutralization may be carried out with two or more types of metal ions. Particularly suitable metal ions in light of resilience performance and durability of the golf ball 2 are sodium ion, zinc ion, lithium ion, and magnesium ion.

Specific examples of ionomer resins include trade names "Himilan 1555", "Himilan 1557", "Himilan 1605", "Himilan 1706", "Himilan 1707", "Himilan 1856", "Himilan 1855", "Himilan AM7311", "Himilan AM7315", "Himilan AM7317", "Himilan AM7318", "Himilan AM7329", "Himilan AM7337", "Himilan MK7320", and "Himilan MK7329", manufactured by Du Pont-MITSUI POLYCHEMICALS Co., Ltd.; trade names "Surlyn 6120", "Surlyn 6910", "Surlyn 7930", "Surlyn 7940", "Surlyn 8140", "Surlyn 8150", "Surlyn 8940", "Surlyn 8945", "Surlyn 9120", "Surlyn 9150", "Surlyn 9910", "Surlyn 9945", "Surlyn AD8546", "HPF1000", and "HPF2000", manufactured by E.I. du Pont de Nemours and Company; and trade names "IOTEK 7010", "IOTEK 7030", "IOTEK 7510", "IOTEK 7520", "IOTEK 8000", and "IOTEK 8030", manufactured by ExxonMobil Chemical Company.

Two or more ionomer resins may be used in combination for the inner cover 6. An ionomer resin neutralized with a monovalent metal ion, and an ionomer resin neutralized with a bivalent metal ion may be used in combination.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the inner cover 6 in an adequate amount.

From the standpoint that an outer-hard/inner-soft structure can be achieved in the sphere consisting of the core 4 and the inner cover 6 , the inner cover 6 preferably has a hardness Hi greater than the surface hardness Hs of the core 4. In light of suppression of spin, the difference (Hi-Hs) between the hardness Hi and the hardness Hs is preferably equal to or greater than 2, more preferably equal to or greater than 4, and particularly preferably equal to or greater than 6.

The hardness Hi is measured with a JIS-C type hardness scale mounted to an automated rubber hardness measurement machine (trade name "P1", manufactured by Kobunshi Keiki Co., Ltd.). For the measurement, a slab that is formed by hot press and that has a thickness of about 2 mm is used. A slab kept at 23°C for two weeks is used for the measurement. At the measurement, three slabs are stacked. A slab formed from the same resin composition as the resin composition of the inner cover 6 is used for the measurement.

From the standpoint that an outer-hard/inner-soft structure can be achieved in the sphere consisting of the core 4 and the inner cover 6, the JIS-C hardness Hi of the inner cover 6 is preferably equal to or greater than 80, more preferably equal to or greater than 85, and particularly preferably equal to or greater than 90. In light of feel at impact of the golf ball 2, the hardness Hi is preferably equal to or less than 98 and particularly preferably equal to or less than 97.

The inner cover 6 preferably has a thickness Ti of 0.5 mm or greater but 1.6 mm or less. In the sphere that includes the inner cover 6 having a thickness Ti of 0.5 mm or greater, the spin suppression effect provided by the outer-hard/inner-soft structure is great. In this respect, the thickness Ti is particularly preferably equal to or greater than 0.7 mm. The golf ball 2 that includes the inner cover 6 having a thickness Ti of 1.6 mm or less can include a large core 4. The large core 4 can contribute to the resilience performance of the golf ball 2. In this respect, the thickness Ti is particularly preferably equal to or less than 1.2 mm.

For the outer cover 8, a resin composition is suitably used. Examples of the base polymer of the resin composition include ionomer resins, polystyrenes, polyesters, polyamides, and polyolefins.

Particularly preferable base polymers are ionomer resins. The golf ball 2 that includes the outer cover 8 including an ionomer resin has excellent resilience performance. An ionomer resin and another resin may be used in combination for the outer cover 8. In this case, the principal component of the base polymer is preferably the ionomer resin. Specifically, the proportion of the ionomer resin to the entire base polymer is preferably equal to or greater than 50% by weight, more preferably equal to or greater than 60% by weight, and particularly preferably equal to or greater than 70% by weight. The outer cover 8 can include the ionomer resin described above for the inner cover 6.

A preferable resin that can be used in combination with an ionomer resin is a styrene block-containing thermoplastic elastomer. The styrene block-containing thermoplastic elastomer has excellent compatibility with ionomer resins. A resin composition including the styrene block-containing thermoplastic elastomer has excellent fluidity.

The styrene block-containing thermoplastic elastomer includes a polystyrene block as a hard segment, and a soft segment. A typical soft segment is a diene block. Examples of compounds for the diene block include butadiene, isoprene, 1,3-pentadiene, and 2,3-dimethyl-1,3-butadiene. Butadiene and isoprene are preferred. Two or more compounds may be used in combination.

Examples of styrene block-containing thermoplastic elastomers include styrene-butadiene-styrene block copolymers (SBS), styrene-isoprene-styrene block copolymers (SIS), styrene-isoprene-butadiene-styrene block copolymers (SIBS), hydrogenated SBS, hydrogenated SIS, and hydrogenated SIBS. Examples of hydrogenated SBS include styrene-ethylene-butylene-styrene block copolymers (SEBS). Examples of hydrogenated SIS include styrene-ethylene-propylene-styrene block copolymers (SEPS). Examples of hydrogenated SIBS include styrene-ethylene-ethylene-propylene-styrene block copolymers (SEEPS).

In light of resilience performance of the golf ball 2, the content of the styrene component in the styrene block-containing thermoplastic elastomer is preferably equal to or greater than 10% by weight, more preferably equal to or greater than 12% by weight, and particularly preferably equal to or greater than 15% by weight. In light of feel at impact of the golf ball 2, the content is preferably equal to or less than 50% by weight, more preferably equal to or less than 47% by weight, and particularly preferably equal to or less than 45% by weight.

In the present invention, styrene block-containing thermoplastic elastomers include an alloy of an olefin and one or more members selected from the group consisting of SBS, SIS, SIBS, SEBS, SEPS, and SEEPS. The olefin component in the alloy is presumed to contribute to improvement of compatibility with ionomer resins. Use of this alloy improves the resilience performance of the golf ball 2. An olefin having 2 to 10 carbon atoms is preferably used. Examples of suitable olefins include ethylene, propylene, butene, and pentene. Ethylene and propylene are particularly preferred.

Specific examples of polymer alloys include trade names "Rabalon T3221C", "Rabalon T3339C", "Rabalon SJ4400N", "Rabalon SJ5400N", "Rabalon SJ6400N", "Rabalon SJ7400N", "Rabalon SJ8400N", "Rabalon SJ9400N", and "Rabalon SR04", manufactured by Mitsubishi Chemical Corporation. Other specific examples of styrene block-containing thermoplastic elastomers include trade name "Epofriend A1010" manufactured by Daicel Chemical Industries, Ltd., and trade name "Septon HG-252" manufactured by Kuraray Co., Ltd.

Another resin that can be used in combination with an ionomer resin is an ethylene-(meth)acrylic acid copolymer. The copolymer is obtained by a copolymerization reaction of a monomer composition that contains ethylene and (meth) acrylic acid. In the copolymer, some of the carboxyl groups are neutralized with metal ions. The copolymer includes 3% by weight or greater but 25% by weight or less of a (meth)acrylic acid component. An ethylene- (meth) acrylic acid copolymer having a polar functional group is particularly preferred. A specific example of ethylene- (meth) acrylic acid copolymers is trade name "NUCREL" manufactured by Du Pont-MITSUI POLYCHEMICALS Co., Ltd.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the outer cover 8 in an adequate amount.

The outer cover 8 preferably has a JIS-C hardness Ho of 96 or less. When the golf ball 2 that includes the outer cover 8 having a hardness Ho of 96 or less is hit with a short iron, a high spin rate is obtained. The golf ball 2 has excellent controllability. In this respect, the hardness Ho is more preferably equal to or less than 94 and particularly preferably equal to or less than 92. In light of flight distance upon a shot with a driver, the hardness Ho is preferably equal to or greater than 70 and particularly preferably equal to or greater than 80. The hardness Ho is measured by the same measurement method as that for the hardness Hi.

The hardness Ho of the outer cover 8 is less than the hardness Hi of the inner cover 6. When the golf ball 2 is hit with a driver, the sphere consisting of the core 4 and the inner cover 6 becomes significantly distorted since the head speed is high. Since this sphere has an outer-hard/inner-soft structure, the spin rate is suppressed. The hardness of the envelope layer 12 linearly changes. Thus, the golf ball 2 is launched at a high speed due to deformation and restoration of the envelope layer 12. The suppression of the spin rate and the high launch speed achieve a large flight distance. When the golf ball 2 is hit with a short iron, this sphere becomes less distorted since the head speed is low. When the golf ball 2 is hit with a short iron, the behavior of the golf ball 2 mainly depends on the outer cover 8. Since the outer cover 8 is flexible, a slip between the golf ball 2 and a clubface is suppressed. Due to the suppression of the slip, a high spin rate is obtained. The high spin rate achieves excellent controllability. In the golf ball 2, both desired flight performance upon a shot with a driver and desired controllability upon a shot with a short iron are achieved.

In light of achievement of both desired flight performance and desired controllability, the difference (Hi-Ho) between the hardness Hi of the inner cover 6 and the hardness Ho of the outer cover 8 is preferably equal to or greater than 1, more preferably equal to or greater than 2, and particularly preferably equal to or greater than 4. The difference (Hi-Ho) is preferably equal to or less than 20.

The hardness Ho of the outer cover 8 may be less than the surface hardness Hs of the core 4 or may be greater than the surface hardness Hs of the core 4. The golf ball 2 in which the hardness Ho is less than the hardness Hs has particularly excellent controllability. The golf ball 2 in which the hardness Ho is greater than the hardness Hs has particularly excellent flight performance.

In light of controllability upon a shot with a short iron, the outer cover 8 has a thickness To of preferably 0.1 mm or greater and particularly preferably 0.2 mm or greater. In light of flight performance upon a shot with a driver, the thickness To is preferably equal to or less than 1.2 mm and particularly preferably equal to or less than 1.0 mm.

For forming the outer cover 8, known methods such as injection molding, compression molding, and the like can be used. When forming the outer cover 8, the dimples 14 are formed by pimples formed on the cavity face of a mold.

In light of feel at impact, the sum (Ti+To) of the thickness Ti of the inner cover 6 and the thickness To of the outer cover 8 is preferably equal to or less than 2.5 mm, more preferably equal to or less than 2.3 mm, and particularly preferably equal to or less than 2.1 mm. In light of durability of the golf ball 2, the sum (Ti+To) is preferably equal to or greater than 0.3 mm, more preferably equal to or greater than 0.5 mm, and particularly preferably equal to or greater than 0.8 mm.

In light of feel at impact, the golf ball 2 has an amount of compressive deformation Db of preferably 2.2 mm or greater, more preferably 2.5 mm or greater, and particularly preferably 2.8 mm or greater. In light of resilience performance, the amount of compressive deformation Db is preferably equal to or less than 4.0 mm, more preferably equal to or less than 3.7 mm, and particularly preferably equal to or less than 3.4 mm.

For measurement of the amount of compressive deformation, a YAMADA type compression tester is used. In the tester, a sphere such as the core 4, the golf ball 2, or the like is placed on a hard plate made of metal. Next, a cylinder made of metal gradually descends toward the sphere. The sphere, squeezed between the bottom face of the cylinder and the hardplate, becomes deformed. A migration distance of the cylinder, starting from the state in which an initial load of 98 N is applied to the sphere up to the state in which a final load of 1274 N is applied thereto, is measured.

The golf ball may include a center formed from a rubber composition that includes the acid and/or the salt (d) ; and an envelope layer formed from a rubber composition that does not include the acid and/or the salt (d). The rubber composition of the center is the same as the rubber composition of the envelope layer 12 shown in FIG. 1. A hardness distribution of the center is appropriate.

The golf ball may include a center formed from a rubber composition that includes the acid and/or the salt (d) ; and an envelope layer formed from a rubber composition that includes the acid and/or the salt (d). The rubber composition of the center is the same as the rubber composition of the envelope layer 12 shown in FIG. 1. The rubber composition of the envelope layer is the same as the rubber composition of the envelope layer 12 shown in FIG. 1. A hardness distribution of the center is appropriate. A hardness distribution of the envelope layer is appropriate.

Preferred embodiments of the invention are specified in the following paragraphs:
1. A golf ball comprising a core, an inner cover positioned outside the core, and an outer cover positioned outside the inner cover, wherein
   the core comprises a center and an envelope layer positioned outside the center,
   the center has a diameter of equal to or greater than 10 mm and equal to or less than 20 mm,
   the center is formed by a rubber composition being crosslinked,
   the envelope layer is formed by a rubber composition being crosslinked,
   the rubber composition of the envelope layer includes:
   (a) a base rubber;
   (b) a co-crosslinking agent;
   (c) a crosslinking initiator;
      a filler; and
   (d) an acid and/or a salt, wherein the acid and/or salt excludes the co-crosslinking agent (b) and and is selectzed from carboxylic acids, phosphoric acid, hydroacids and salts thereof,
   the co-crosslinking agent (b) is:
   (b1) an α,β-unsaturated carboxylic acid having 3 to 8 carbon atoms; or
   (b2) a metal salt of an α,β-unsaturated carboxylic acid having 3 to 8 carbon atoms,
   a JIS-C hardness Hi of the inner cover is greater than a JIS-C hardness Hs at a surface of the core, and
   a JIS-C hardness Ho of the outer cover is less than the hardness Hi,
   wherein the JIS-Chardnesses are measured with a Chardness scale mounted to an automated rubber hardness measurement machine with the trade name "P1", manufactured by Kobunshi Keiki Co., Ltd.).
2. The golf ball according to paragraph 1, wherein a difference (Hi-Hs) between the hardness Hi and the hardness Hs is equal to or greater than 2.
3. The golf ball according to paragraph 1, wherein a difference (Hi-Ho) between the hardness Hi and the hardness Ho is equal to or greater than 1.
4. The golf ball according to paragraph 1, whereinanamount of the acid and/or the salt (d) is equal to or greater than 1.0 parts by weight but less than 40 parts by weight, per 100 parts by weight of the base rubber (a).
5. The golf ball according to paragraph 1, wherein the acid and/or the salt (d) is a carboxylic acid and/or a salt thereof (d1).
6. The golf ball according to paragraph 5, wherein a carbon number of a carboxylic acid component of the carboxylic acid and/or the salt thereof (d1) is equal to or greater than 1 but equal to or less than 30.
7. The golf ball according to paragraph 5, wherein the carboxylic acid and/or the salt thereof (d1) is a fatty acid and/or a salt thereof.
8. The golf ball according to paragraph 5, wherein the carboxylic acid and/or the salt thereof (d1) is a zinc salt of a carboxylic acid.
9. The golf ball according to paragraph 8, wherein the zinc salt of the carboxylic acid is one or more members selected from the group consisting of zinc octoate, zinc laurate, zinc myristate, and zinc stearate.
10. The golf ball according to paragraph 1, wherein the rubber composition includes 15 parts by weight or greater but 50 parts by weight or less of the co-crosslinking agent (b) per 100 parts by weight of the base rubber (a).
11. The golf ball according to paragraph 1, wherein the rubber composition includes 0.2 parts by weight or greater but 5.0 parts by weight or less of the crosslinking initiator (c) per 100 parts by weight of the base rubber (a).
12. The golf ball according to paragraph 1, wherein a difference (Hs-H(0.0)) between the hardness Hs and a JIS-C hardness H(0.0) at a central point of the core is equal to or greater than 15.
13. The golf ball according to paragraph 1, wherein a sum (Ti+To) of a thickness Ti of the inner cover and a thickness To of the outer cover is equal to or less than 2.5 mm.
14. The golf ball according to paragraph 1, wherein the rubber composition further includes an organic sulfur compound (e).
15. The golf ball according to paragraph 14, wherein the organic sulfur compound (e) is at least one member selected from the group consisting of thiophenols, diphenyl disulfides, thionaphthols, thiuram disulfides, and metal salts thereof.
16. The golf ball according to paragraph 14, wherein the rubber composition includes 0.05 parts by weight or greater but 5 parts by weight or less of the organic sulfur compound (e) per 100 parts by weight of the base rubber (a).
17. The golf ball according to paragraph 1, wherein the rubber composition includes the α,β-unsaturated carboxylic acid (b1), and
the rubber composition further includes a metal compound (f).

### EXAMPLES

### [Experiment 1]

### [Example I-1]

A rubber composition was obtained by kneading 100 parts by weight of a high-cis polybutadiene (trade name "BR-730", manufactured by JSR Corporation), 28 parts by weight of methacrylic acid, 34 parts by weight of magnesium oxide, and 0.75 parts by weight of dicumyl peroxide. This rubber composition was placed into a mold including upper and lower mold halves each having a hemispherical cavity, and heated at 170°C for 25 minutes to obtain a center with a diameter of 15 mm.

A rubber composition was obtained by kneading 100 parts by weight of a high-cis polybutadiene (the aforementioned "BR-730"), 26 parts by weight of zinc diacrylate (trade name "Sanceler SR", manufactured by SANSHIN CHEMICAL INDUSTRY CO., LTD.), 5. 0 parts by weight of zinc oxide, an appropriate amount of barium sulfate, 0.20 parts by weight of 2-thionaphthol, 10.0 parts by weight of zinc stearate, and 0.75 parts by weight of dicumyl peroxide. Half shells were formed from this rubber composition. The center was covered with two of these half shells. The center and the half shells were placed into a mold including upper and lower mold halves each having a hemispherical cavity, and heated at 150°C for 20 minutes to obtain a core with a diameter of 39.1 mm. An envelope layer was formed from the rubber composition. The amount of barium sulfate was adjusted such that the specific gravity of the envelope layer coincides with the specific gravity of the center and the weight of a golf ball is 45.4 g.

A resin composition was obtained by kneading 50 parts by weight of an ionomer resin (the aforementioned "Himilan 1605"), 50 parts by weight of another ionomer resin (the aforementioned "Himilan AM7329"), and 4 parts by weight of titanium dioxide with a twin-screw kneading extruder. The core was placed into a mold including upper and lower mold halves each having a hemispherical cavity. The resin composition was injected around the core by injection molding to form an inner cover with a thickness of 1.0 mm.

A resin composition was obtained by kneading 46 parts by weight of an ionomer resin (the aforementioned "Himilan 1555"), 45 parts by weight of another ionomer resin (the aforementioned "Himilan AM7329"), 9 parts by weight of a styrene block-containing thermoplastic elastomer (the aforementioned "Rabalon T3221C", 3 parts by weight of titanium dioxide, and 0.2 parts by weight of an ultraviolet absorber (trade name "TINUVIN 770", manufactured by Ciba Japan K.K.) with a twin-screw kneading extruder. The sphere consisting of the core and the inner cover was placed into a final mold having a large number of pimples on its cavity face. The resin composition was injected around the sphere by injection molding to form an outer cover with a thickness of 0.8 mm. Dimples having a shape that is the inverted shape of the pimples were formed on the outer cover. A clear paint including a two-component curing type polyurethane as a base material was applied to this outer cover to obtain a golf ball of Example I-1 with a diameter of 42.7 mm.

### [Examples I-2 to I-16 and Comparative Examples I-1 to I-6]

Golf balls of Examples I-2 to I-16 and Comparative Examples I-1 to I-6 were obtained in the same manner as Example I-1, except the specifications of the center, the envelope layer, the inner cover, and the outer cover were as shown in Tables I-10 to I-13 below. The composition of the core is shown in detail in Tables I-1 to I-3 below. The compositions of the inner cover and the outer cover are shown in detail in Table I-4 below. The hardness of the core is shown in Tables I-5 to I-9 below. Each of the golf balls according to Comparative Examples I-4 and I-5 does not have an envelope layer.

### [Hit with Driver (W#1)]

A driver with a titanium head (trade name "XXIO", manufactured by DUNLOP SPORTS CO. LTD., shaft hardness: R, loft angle: 11.0°) was attached to a swing machine manufactured by True Temper Co. A golf ball was hit under the condition of a head speed of 40 m/sec. The spin rate was measured immediately after the hit. Furthermore, the distance from the launch point to the stop point was measured. The average value of data obtained by 10 measurements is shown in Tables I-10 to I-13 below.

### [Hit with Sand Wedge (SW)]

A sand wedge (SW) was attached to the above swing machine. A golf ball was hit under the condition of a head speed of 21 m/sec. The spin rate was measured immediately after the hit. The average value of data obtained by 10 measurements is shown in Tables I-10 to I-13 below.

**Table I-1 Composition of Core (parts by weight)**

| | A | B |
|---|---|---|
| BR-730 | 100 | 100 |
| Methacrylic acid | 28 | - |
| Sanceler SR | - | 20 |
| Magnesium oxide | 34 | - |
| Zinc oxide | - | 5 |
| Barium sulfate | - | * |
| 2-thionaphthol | - | 0.2 |
| Zinc octoate | - | 5 |
| Dicumyl peroxide | 0.75 | 0.75 |

| | | |
|---|---|---|
| * Appropriate amount | | |

**Table I-2 Composition of Core (parts by weight)**

| | E1 | E2 | E3 | E4 | E5 | E6 |
|---|---|---|---|---|---|---|
| BR-730 | 100 | 100 | 100 | 100 | 100 | 100 |
| Sanceler SR | 26.0 | 27.5 | 29.5 | 31.5 | 27.0 | 26.5 |
| Zinc oxide | 5.0 | 5.0 | 5.0 | 5.0 | 5.0 | 5.0 |
| Barium sulfate | * | * | * | * | * | * |
| 2-thionaphthol | 0.20 | 0.20 | 0.20 | 0.20 | 0.20 | 0.20 |
| Zinc octoate | - | - | - | - | - | - |
| Zinc laurate | - | - | - | - | - | - |
| Zinc myristate | - | - | - | - | - | - |
| Zinc stearate | 10.0 | 20.0 | 30.0 | 40.0 | - | 0.5 |
| Dicumyl peroxide | 0.75 | 0.75 | 0.75 | 0.75 | 0.75 | 0.8 |

| | | | | | | |
|---|---|---|---|---|---|---|
| * Appropriate amount | | | | | | |

**Table I-3 Composition of Core (parts by weight)**

| | E7 | E8 | E9 | E10 | E11 |
|---|---|---|---|---|---|
| BR-730 | 100 | 100 | 100 | 100 | 100 |
| Sanceler SR | 25.5 | 25.0 | 25.5 | 26.0 | 25.5 |
| Zinc oxide | 5.0 | 5.0 | 5.0 | 5.0 | 5.0 |
| Barium sulfate | * | * | * | * | * |
| 2-thionaphthol | 0.20 | 0.20 | 0.20 | 0.20 | 0.20 |
| Zinc octoate | 2.5 | 5.0 | - | - | - |
| Zinc laurate | - | - | 10.0 | - | - |
| Zinc myristate | - | - | - | 5.0 | 10.0 |
| Zinc stearate | - | - | - | - | - |
| Dicumyl peroxide | 0.8 | 0.8 | 0.8 | 0.8 | 0.8 |

| | | | | | |
|---|---|---|---|---|---|
| * Appropriate amount | | | | | |

The details of the compounds listed in Tables I-1 to I-3 are as follows.
BR-730: a high-cis polybutadiene manufactured by JSR Corporation (cis-1,4-bond content: 96% by weight, 1,2-vinyl bond content: 1.3% by weight, Mooney viscosity (ML₁₊₄ (100°C)): 55, molecular weight distribution (Mw/Mn): 3)
Methacrylic acid: a product of MITSUBISHI RAYON CO. , LTD.
Sanceler SR: zinc diacrylate manufactured by SANSHIN CHEMICAL INDUSTRY CO. , LTD. (a product coated with 10% by weight of stearic acid)
Magnesium oxide: trade name "MAGSARAT 150ST" manufactured by Kyowa Chemical Industry Co., Ltd.
2-thionaphthol: a product of Tokyo Chemical Industry Co., Ltd.
Zinc octoate: a product of Mitsuwa Chemicals Co., Ltd.
Zinc laurate: a product of Mitsuwa Chemicals Co., Ltd.
Zinc myristate: a product of NOF Corporation
Zinc stearate: a product of Wako Pure Chemical Industries, Ltd.
Dicumyl peroxide: a product of NOF Corporation

**Table I-4 Composition of Cover (parts by weight)**

| | C1 | C2 | C3 | C4 | C5 | C6 | C7 |
|---|---|---|---|---|---|---|---|
| Himilan AM7337 | 5 | - | 30 | - | 51 | 40 | 26 |
| Himilan 1555 | 10 | 46 | - | - | - | - | - |
| Himilan 1605 | - | - | - | 50 | - | - | - |
| Himilan AM7329 | 55 | 45 | 30 | 50 | 40 | 40 | 40 |
| NUCREL N1050H | 30 | - | - | - | - | - | - |
| Rabalon T3221C | - | 9 | 40 | - | 9 | 20 | 34 |
| Titanium dioxide (A220) | 3 | 3 | 6 | 4 | 6 | 6 | 6 |
| TINUVIN 770 | 0.2 | 0.2 | 0.2 | - | - | - | - |
| Hardness(JIS-C) | 92 | 88 | 71 | 96 | 89 | 85 | 76 |
| Hardness(ShoreD) | 61 | 57 | 40 | 65 | 58 | 54 | 45 |

| | | | | | | | |
|---|---|---|---|---|---|---|---|
| * Appropriate amount | | | | | | | |

**Table I-5 Hardness Distribution of Core (JIS-C)**

| | Ex. I-1 | Ex. I-2 | Ex. I-3 | Ex. I-4 | Ex. I-5 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(8.0) | 64.6 | 65.2 | 63.8 | 64.4 | 67.0 |
| H(10.0) | 67.0 | 67.4 | 67.9 | 66.4 | 68.5 |
| H(12.5) | 71.8 | 71.0 | 73.8 | 71.0 | 70.1 |
| H(15.0) | 76.0 | 75.3 | 77.8 | 77.0 | 76.7 |
| H(17.5) | 79.5 | 80.6 | 82.0 | 80.7 | 80.5 |
| Hs | 83.0 | 84.1 | 84.9 | 83.3 | 83.4 |

**Table I-6 Hardness Distribution of Core (JIS-C)**

| | Ex. I-6 | Ex. I-7 | Ex. I-8 | Ex. I-9 | Ex. I-10 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(8.0) | 65.5 | 64.6 | 64.6 | 64.6 | 64.6 |
| H(10.0) | 67.4 | 67.0 | 67.0 | 67.0 | 67.0 |
| H(12.5) | 71.8 | 71.8 | 71.8 | 71.8 | 71.8 |
| H(15.0) | 77.5 | 76.0 | 76.0 | 76.0 | 76.0 |
| H(17.5) | 81.3 | 79.5 | 79.5 | 79.5 | 79.5 |
| Hs | 84.5 | 83.0 | 83.0 | 83.0 | 82.5 |

**Table I-7 Hardness Distribution of Core (JIS-C)**

| | Ex. I-11 | Ex. I-12 | Ex. I-13 | Ex. I-14 | Ex. I-15 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(8.0) | 64.6 | 62.8 | 64.0 | 68.8 | 64.3 |
| H(10.0) | 67.0 | 66.6 | 66.8 | 70.0 | 67.0 |
| H(12.5) | 71.8 | 73.7 | 71.0 | 71.2 | 70.4 |
| H(15.0) | 76.0 | 75.4 | 72.1 | 74.8 | 70.5 |
| H(17.5) | 79.5 | 78.2 | 73.0 | 78.8 | 68.5 |
| Hs | 82.1 | 81.6 | 79.1 | 82.9 | 70.7 |

**Table I-8 Hardness Distribution of Core (JIS-C)**

| | Comp. Ex. I-1 | Comp. Ex. I-2 | Comp. Ex. I-3 | Comp. Ex. I-4 | Comp. Ex. I-5 | Comp. Ex. I-6 |
|---|---|---|---|---|---|---|
| H(0.0) | 55.0 | 55.0 | 55.0 | 54.0 | 54.0 | 55.0 |
| H(2.5) | 56.0 | 56.0 | 56.0 | 59.8 | 59.8 | 56.0 |
| H(5.0) | 58.0 | 58.0 | 58.0 | 63.0 | 63.0 | 58.0 |
| H(7.0) | 60.0 | 60.0 | 60.0 | 64.6 | 64.6 | 60.0 |
| H(8.0) | 64.6 | 64.6 | 64.6 | 64.6 | 64.6 | 67.7 |
| H(10.0) | 67.0 | 67.0 | 67.0 | 67.0 | 67.0 | 68.6 |
| H(12.5) | 71.8 | 71.8 | 71.8 | 71.8 | 71.8 | 70.6 |
| H(15.0) | 76.0 | 76.0 | 76.0 | 76.0 | 76.0 | 74.1 |
| H(17.5) | 79.5 | 79.5 | 79.5 | 79.5 | 79.5 | 79.0 |
| Hs | 83.0 | 83.0 | 83.0 | 83.0 | 83.0 | 83.0 |

**Table I-9 Hardness Distribution of Core (JIS-C)**

| | Ex. I-16 |
|---|---|
| H(0.0) | 55.0 |
| H(2.5) | 58.5 |
| H(5.0) | 60.5 |
| H(7.5) | 62.5 |
| H(9.5) | 65.0 |
| H(10.5) | 68.6 |
| H(12.5) | 70.6 |
| H(15.0) | 74.1 |
| H(17.5) | 79.0 |
| Hs | 83.0 |

**Table I-10 Results of Evaluation**

| | Ex. I-1 | Ex. I-2 | Ex. I-3 | Ex. I-4 | Ex. I-5 |
|---|---|---|---|---|---|
| Center | | | | | |
| Composition | A | A | A | A | A |
| Acid/salt (PHR) | 0.0 | 0.0 | 0.0 | 0.0 | 0.0 |
| Diameter (mm) | 15.0 | 15.0 | 15.0 | 15.0 | 15.0 |
| Envelope layer | | | | | |
| Composition | E1 | E7 | E8 | E9 | E10 |
| Acid/salt (PHR) | 10.0 | 2.5 | 5.0 | 10.0 | 5.0 |
| Core | | | | | |
| Hs - H(0.0) | 28.0 | 29.1 | 29.9 | 28.3 | 28.4 |
| Diameter (mm) | 39.1 | 39.1 | 39.1 | 39.1 | 39.1 |
| Dc (mm) | 3.90 | 3.92 | 3.88 | 3.90 | 3.91 |
| Inner cover | | | | | |
| Composition | C4 | C4 | C4 | C4 | C4 |
| Ti (mm) | 1.0 | 1.0 | 1.0 | 1.0 | 1.0 |
| Hi (JIS-C) | 96 | 96 | 96 | 96 | 96 |
| Outer cover | | | | | |
| Composition | C2 | C2 | C2 | C2 | C2 |
| To (mm) | 0.8 | 0.8 | 0.8 | 0.8 | 0.8 |
| Ho (JIS-C) | 88 | 88 | 88 | 88 | 88 |
| Ball | | | | | |
| Ti + To | 1.8 | 1.8 | 1.8 | 1.8 | 1.8 |
| Hi - Hs | 13.0 | 11.9 | 11.1 | 12.7 | 12.6 |
| Hi - Ho | 8 | 8 | 8 | 8 | 8 |
| Db (mm) | 3.19 | 3.21 | 3.17 | 3.19 | 3.2 |
| W#1 | | | | | |
| Spin (rpm) | 2390 | 2395 | 2360 | 2385 | 2405 |
| Distance (m) | 202.7 | 202.5 | 203.2 | 202.8 | 202.3 |
| SW spin (rpm) | 5600 | 5600 | 5600 | 5600 | 5600 |

**Table I-11 Results of Evaluation**

| | Ex. I-6 | Ex. I-7 | Ex. I-8 | Ex. I-9 | Ex. I-10 |
|---|---|---|---|---|---|
| Center | | | | | |
| Composition | A | A | A | A | A |
| Acid/salt (PHR) | 0.0 | 0.0 | 0.0 | 0.0 | 0.0 |
| Diameter (mm) | 15.0 | 15.0 | 15.0 | 15.0 | 15.0 |
| Envelope layer | | | | | |
| Composition | E11 | E1 | E1 | E1 | E1 |
| Acid/salt (PHR) | 10.0 | 10.0 | 10.0 | 10.0 | 10.0 |
| Core | | | | | |
| Hs - H(0.0) | 29.5 | 28.0 | 28.0 | 28.0 | 27.5 |
| Diameter (mm) | 39.1 | 39.1 | 39.1 | 39.1 | 39.1 |
| Dc (mm) | 3.89 | 3.90 | 3.90 | 3.90 | 3.90 |
| Inner cover | | | | | |
| Composition | C4 | C4 | C5 | C5 | C4 |
| Ti (mm) | 1.0 | 1.0 | 1.0 | 1.0 | 1.0 |
| Hi (JIS-C) | 96 | 96 | 89 | 89 | 96 |
| Outer cover | | | | | |
| Composition | C2 | C1 | C2 | C3 | C2 |
| To (mm) | 0.8 | 0.8 | 0.8 | 0.8 | 1.1 |
| Ho (JIS-C) | 88 | 92 | 88 | 71 | 88 |
| Ball | | | | | |
| Ti + To | 1.8 | 1.8 | 1.8 | 1.8 | 2.1 |
| Hi - Hs | 11.5 | 13.0 | 6.0 | 6.0 | 13.5 |
| Hi - Ho | 8 | 4 | 1 | 18 | 8 |
| Db (mm) | 3.18 | 3.17 | 3.21 | 3.27 | 3.17 |
| W#1 | | | | | |
| Spin (rpm) | 2365 | 2355 | 2400 | 2435 | 2415 |
| Distance (m) | 203.1 | 203.4 | 202.4 | 201.5 | 202.0 |
| SW spin (rpm) | 5600 | 5550 | 5640 | 5680 | 5600 |

**Table I-12 Results of Evaluation**

| | Ex. I-11 | Ex. I-12 | Ex. I-13 | Ex. I-14 | Ex. I-15 | Ex. I-16 |
|---|---|---|---|---|---|---|
| Center | | | | | | |
| Composition | A | A | A | A | A | B |
| Acid/salt (PHR) | 0.0 | 0.0 | 0.0 | 0.0 | 0.0 | 5.0 |
| Diameter (mm) | 15.0 | 15.0 | 15.0 | 15.0 | 15.0 | 20.0 |
| Envelope layer | | | | | | |
| Composition | E1 | E2 | E3 | E6 | E4 | E5 |
| Acid/salt (PHR) | 10.0 | 20.0 | 30.0 | 0.5 | 40.0 | 0.0 |
| Core | | | | | | |
| Hs - H(0.0) | 27.1 | 26.6 | 24.1 | 27.9 | 15.7 | 28.0 |
| Diameter (mm) | 39.1 | 39.1 | 39.1 | 39.1 | 39.1 | 39.1 |
| Dc (mm) | 3.90 | 3.91 | 3.90 | 3.91 | 3.91 | 3.93 |
| Inner cover | | | | | | |
| Composition | C4 | C4 | C4 | C4 | C4 | C4 |
| Ti (mm) | 1.0 | 1.0 | 1.0 | 1.0 | 1.0 | 1.0 |
| Hi (JIS-C) | 96 | 96 | 96 | 96 | 96 | 96 |
| Outer cover | | | | | | |
| Composition | C2 | C2 | C2 | C2 | C2 | C2 |
| To (mm) | 1.4 | 0.8 | 0.8 | 0.8 | 0.8 | 0.8 |
| Ho (JIS-C) | 88 | 88 | 88 | 88 | 88 | 88 |
| Ball | | | | | | |
| Ti + To | 2.4 | 1.8 | 1.8 | 1.8 | 1.8 | 1.8 |
| Hi - Hs | 13.9 | 14.4 | 16.9 | 13.1 | 25.3 | 13.0 |
| Hi - Ho | 8 | 8 | 8 | 8 | 8 | 8 |
| Db (mm) | 3.15 | 3.2 | 3.19 | 3.2 | 3.2 | 3.22 |
| W#1 | | | | | | |
| Spin (rpm) | 2425 | 2420 | 2430 | 2460 | 2460 | 2410 |
| Distance (m) | 201.8 | 201.9 | 201.6 | 201.0 | 201.0 | 202.2 |
| SW spin (rpm) | 5600 | 5600 | 5600 | 5600 | 5600 | 5578 |

**Table I-13 Results of Evaluation**

| | Comp. Ex. I-1 | Comp. Ex. I-2 | Comp. Ex. I-3 | Comp. Ex. I-4 | Comp. Ex. I-5 | Comp. Ex. I-6 |
|---|---|---|---|---|---|---|
| Center | | | | | | |
| Composition | A | A | A | E1 | E1 | A |
| Acid/salt (PHR) | 0.0 | 0.0 | 0.0 | 10.0 | 10.0 | 0.0 |
| Diameter (mm) | 15.0 | 15.0 | 15.0 | 39.1 | 39.1 | 15.0 |
| Envelope layer | | | | | | |
| Composition | E1 | E1 | E1 | - | - | E5 |
| Acid/salt (PHR) | 10.0 | 10.0 | 10.0 | - | - | 0.0 |
| Core | | | | | | |
| Hs - H(0.0) | 28.0 | 28.0 | 28.0 | 29.0 | 29.0 | 28.0 |
| Diameter (mm) | 39.1 | 39.1 | 39.1 | 39.1 | 39.1 | 39.1 |
| Dc (mm) | 3.90 | 3.90 | 3.90 | 3.85 | 3.85 | 3.91 |
| Inner cover | | | | | | |
| Composition | C7 | C6 | C7 | C4 | C2 | C4 |
| Ti (mm) | 1.0 | 1.0 | 1.0 | 1.0 | 1.0 | 1.0 |
| Hi (JIS-C) | 76 | 85 | 76 | 96 | 88 | 96 |
| Outer cover | | | | | | |
| Composition | C3 | C1 | C1 | C2 | C2 | C2 |
| To (mm) | 0.8 | 0.8 | 0.8 | 0.8 | 0.8 | 0.8 |
| Ho (JIS-C) | 71 | 92 | 92 | 88 | 88 | 88 |
| Ball | | | | | | |
| Ti + To | 1.8 | 1.8 | 1.8 | 1.8 | 1.8 | 1.8 |
| Hi - Hs | -17.0 | 2.0 | -7.0 | 13.0 | 3.0 | 13.0 |
| Hi - Ho | 5 | -7 | -16 | 8 | 0 | 8 |
| Db (mm) | 3.35 | 3.22 | 3.27 | 3.14 | 3.23 | 3.2 |
| W#1 | | | | | | |
| Spin (rpm) | 2585 | 2440 | 2490 | 2530 | 2560 | 2480 |
| Distance (m) | 198.5 | 201.2 | 200.2 | 199.8 | 199.0 | 200.5 |
| SW spin (rpm) | 5660 | 5550 | 5560 | 5600 | 5600 | 5600 |

As shown in Tables I-10 to I-13, the golf balls according to Examples are excellent in various performance characteristics. From the results of evaluation, advantages of the present invention are clear.

### [Experiment 2]

### [Example II-1]

A rubber composition was obtained by kneading 100 parts by weight of a high-cis polybutadiene (trade name "BR-730", manufactured by JSR Corporation), 34 parts by weight of magnesium oxide (trade name "MAGSARAT 150ST", manufactured by Kyowa Chemical Industry Co., Ltd.), 28 parts by weight of methacrylic acid, and 0.75 parts by weight of dicumyl peroxide. This rubber composition was placed into a mold including upper and lower mold halves each having a hemispherical cavity, and heated at 170°C for 25 minutes to obtain a center with a diameter of 15 mm.

A rubber composition was obtained by kneading 100 parts by weight of a high-cis polybutadiene (the aforementioned "BR-730"), 26.0 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.2 parts by weight of 2-thionaphthol, 10 parts by weight of zinc stearate, and 0.75 parts by weight of dicumyl peroxide. Half shells were formed from this rubber composition. The center was covered with two of these half shells. The center and the half shells were placed into a mold including upper and lower mold halves each having a hemispherical cavity, and heated at 150°C for 20 minutes to obtain a core with a diameter of 39.1 mm. An envelope layer was formed from the rubber composition. The amount of barium sulfate was adjusted such that the specific gravity of the envelope layer coincides with the specific gravity of the center and the weight of a golf ball is 45.4 g.

A resin composition was obtained by kneading 26 parts by weight of an ionomer resin (the aforementioned "Himilan AM7337"), 40 parts by weight of another ionomer resin (the aforementioned "Himilan AM7329"), 34 parts by weight of a styrene block-containing thermoplastic elastomer (the aforementioned "Rabalon T3221C"), 6 parts by weight of titanium dioxide with a twin-screw kneading extruder. The core was placed into a mold including upper and lower mold halves each having a hemispherical cavity. The resin composition was injected around the core by injection molding to form an inner cover with a thickness of 1.0 mm.

A resin composition was obtained by kneading 5 parts by weight of an ionomer resin (the aforementioned "Himilan AM7337"), 10 parts by weight of another ionomer resin (the aforementioned "Himilan 1555"), 55 parts by weight of still another ionomer resin (the aforementioned "Himilan AM7329"), 30 parts by weight of an ethylene-methacrylic acid copolymer (the aforementioned "NUCREL N1050H"), 3 parts by weight of titanium dioxide, and 0.2 parts by weight of an ultraviolet absorber (trade name "TINUVIN 770", manufactured by Ciba Japan K.K.) with a twin-screw kneading extruder. The sphere consisting of the core and the inner cover was placed into a final mold having a large number of pimples on its cavity face. The resin composition was injected around the sphere by injection molding to form an outer cover with a thickness of 0.8 mm. Dimples having a shape that is the inverted shape of the pimples were formed on the outer cover. A clear paint including a two-component curing type polyurethane as a base material was applied to this outer cover to obtain a golf ball of Example II-1 with a diameter of 42.7 mm. [Examples II-2 to II-16 and Comparative Examples II-1 to II-6]

Golf balls of Examples II-2 to II-16 and Comparative Examples II-1 to II-6 were obtained in the same manner as Example II-1, except the specifications of the center, the envelope layer, the inner cover, and the outer cover were as shown in Tables II-11 to II-15 below. The composition of the center is shown in detail in Table II-1 below. The composition of the envelope layer is shown in detail in Tables II-2 and II-3 below. The compositions of the inner cover and the outer cover are shown in detail in Tables II-4 and II-5 below. A hardness distribution of the core is shown in Tables II-6 to II-10 below.

### [Hit with Wood Club (W#5)]

A wood club (trade name "XXIO", manufactured by DUNLOP SPORTS CO. LTD., shaft hardness: R, loft angle: 18.0°) was attached to a swing machine manufactured by True Temper Co. A golf ball was hit under the condition of a head speed of 37 m/sec. The spin rate was measured immediately after the hit. Furthermore, the distance from the launch point to the stop point was measured. The average value of data obtained by 10 measurements is shown in Tables II-11 to II-15 below.

### [Feel at Impact with Wood Club (W#5)]

Ten golf players hit golf balls with wood clubs (trade name "XXIO", manufactured by DUNLOP SPORTS CO. LTD., shaft hardness: R, loft angle: 18.0°). The feel at impact was evaluated on the basis of the following criteria.
- A:: very favorable (soft)
- B:: favorable (soft)
- C:: slightly poor (slightly hard)
- D:: poor (hard)

**Table II-1 Composition of Center (parts by weight)**

| Type | A | B | C |
|---|---|---|---|
| BR-730 | 100 | 100 | 100 |
| MAGSARAT 150ST | 34 | - | - |
| Methacrylic acid | 28 | - | - |
| Sanceler SR | - | 20 | 26 |
| Zinc oxide | - | 5 | 5 |
| Barium sulfate | - | * | * |
| 2-thionaphthol | - | 0.2 | 0.2 |
| Zinc octoate | - | 5 | - |
| Zinc stearate | - | - | 10 |
| Dicumyl peroxide | 0.75 | 0.75 | 0.75 |
| Amount of acid/salt | 0 | 5 | 10 |

| | | | |
|---|---|---|---|
| * Appropriate amount | | | |

**Table II-2 Composition of Envelope Layer (parts by weight)**

| Type | E1 | E2 | E3 | E4 | E5 | E6 |
|---|---|---|---|---|---|---|
| BR-730 | 100 | 100 | 100 | 100 | 100 | 100 |
| Sanceler SR | 26.0 | 27.5 | 29.5 | 31.5 | 27.0 | 26.5 |
| Zinc oxide | 5 | 5 | 5 | 5 | 5 | 5 |
| Barium sulfate | * | * | * | * | * | * |
| 2-thionaphthol | 0.2 | 0.2 | 0.2 | 0.2 | 0.2 | 0.2 |
| Zinc octoate | - | - | - | - | - | - |
| Zinc laurate | - | - | - | - | - | - |
| Zinc myristate | - | - | - | - | - | - |
| Zinc stearate | 10 | 20 | 30 | 40 | - | 0.5 |
| Dicumyl peroxide | 0.75 | 0.75 | 0.75 | 0.75 | 0.75 | 0.75 |
| Amount of acid/salt | 10 | 20 | 30 | 40 | 0 | 0.5 |

| | | | | | | |
|---|---|---|---|---|---|---|
| * Appropriate amount | | | | | | |

**Table II-3 Composition of Envelope Layer (parts by weight)**

| Type | E7 | E8 | E9 | E10 | E11 |
|---|---|---|---|---|---|
| BR-730 | 100 | 100 | 100 | 100 | 100 |
| Sanceler SR | 25.5 | 25.0 | 25.5 | 26.0 | 25.5 |
| Zinc oxide | 5 | 5 | 5 | 5 | 5 |
| Barium sulfate | * | * | * | * | * |
| 2-thionaphthol | 0.2 | 0.2 | 0.2 | 0.2 | 0.2 |
| Zinc octoate | 2.5 | 5 | - | - | - |
| Zinc laurate | - | - | 10 | - | - |
| Zinc myristate | - | - | - | 5 | 10 |
| Zinc stearate | - | - | - | - | - |
| Dicumyl peroxide | 0.75 | 0.75 | 0.75 | 0.75 | 0.75 |
| Amount of acid/salt | 2.5 | 5 | 10 | 5 | 10 |

| | | | | | |
|---|---|---|---|---|---|
| * Appropriate amount | | | | | |

The details of the compounds listed in Tables II-1 to II-3 are as follows.
BR-730: a high-cis polybutadiene manufactured by JSR Corporation (cis-1,4-bond content: 96% by weight, 1,2-vinyl bond content: 1.3% by weight, Mooney viscosity (ML₁₊₄ (100°C)): 55, molecular weight distribution (Mw/Mn): 3)
MAGSARAT 150ST: magnesium oxide manufactured by Kyowa Chemical Industry Co., Ltd.
Methacrylic acid: a product of MITSUBISHI RAYON CO., LTD.
Sanceler SR: zinc diacrylate manufactured by SANSHIN CHEMICAL INDUSTRY CO., LTD. (a product coated with 10% by weight of stearic acid)
Zinc oxide: trade name "Ginrei R" manufactured by Toho Zinc Co., Ltd.
Barium sulfate : trade name "Barium Sulfate BD" manufactured by Sakai Chemical Industry Co., Ltd.
2-thionaphthol: a product of Tokyo Chemical Industry Co., Ltd.
Zinc octoate: a product of Mitsuwa Chemicals Co., Ltd. (purity: 99% or greater)
Zinc stearate: a product of Wako Pure Chemical Industries, Ltd. (purity: 99% or greater)
Zinc laurate: a product of Mitsuwa Chemicals Co., Ltd. (purity: 99% or greater)
Zinc myristate: a product of NOF Corporation (purity: 90 or greater)
Dicumyl peroxide: a product of NOF Corporation

**Table II-4 Compositions of Inner Cover and Outer Cover (parts by weight)**

| Type | C1 | C2 | C3 | C4 |
|---|---|---|---|---|
| Himilan AM7337 | 5 | 30 | - | 51 |
| Himilan 1555 | 10 | - | - | - |
| Himilan 1605 | - | - | 50 | - |
| Himilan AM7329 | 55 | 30 | 50 | 40 |
| NUCREL N1050H | 30 | - | - | - |
| Rabalon T3221C | - | 40 | - | 9 |
| Titanium dioxide | 3 | 6 | 4 | 6 |
| TINUVIN 770 | 0.2 | 0.2 | - | - |

**Table II-5 Compositions of Inner Cover and Outer Cover (parts by weight)**

| Type | C5 | C6 | C7 | C8 |
|---|---|---|---|---|
| Himilan AM7337 | 40 | 24 | 26 | 26 |
| Himilan 1555 | - | - | - | - |
| Himilan 1605 | - | - | - | - |
| Himilan AM7329 | 40 | 50 | 40 | 26 |
| NUCREL N1050H | - | - | - | - |
| Rabalon T3221C | 20 | 26 | 34 | 48 |
| Titanium dioxide | 6 | 6 | 6 | 6 |
| TINUVIN 770 | - | - | - | - |

**Table II-6 Hardness Distribution of Core (JIS-C hardness)**

| | Ex. II-1 | Ex. II-2 | Ex. II-3 | Ex. II-4 | Ex. II-5 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(8.0) | 64.6 | 64.6 | 65.2 | 63.8 | 64.4 |
| H(10.0) | 67.0 | 67.0 | 67.4 | 67.9 | 66.4 |
| H(12.5) | 71.8 | 71.8 | 71.0 | 73.8 | 71.0 |
| H(15.0) | 76.0 | 76.0 | 75.3 | 77.8 | 77.0 |
| H(17.5) | 79.5 | 79.5 | 80.6 | 82.0 | 80.7 |
| Hs | 83.0 | 83.0 | 84.1 | 84.9 | 83.3 |

**Table II-7 Hardness Distribution of Core (JIS-C hardness)**

| | Ex. II-6 | Ex. II-7 | Ex. II-8 | Ex. II-9 | Ex. II-10 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(8.0) | 67.0 | 65.5 | 64.6 | 64.6 | 64.6 |
| H(10.0) | 68.5 | 67.4 | 67.0 | 67.0 | 67.0 |
| H(12.5) | 70.1 | 71.8 | 71.8 | 71.8 | 71.8 |
| H(15.0) | 76.7 | 77.5 | 76.0 | 76.0 | 76.0 |
| H(17.5) | 80.5 | 81.3 | 79.5 | 79.5 | 79.5 |
| Hs | 83.4 | 84.5 | 83.0 | 83.0 | 82.5 |

**Table II-8 Hardness Distribution of Core (JIS-C hardness)**

| | Ex. II-11 | Ex. II-12 | Ex. II-13 | Ex. II-14 | Ex. II-15 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(8.0) | 64.6 | 62.8 | 64.0 | 68.8 | 64.3 |
| H(10.0) | 67.0 | 66.6 | 66.8 | 70.0 | 67.0 |
| H(12.5) | 71.8 | 73.7 | 71.0 | 71.2 | 70.4 |
| H(15.0) | 76.0 | 75.4 | 72.1 | 74.8 | 70.5 |
| H(17.5) | 79.5 | 78.2 | 73.0 | 78.8 | 68.5 |
| Hs | 82.1 | 81.6 | 79.1 | 82.9 | 70.7 |

**Table II-9 Hardness Distribution of Core (JIS-C hardness)**

| | Ex. II-16 |
|---|---|
| H(0.0) | 55.0 |
| H(2.5) | 58.5 |
| H(5.0) | 60.5 |
| H(7.5) | 62.5 |
| H(9.5) | 65.0 |
| H(10.5) | 68.6 |
| H(12.5) | 70.6 |
| H(15.0) | 74.1 |
| H(17.5) | 79.0 |
| Hs | 83.0 |

**Table II-10 Hardness Distribution of Core (JIS-C hardness)**

| | Comp. Ex. II-1 | Comp. Ex. II-2 | Comp. Ex. II-3 | Comp. Ex. II-4 | Comp. Ex. II-5 | Comp. Ex. II-6 |
|---|---|---|---|---|---|---|
| H(0.0) | 55.0 | 55.0 | 55.0 | 54.0 | 54.0 | 55.0 |
| H(2.5) | 56.0 | 56.0 | 56.0 | 59.8 | 59.8 | 56.0 |
| H(5.0) | 58.0 | 58.0 | 58.0 | 63.0 | 63.0 | 58.0 |
| H(7.0) | 60.0 | 60.0 | 60.0 | 64.6 | 64.6 | 60.0 |
| H(8.0) | 64.6 | 64.6 | 64.6 | 64.6 | 64.6 | 67.7 |
| H(10.0) | 67.0 | 67.0 | 67.0 | 67.0 | 67.0 | 68.6 |
| H(12.5) | 71.8 | 71.8 | 71.8 | 71.8 | 71.8 | 70.6 |
| H(15.0) | 76.0 | 76.0 | 76.0 | 76.0 | 76.0 | 74.1 |
| H(17.5) | 79.5 | 79.5 | 79.5 | 79.5 | 79.5 | 79.0 |
| Hs | 83.0 | 83.0 | 83.0 | 83.0 | 83.0 | 83.0 |

**Table II-11 Results of Evaluation**

| | Ex. II-1 | Ex. II-2 | Ex. II-3 | Ex. II-4 | Ex. II-5 |
|---|---|---|---|---|---|
| Center | | | | | |
| Composition | A | A | A | A | A |
| Diameter (mm) | 15.0 | 15.0 | 15.0 | 15.0 | 15.0 |
| Envelope layer | | | | | |
| Composition | E1 | E1 | E7 | E8 | E9 |
| Core | | | | | |
| Hs - H(0.0) | 28.0 | 28.0 | 29.1 | 29.9 | 28.3 |
| Diameter (mm) | 39.1 | 39.1 | 39.1 | 39.1 | 39.1 |
| Dc (mm) | 3.90 | 3.90 | 3.92 | 3.88 | 3.90 |
| Inner cover | | | | | |
| Composition | C7 | C8 | C6 | C6 | C6 |
| Ti (mm) | 1.0 | 1.0 | 1.0 | 1.0 | 1.0 |
| Hi (JIS-C) | 76.0 | 65.0 | 83.0 | 83.0 | 83.0 |
| Hardness (Shore D) | 45.0 | 35.0 | 52.0 | 52.0 | 52.0 |
| Outer cover | | | | | |
| Composition | C1 | C1 | C1 | C1 | C1 |
| To (mm) | 0.8 | 0.8 | 0.8 | 0.8 | 0.8 |
| Ho (JIS-C) | 92.0 | 92.0 | 92.0 | 92.0 | 92.0 |
| Hardness (Shore D) | 61.0 | 61.0 | 61.0 | 61.0 | 61.0 |
| Ti + To (mm) | 1.8 | 1.8 | 1.8 | 1.8 | 1.8 |
| Ho - Hs (JIS-C) | 9.0 | 9.0 | 7.9 | 7.1 | 8.3 |
| Ho - Hi (JIS-C) | 16.0 | 27.0 | 9.0 | 9.0 | 9.0 |
| Db (mm) | 3.27 | 3.30 | 3.29 | 3.25 | 3.27 |
| W#5 spin (rpm) | 3780 | 3790 | 3740 | 3725 | 3750 |
| W#5 distance(m) | 180.9 | 180.7 | 181.3 | 181.5 | 181.1 |
| W#5 feel | A | A | B | B | B |

**Table II-12 Results of Evaluation**

| | Ex. II-6 | Ex. II-7 | Ex. II-8 | Ex. II-9 | Ex. II-10 |
|---|---|---|---|---|---|
| Center | | | | | |
| Composition | A | A | A | A | A |
| Diameter (mm) | 15.0 | 15.0 | 15.0 | 15.0 | 15.0 |
| Envelope layer | | | | | |
| Composition | E10 | E11 | E1 | E1 | E1 |
| Core | | | | | |
| Hs - H(0.0) | 28.4 | 29.5 | 28.0 | 28.0 | 27.5 |
| Diameter (mm) | 39.1 | 39.1 | 39.1 | 39.1 | 38.5 |
| Dc (mm) | 3.91 | 3.89 | 3.90 | 3.90 | 3.90 |
| Inner cover | | | | | |
| Composition | C6 | C6 | C5 | C4 | C5 |
| Ti (mm) | 1.0 | 1.0 | 1.0 | 1.0 | 1.0 |
| Hi (JIS-C) | 83.0 | 83.0 | 85.0 | 89.0 | 85.0 |
| Hardness (Shore D) | 52.0 | 52.0 | 54.0 | 58.0 | 54.0 |
| Outer cover | | | | | |
| Composition | C1 | C1 | C1 | C1 | C1 |
| To (mm) | 0.8 | 0.8 | 0.8 | 0.8 | 1.1 |
| Ho (JIS-C) | 92.0 | 92.0 | 92.0 | 92.0 | 92.0 |
| Hardness (Shore D) | 61.0 | 61.0 | 61.0 | 61.0 | 61.0 |
| Ti + To (mm) | 1.8 | 1.8 | 1.8 | 1.8 | 2.1 |
| Ho - Hs (JIS-C) | 8.6 | 7.5 | 9.0 | 9.0 | 9.5 |
| Ho - Hi (JIS-C) | 9.0 | 9.0 | 7.0 | 3.0 | 7.0 |
| Db (mm) | 3.28 | 3.26 | 3.22 | 3.27 | 3.22 |
| W#5 spin (rpm) | 3765 | 3745 | 3715 | 3695 | 3730 |
| W#5 distance (m) | 181.0 | 181.2 | 181.6 | 181.9 | 181.4 |
| W#5 feel | B | B | B | B | B |

**Table II-13 Results of Evaluation**

| | Ex. II-11 | Ex. II-12 | Ex. II-13 | Ex. II-14 | Ex. II-15 |
|---|---|---|---|---|---|
| Center | | | | | |
| Composition | A | A | A | A | A |
| Diameter (mm) | 15.0 | 15.0 | 15.0 | 15.0 | 15.0 |
| Envelope layer | | | | | |
| Composition | E1 | E2 | E3 | E6 | E4 |
| Core | | | | | |
| Hs - H(0.0) | 27.1 | 26.6 | 24.1 | 27.9 | 15.7 |
| Diameter (mm) | 37.9 | 39.1 | 39.1 | 39.1 | 39.1 |
| Dc (mm) | 3.90 | 3.91 | 3.90 | 3.91 | 3.91 |
| Inner cover | | | | | |
| Composition | C5 | C5 | C5 | C6 | C5 |
| Ti (mm) | 1.0 | 1.0 | 1.0 | 1.0 | 1.0 |
| Hi (JIS-C) | 85.0 | 85.0 | 85.0 | 83.0 | 85.0 |
| Hardness (Shore D) | 54.0 | 54.0 | 54.0 | 52.0 | 54.0 |
| Outer cover | | | | | |
| Composition | C1 | C1 | C1 | C1 | C1 |
| To (mm) | 1.4 | 0.8 | 0.8 | 0.8 | 0.8 |
| Ho (JIS-C) | 92.0 | 92.0 | 92.0 | 92.0 | 92.0 |
| Hardness (Shore D) | 61.0 | 61.0 | 61.0 | 61.0 | 61.0 |
| Ti + To (mm) | 2.4 | 1.8 | 1.8 | 1.8 | 1.8 |
| Ho - Hs (JIS-C) | 9.9 | 10.4 | 12.9 | 9.1 | 21.3 |
| Ho - Hi (JIS-C) | 7.0 | 7.0 | 7.0 | 9.0 | 7.0 |
| Db (mm) | 3.20 | 3.25 | 3.24 | 3.28 | 3.25 |
| W#5 spin(rpm) | 3710 | 3720 | 3735 | 3795 | 3795 |
| W#5 distance (m) | 181.7 | 181.5 | 181.4 | 180.5 | 180.5 |
| W#5 feel | B | B | B | B | B |

**Table II-14 Results of Evaluation**

| | Ex. II-16 | Comp. Ex. II-1 | Comp. Ex. II-2 | Comp. Ex. II-3 | Comp. Ex. II-4 |
|---|---|---|---|---|---|
| Center | | | | | |
| Composition | B | A | A | A | C |
| Diameter (mm) | 20.0 | 15.0 | 15.0 | 15.0 | 39.1 |
| Envelope layer | | | | | |
| Composition | E5 | E1 | E1 | E1 | - |
| Core | | | | | |
| Hs - H(0.0) | 28.0 | 28.0 | 28.0 | 28.0 | 29.0 |
| Diameter (mm) | 39.1 | 39.1 | 39.1 | 39.1 | 39.1 |
| Dc (mm) | 3.93 | 3.90 | 3.90 | 3.90 | 3.85 |
| Inner cover | | | | | |
| Composition | C5 | C7 | C4 | C3 | C6 |
| Ti (mm) | 1.0 | 1.0 | 1.0 | 1.0 | 1.0 |
| Hi (JIS-C) | 85.0 | 76.0 | 89.0 | 96.0 | 83.0 |
| Hardness (Shore D) | 54.0 | 45.0 | 58.0 | 65.0 | 52.0 |
| Outer cover | | | | | |
| Composition | C1 | C2 | C2 | C1 | C1 |
| To (mm) | 1.1 | 0.8 | 0.8 | 0.8 | 0.8 |
| Ho (JIS-C) | 92.0 | 71.0 | 71.0 | 92.0 | 92.0 |
| Hardness (Shore D) | 61.0 | 40.0 | 40.0 | 61.0 | 61.0 |
| Ti + To (mm) | 2.1 | 1.8 | 1.8 | 1.8 | 1.8 |
| Ho - Hs (JIS-C) | 9.0 | -12.0 | -12.0 | 9.0 | 9.0 |
| Ho - Hi (JIS-C) | 7.0 | -5.0 | -18.0 | -4.0 | 9.0 |
| Db (mm) | 3.27 | 3.35 | 3.27 | 3.17 | 3.22 |
| W#5 spin(rpm) | 3785 | 4010 | 3900 | 3705 | 3930 |
| W#5 distance (m) | 180.8 | 179.0 | 179.6 | 181.8 | 179.5 |
| W#5 feel | B | B | C | D | C |

**Table II-15 Results of Evaluation**

| | Comp. Ex. II-5 | Comp. Ex. II-6 |
|---|---|---|
| Center | | |
| Composition | C | A |
| Diameter (mm) | 39.1 | 15.0 |
| Envelope layer | | |
| Composition | - | E5 |
| Core | | |
| Hs - H(0.0) | 29.0 | 28.0 |
| Diameter (mm) | 39.1 | 39.1 |
| Dc (mm) | 3.85 | 3.91 |
| Inner cover | | |
| Composition | C1 | C5 |
| Ti (mm) | 1.0 | 1.0 |
| Hi (JIS-C) | 92.0 | 85.0 |
| Hardness (Shore D) | 61.0 | 54.0 |
| Outer cover | | |
| Composition | C1 | C1 |
| To (mm) | 0.8 | 0.8 |
| Ho (JIS-C) | 92.0 | 92.0 |
| Hardness (Shore D) | 61.0 | 61.0 |
| Ti + To (mm) | 1.8 | 1.8 |
| Ho - Hs (JIS-C) | 9.0 | 9.0 |
| Ho - Hi (JIS-C) | 0.0 | 7.0 |
| Db (mm) | 3.23 | 3.25 |
| W#5 spin (rpm) | 3835 | 3850 |
| W#5 distance (m) | 180.2 | 180.0 |
| W#5 feel | D | B |

As shown in Tables II-11 to II-15, the golf balls according to Examples are excellent in various performance characteristics. From the results of evaluation, advantages of the present invention are clear.

### [Experiment 3]

### [Example III-1]

A rubber composition was obtained by kneading 100 parts by weight of a high-cis polybutadiene (trade name "BR-730", manufactured by JSR Corporation), 34 parts by weight of magnesium oxide (trade name "MAGSARAT 150ST", manufactured by Kyowa Chemical Industry Co., Ltd.), 28 parts by weight of methacrylic acid, and 0.75 parts by weight of dicumyl peroxide. This rubber composition was placed into a mold including upper and lower mold halves each having a hemispherical cavity, and heated at 170°C for 25 minutes to obtain a center with a diameter of 15 mm.

A rubber composition was obtained by kneading 100 parts by weight of a high-cis polybutadiene (the aforementioned "BR-730"), 26.0 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.2 parts by weight of 2-thionaphthol, 10 parts by weight of zinc stearate, and 0.75 parts by weight of dicumyl peroxide. Half shells were formed from this rubber composition. The center was covered with two of these half shells. The center and the half shells were placed into a mold including upper and lower mold halves each having a hemispherical cavity, and heated at 150°C for 20 minutes to obtain a core with a diameter of 37.1 mm. An envelope layer was formed from the rubber composition. The amount of barium sulfate was adjusted such that the specific gravity of the envelope layer coincides with the specific gravity of the center and the weight of a golf ball is 45.4 g.

A resin composition was obtained by kneading 40 parts by weight of an ionomer resin (the aforementioned "Himilan AM7337"), 40 parts by weight of another ionomer resin (the aforementioned "Himilan AM7329"), 20 parts by weight of a styrene block-containing thermoplastic elastomer (the aforementioned "Rabalon T3221C"), 6 parts by weight of titanium dioxide with a twin-screw kneading extruder. The core was placed into a mold including upper and lower mold halves each having a hemispherical cavity. The resin composition was injected around the core by injection molding to form an inner cover with a thickness of 1.0 mm.

A resin composition was obtained by kneading 51 parts by weight of an ionomer resin (the aforementioned "Himilan AM7337"), 40 parts by weight of another ionomer resin (the aforementioned "Himilan AM7329"), 9 parts by weight of a styrene block-containing thermoplastic elastomer (the aforementioned "Rabalon T3221C", and 6 parts by weight of titanium dioxide with a twin-screw kneading extruder. The sphere consisting of the core and the inner cover was placed into a mold including upper and lower mold halves each having a hemispherical cavity. The resin composition was injected around the sphere by injection molding to form a mid cover with a thickness of 1.0 mm.

A resin composition was obtained by kneading 5 parts by weight of an ionomer resin (the aforementioned "Himilan AM7337"), 10 parts by weight of another ionomer resin (the aforementioned "Himilan 1555"), 55 parts by weight of still another ionomer resin (the aforementioned "Himilan AM7329"), 30 parts by weight of an ethylene-methacrylic acid copolymer (the aforementioned "NUCREL N1050H"), 3 parts by weight of titanium dioxide, and 0.2 parts by weight of an ultraviolet absorber (trade name "TINUVIN 770", manufactured by Ciba Japan K.K.) with a twin-screw kneading extruder. The sphere consisting of the core, the inner cover, and the mid cover was placed into a final mold having a large number of pimples on its cavity face. The resin composition was injected around the sphere by injection molding to form an outer cover with a thickness of 0.8 mm. Dimples having a shape that is the inverted shape of the pimples were formed on the outer cover. A clear paint including a two-component curing type polyurethane as a base material was applied to this outer cover to obtain a golf ball of Example III-1 with a diameter of 42.7 mm.

### [Examples III-2 to III-15 and Comparative Examples III-1 to III-7]

Golf balls of Examples III-2 to III-15 and Comparative Examples III-1 to III-7 were obtained in the same manner as Example III-1, except the specifications of the center, the envelope layer, the inner cover, the mid cover, and the outer cover were as shown in Tables III-10 to III-14 below. The composition of the center is shown in detail in Table III-1 below. The composition of the envelope layer is shown in detail in Tables III-2 and III-3 below. The compositions of the inner cover, the mid cover, and the outer cover are shown in detail in Tables III-4 and III-5 below. A hardness distribution of the core is shown in Tables III-6 to III-9 below.

### [Hit with Middle Iron (I#5)]

A middle iron (trade name "XXIO", manufactured by DUNLOP SPORTS CO. LTD., shaft hardness: R, loft angle: 24.0°) was attached to a swing machine manufactured by True Temper Co. A golf ball was hit under the condition of a head speed of 35 m/sec. The spin rate was measured immediately after the hit. Furthermore, the distance from the launch point to the stop point was measured. The average value of data obtained by 10 measurements is shown in Tables III-10 to III-14 below.

**Table III-1 Composition of Center (parts by weight)**

| Type | A | B | C |
|---|---|---|---|
| BR-730 | 100 | 100 | 100 |
| MAGSARAT 150ST | 34 | - | - |
| Methacrylic acid | 28 | - | - |
| Sanceler SR | - | 20 | 26 |
| Zinc oxide | - | 5 | 5 |
| Barium sulfate | - | * | * |
| 2-thionaphthol | - | 0.2 | 0.2 |
| Zinc octoate | - | 5 | - |
| Zinc stearate | - | - | 10 |
| Dicumyl peroxide | 0.75 | 0.75 | 0.75 |
| Amount of acid/salt | 0 | 5 | 10 |

| | | | |
|---|---|---|---|
| * Appropriate amount | | | |

**Table III-2 Composition of Envelope Layer (parts by weight)**

| Type | E1 | E2 | E3 | E4 | E5 | E6 |
|---|---|---|---|---|---|---|
| BR-730 | 100 | 100 | 100 | 100 | 100 | 100 |
| Sanceler SR | 26.0 | 27.5 | 29.5 | 31.5 | 27.0 | 26.5 |
| Zinc oxide | 5 | 5 | 5 | 5 | 5 | 5 |
| Barium sulfate | * | * | * | * | * | * |
| 2-thionaphthol | 0.2 | 0.2 | 0.2 | 0.2 | 0.2 | 0.2 |
| Zinc octoate | - | - | - | - | - | - |
| Zinc laurate | - | - | - | - | - | - |
| Zinc myristate | - | - | - | - | - | - |
| Zinc stearate | 10 | 20 | 30 | 40 | - | 0.5 |
| Dicumyl peroxide | 0.75 | 0.75 | 0.75 | 0.75 | 0.75 | 0.75 |
| Amount of acid/salt | 10 | 20 | 30 | 40 | 0 | 0.5 |

| | | | | | | |
|---|---|---|---|---|---|---|
| * Appropriate amount | | | | | | |

**Table III-3 Composition of Envelope Layer (parts by weight)**

| Type | E7 | E8 | E9 | E10 | E11 |
|---|---|---|---|---|---|
| BR-730 | 100 | 100 | 100 | 100 | 100 |
| Sanceler SR | 25.5 | 25.0 | 25.5 | 26.0 | 25.5 |
| Zinc oxide | 5 | 5 | 5 | 5 | 5 |
| Barium sulfate | * | * | * | * | * |
| 2-thionaphthol | 0.2 | 0.2 | 0.2 | 0.2 | 0.2 |
| Zinc octoate | 2.5 | 5 | - | - | - |
| Zinc laurate | - | - | 10 | - | - |
| Zinc myristate | - | - | - | 5 | 10 |
| Zinc stearate | - | - | - | - | - |
| Dicumyl peroxide | 0.75 | 0.75 | 0.75 | 0.75 | 0.75 |
| Amount of acid/salt | 2.5 | 5 | 10 | 5 | 10 |

| | | | | | |
|---|---|---|---|---|---|
| * Appropriate amount | | | | | |

The details of the compounds listed in Tables III-1 to III-3 are as follows.
BR-730: a high-cis polybutadiene manufactured by JSR Corporation (cis-1,4-bond content: 96% by weight, 1,2-vinyl bond content: 1.3% by weight, Mooney viscosity (ML₁₊₄ (100°C)): 55, molecular weight distribution (Mw/Mn): 3)
MAGSARAT 150ST: magnesium oxide manufactured by Kyowa Chemical Industry Co., Ltd.
Methacrylic acid: a product of MITSUBISHI RAYON CO., LTD.
Sanceler SR: zinc diacrylate manufactured by SANSHIN CHEMICAL INDUSTRY CO., LTD. (a product coated with 10% by weight of stearic acid)
Zinc oxide: trade name "Ginrei R" manufactured by Toho Zinc Co., Ltd.
Barium sulfate : trade name "Barium Sulfate BD" manufactured by Sakai Chemical Industry Co., Ltd.
2-thionaphthol: a product of Tokyo Chemical Industry Co., Ltd.
Zinc octoate: a product of Mitsuwa Chemicals Co., Ltd. (purity: 99% or greater)
Zinc stearate: a product of Wako Pure Chemical Industries, Ltd. (purity: 99% or greater)
Zinc laurate: a product of Mitsuwa Chemicals Co., Ltd. (purity: 99% or greater)
Zinc myristate: a product of NOF Corporation (purity: 90 or greater)
Dicumyl peroxide: a product of NOF Corporation

**Table III-4 Composition of Cover (parts by weight)**

| Type | (a) | (b) | (c) | (d) |
|---|---|---|---|---|
| Himilan AM7337 | 5 | 51 | 45 | 40 |
| Himilan 1555 | 10 | - | - | - |
| Himilan AM7329 | 55 | 40 | 40 | 40 |
| NUCREL N1050H | 30 | - | - | - |
| Rabalon T3221C | - | 9 | 15 | 20 |
| Titanium dioxide | 3 | 6 | 6 | 6 |
| TINUVIN 770 | 0.2 | - | - | - |

**Table III-5 Composition of Cover (parts by weight)**

| Type | (e) | (f) | (g) |
|---|---|---|---|
| Himilan AM7337 | 24 | 26 | 30 |
| Himilan 1555 | - | - | - |
| Himilan AM7329 | 50 | 40 | 30 |
| NUCREL N1050H | - | - | - |
| Rabalon T3221C | 26 | 34 | 40 |
| Titanium dioxide | 6 | 6 | 6 |
| TINUVIN 770 | - | - | 0.2 |

**Table III-6 Hardness Distribution of Core (JIS-C hardness)**

| | Ex. III-1 | Ex. III-2 | Ex. III-3 | Ex. III-4 | Ex. III-5 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(7.5) | - | - | - | - | - |
| H(8.0) | 64.6 | 64.6 | 64.6 | 64.6 | 64.6 |
| H(9.5) | - | - | - | - | - |
| H(10.0) | 67.0 | 67.0 | 67.0 | 67.0 | 67.0 |
| H(10.5) | - | - | - | - | - |
| H(12.5) | 71.8 | 71.8 | 71.8 | 71.8 | 71.8 |
| H(15.0) | 76.0 | 76.0 | 76.0 | 76.0 | 76.0 |
| H(17.5) | 79.5 | 79.5 | 79.5 | 79.5 | 79.5 |
| Hs | 82.5 | 82.5 | 82.5 | 82.0 | 81.5 |

**Table III-7 Hardness Distribution of Core (JIS-C hardness)**

| | Ex. III-6 | Ex. III-7 | Ex. III-8 | Ex. III-9 | Ex. III-10 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(7.5) | - | - | - | - | - |
| H(8.0) | 62.8 | 64.0 | 64.3 | 68.8 | 65.2 |
| H(9.5) | - | - | - | - | - |
| H(10.0) | 66.6 | 66.8 | 67.0 | 70.0 | 67.4 |
| H(10.5) | - | - | - | - | - |
| H(12.5) | 73.7 | 71.0 | 70.4 | 71.2 | 71.0 |
| H(15.0) | 75.4 | 72.1 | 70.5 | 74.8 | 75.3 |
| H(17.5) | 78.2 | 73.0 | 68.5 | 78.8 | 80.6 |
| Hs | 81.1 | 78.6 | 70.2 | 82.4 | 83.6 |

**Table III-8 Hardness Distribution of Core (JIS-C hardness)**

| | Ex. III-11 | Ex. III-12 | Ex. III-13 | Ex. III-14 | Ex. III-15 |
|---|---|---|---|---|---|
| H(0.0) | 55.0 | 55.0 | 55.0 | 55.0 | 55.0 |
| H(2.5) | 56.0 | 56.0 | 56.0 | 56.0 | 58.5 |
| H(5.0) | 58.0 | 58.0 | 58.0 | 58.0 | 60.5 |
| H(7.0) | 60.0 | 60.0 | 60.0 | 60.0 | - |
| H(7.5) | - | - | - | - | 62.5 |
| H(8.0) | 63.8 | 64.4 | 67.0 | 65.5 | - |
| H(9.5) | - | - | - | - | 65.0 |
| H(10.0) | 67.9 | 66.4 | 68.5 | 67.4 | - |
| H(10.5) | - | - | - | - | 68.6 |
| H(12.5) | 73.8 | 71.0 | 70.1 | 71.8 | 70.6 |
| H(15.0) | 77.8 | 77.0 | 76.7 | 77.5 | 74.1 |
| H(17.5) | 82.0 | 80.7 | 80.5 | 81.3 | 79.0 |
| Hs | 84.4 | 82.8 | 82.9 | 84.0 | 82.5 |

**Table III-9 Hardness Distribution of Core (JIS-C hardness)**

| | Comp. Ex. III-1 | Comp. Ex. III-2 | Comp. Ex. III-3 | Comp. Ex. III-4 | Comp. Ex. III-5 | Comp. Ex. III-6 | Comp. Ex. III-7 |
|---|---|---|---|---|---|---|---|
| H(0.0) | 55.0 | 55.0 | 54.0 | 55.0 | 55.0 | 55.0 | 55.0 |
| H(2.5) | 56.0 | 56.0 | 59.8 | 56.0 | 56.0 | 56.0 | 56.0 |
| H(5.0) | 58.0 | 58.0 | 63.0 | 58.0 | 58.0 | 58.0 | 58.0 |
| H(7.0) | 60.0 | 60.0 | - | 60.0 | 60.0 | 60.0 | 60.0 |
| H(7.5) | - | - | 64.6 | - | - | - | - |
| H(8.0) | 64.6 | 64.6 | - | 64.6 | 64.6 | 67.7 | 64.6 |
| H(9.5) | - | - | - | - | - | - | - |
| H(10.0) | 67.0 | 67.0 | 67.0 | 67.0 | 67.0 | 68.6 | 67.0 |
| H(10.5) | - | - | - | - | - | - | - |
| H(12.5) | 71.8 | 71.8 | 71.8 | 71.8 | 71.8 | 70.6 | 71.8 |
| H(15.0) | 76.0 | 76.0 | 76.0 | 76.0 | 76.0 | 74.1 | 76.0 |
| H(17.5) | 79.5 | 79.5 | 79.5 | 79.5 | 79.5 | 79.0 | 79.5 |
| Hs | 82.5 | 82.5 | 82.5 | 82.5 | 82.5 | 82.5 | 82.5 |

**Table III-10 Results of Evaluation**

| | Ex. III-1 | Ex. III-2 | Ex. III-3 | Ex. III-4 | Ex. III-5 |
|---|---|---|---|---|---|
| Center | A | A | A | A | A |
| Diameter (mm) | 15 | 15 | 15 | 15 | 15 |
| Envelope layer | E1 | E1 | E1 | E1 | E1 |
| Core | | | | | |
| Hs - H(0.0) | 27.5 | 27.5 | 27.5 | 27.0 | 26.5 |
| Diameter (mm) | 37.1 | 37.1 | 37.1 | 36.5 | 35.9 |
| Dc (mm) | 3.90 | 3.90 | 3.90 | 3.90 | 3.90 |
| Inner cover | (d) | (c) | (b) | (d) | (d) |
| Ti (mm) | 1.0 | 1.0 | 1.0 | 1.0 | 1.0 |
| Hi (JIS-C) | 85.0 | 87.0 | 89.0 | 85.0 | 85.0 |
| Mid cover | (b) | (b) | (d) | (b) | (b) |
| Tm (mm) | 1.0 | 1.0 | 1.0 | 1.0 | 1.0 |
| Hm (JIS-C) | 89.0 | 89.0 | 85.0 | 89.0 | 89.0 |
| Outer cover | (a) | (a) | (a) | (a) | (a) |
| To (mm) | 0.8 | 0.8 | 0.8 | 1.1 | 1.4 |
| Ho (JIS-C) | 92.0 | 92.0 | 92.0 | 92.0 | 92.0 |
| Ti + Tm + To (mm) | 2.8 | 2.8 | 2.8 | 3.1 | 3.4 |
| Hi - Hs (JIS-C) | 2.5 | 4.5 | 6.5 | 3.0 | 3.5 |
| Ho - Hi (JIS-C) | 7.0 | 5.0 | 3.0 | 7.0 | 7.0 |
| Hm - Hi (JIS-C) | 6.0 | 2.0 | -4.0 | 4.0 | 4.0 |
| Ho - Hm (JIS-C) | 3.0 | 3.0 | 7.0 | 3.0 | 3.0 |
| Db (mm) | 2.93 | 2.92 | 2.93 | 2.91 | 2.89 |
| I#5 spin (rpm) | 3860 | 3845 | 3850 | 3870 | 3855 |
| I#5 distance (m) | 151.0 | 151.3 | 151.2 | 150.8 | 151.1 |

**Table III-11 Results of Evaluation**

| | Ex. III-6 | Ex. III-7 | Ex. III-8 | Ex. III-9 | Ex. III-10 |
|---|---|---|---|---|---|
| Center | A | A | A | A | A |
| Diameter (mm) | 15 | 15 | 15 | 15 | 15 |
| Envelope layer | E2 | E3 | E4 | E6 | E7 |
| Core | | | | | |
| Hs - H(0.0) | 26.1 | 23.6 | 15.2 | 27.4 | 28.6 |
| Diameter (mm) | 37.1 | 37.1 | 37.1 | 37.1 | 37.1 |
| Dc (mm) | 3.91 | 3.90 | 3.91 | 3.85 | 3.94 |
| Inner cover | (d) | (d) | (d) | (c) | (c) |
| Ti (mm) | 1.0 | 1.0 | 1.0 | 1.0 | 1.0 |
| Hi (JIS-C) | 85.0 | 85.0 | 85.0 | 87.0 | 87.0 |
| Mid cover | (b) | (b) | (b) | (b) | (b) |
| Tm (mm) | 1.0 | 1.0 | 1.0 | 1.0 | 1.0 |
| Hm (JIS-C) | 89.0 | 89.0 | 89.0 | 89.0 | 89.0 |
| Outer cover | (a) | (a) | (a) | (a) | (a) |
| To (mm) | 0.8 | 0.8 | 0.8 | 0.8 | 0.8 |
| Ho (JIS-C) | 92.0 | 92.0 | 92.0 | 92.0 | 92.0 |
| Ti + Tm + To (mm) | 2.8 | 2.8 | 2.8 | 2.8 | 2.8 |
| Hi - Hs (JIS-C) | 3.9 | 6.4 | 14.8 | 4.6 | 3.4 |
| Ho - Hi (JIS-C) | 7.0 | 7.0 | 7.0 | 5.0 | 5.0 |
| Hm - Hi (JIS-C) | 4.0 | 4.0 | 4.0 | 2.0 | 2.0 |
| Ho - Hm (JIS-C) | 3.0 | 3.0 | 3.0 | 3.0 | 3.0 |
| Db (mm) | 2.94 | 2.98 | 3.04 | 2.87 | 2.96 |
| I#5 spin(rpm) | 3865 | 3875 | 3890 | 3885 | 3825 |
| I#5 distance(m) | 150.9 | 150.7 | 150.4 | 150.5 | 151.7 |

**Table III-12 Results of Evaluation**

| | Ex. III-11 | Ex. III-12 | Ex. III-13 | Ex. III-14 | Ex. III-15 |
|---|---|---|---|---|---|
| Center | A | A | A | A | B |
| Diameter (mm) | 15 | 15 | 15 | 15 | 20 |
| Envelope layer | E8 | E9 | E10 | E11 | E5 |
| Core | | | | | |
| Hs - H(0.0) | 29.4 | 27.8 | 27.9 | 29.0 | 27.5 |
| Diameter (mm) | 37.1 | 37.1 | 37.1 | 37.1 | 37.1 |
| Dc (mm) | 3.83 | 3.95 | 3.87 | 3.82 | 3.93 |
| Inner cover | (c) | (c) | (c) | (c) | (d) |
| Ti (mm) | 1.0 | 1.0 | 1.0 | 1.0 | 1.0 |
| Hi (JIS-C) | 87.0 | 87.0 | 87.0 | 87.0 | 85.0 |
| Mid cover | (b) | (b) | (b) | (b) | (b) |
| Tm (mm) | 1.0 | 1.0 | 1.0 | 1.0 | 1.0 |
| Hm (JIS-C) | 89.0 | 89.0 | 89.0 | 89.0 | 89.0 |
| Outer cover | (a) | (a) | (a) | (a) | (a) |
| To (mm) | 0.8 | 0.8 | 0.8 | 0.8 | 0.8 |
| Ho (JIS-C) | 92.0 | 92.0 | 92.0 | 92.0 | 92.0 |
| Ti + Tm + To (mm) | 2.8 | 2.8 | 2.8 | 2.8 | 2.8 |
| Hi - Hs (JIS-C) | 2.6 | 4.2 | 4.1 | 3.0 | 2.5 |
| Ho - Hi (JIS-C) | 5.0 | 5.0 | 5.0 | 5.0 | 7.0 |
| Hm - Hi (JIS-C) | 2.0 | 2.0 | 2.0 | 2.0 | 4.0 |
| Ho - Hm (JIS-C) | 3.0 | 3.0 | 3.0 | 3.0 | 3.0 |
| Db (mm) | 2.85 | 2.97 | 2.89 | 2.84 | 2.96 |
| I#5 spin(rpm) | 3805 | 3835 | 3840 | 3830 | 3880 |
| I#5 distance(m) | 151.9 | 151.5 | 151.4 | 151.6 | 150.6 |

**Table III-13 Results of Evaluation**

| | Comp. Ex. III-1 | Comp. Ex. III-2 | Comp. Ex. III-3 | Comp. Ex. III-4 | Comp. Ex. III-5 |
|---|---|---|---|---|---|
| Center | A | A | C | A | A |
| Diameter (mm) | 15 | 15 | 37.1 | 15 | 15 |
| Envelope layer | E1 | E1 | - | E1 | E1 |
| Core | | | | | |
| Hs - H(0.0) | 27.5 | 27.5 | 28.5 | 27.5 | 27.5 |
| Diameter (mm) | 37.1 | 37.1 | 37.1 | 37.1 | 37.1 |
| Dc (mm) | 3.90 | 3.90 | 3.85 | 3.90 | 3.90 |
| Inner cover | (e) | (f) | (a) | (a) | (e) |
| Ti (mm) | 1.0 | 1.0 | 1.0 | 1.0 | 1.4 |
| Hi (JIS-C) | 83.0 | 76.0 | 92.0 | 92.0 | 83.0 |
| Mid cover | (b) | (b) | (a) | (a) | (a) |
| Tm (mm) | 1.0 | 1.0 | 1.0 | 1.0 | 0.6 |
| Hm (JIS-C) | 89.0 | 89.0 | 92.0 | 92.0 | 92.0 |
| Outer cover | (a) | (a) | (a) | (a) | (a) |
| To (mm) | 0.8 | 0.8 | 0.8 | 0.8 | 0.8 |
| Ho (JIS-C) | 92.0 | 92.0 | 92.0 | 92.0 | 92.0 |
| Ti + Tm + To (mm) | 2.8 | 2.8 | 2.8 | 2.8 | 2.8 |
| Hi - Hs (JIS-C) | 0.5 | -6.5 | 9.5 | 9.5 | 0.5 |
| Ho - Hi (JIS-C) | 9.0 | 16.0 | 0 | 0 | 9.0 |
| Hm - Hi (JIS-C) | 6.0 | 13.0 | 0 | 0 | 9.0 |
| Ho - Hm (JIS-C) | 3.0 | 3.0 | 0 | 0 | 0 |
| Db (mm) | 2.94 | 2.95 | 2.85 | 2.90 | 2.95 |
| I#5 spin(rpm) | 3915 | 3945 | 3920 | 3910 | 3900 |
| I#5 distance(m) | 150.0 | 149.8 | 149.9 | 150.1 | 150.2 |

**Table III-14 Results of Evaluation**

| | Comp. Ex. III-6 | Comp. Ex. III-7 |
|---|---|---|
| Center | A | A |
| Diameter (mm) | 15 | 15 |
| Envelope layer | E5 | E1 |
| Core | | |
| Hs - H(0.0) | 27.5 | 27.5 |
| Diameter (mm) | 37.1 | 37.1 |
| Dc (mm) | 3.91 | 3.90 |
| Inner cover | (d) | (d) |
| Ti (mm) | 1.0 | 1.0 |
| Hi (JIS-C) | 85.0 | 85.0 |
| Mid cover | (b) | (f) |
| Tm (mm) | 1.0 | 1.0 |
| Hm (JIS-C) | 89.0 | 76.0 |
| Outer cover | (a) | (g) |
| To (mm) | 0.8 | 0.8 |
| Ho (JIS-C) | 92.0 | 71.0 |
| Ti + Tm + To (mm) | 2.8 | 2.8 |
| Hi - Hs (JIS-C) | 2.5 | 2.5 |
| Ho - Hi (JIS-C) | 7.0 | -14.0 |
| Hm - Hi (JIS-C) | 4.0 | -9.0 |
| Ho - Hm (JIS-C) | 3.0 | -5.0 |
| Db (mm) | 2.94 | 3.05 |
| I#5 spin(rpm) | 3985 | 4085 |
| I#5 distance (m) | 149.5 | 148.7 |

As shown in Tables III-10 to III-14, the golf balls according to Examples are excellent in flight performance. From the results of evaluation, advantages of the present invention are clear.

### [Experiment 4]

### [Example IV-1]

A rubber composition was obtained by kneading 100 parts by weight of a high-cis polybutadiene (trade name "BR-730", manufactured by JSR Corporation), 34 parts by weight of magnesium oxide (trade name "MAGSARAT 150ST", manufactured by Kyowa Chemical Industry Co., Ltd.), 28 parts by weight of methacrylic acid, and 0.75 parts by weight of dicumyl peroxide. This rubber composition was placed into a mold including upper and lower mold halves each having a hemispherical cavity, and heated at 170°C for 25 minutes to obtain a center with a diameter of 15 mm.

A rubber composition was obtained by kneading 100 parts by weight of a high-cis polybutadiene (the aforementioned "BR-730"), 26.0 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.2 parts by weight of 2-thionaphthol, 10 parts by weight of zinc stearate, and 0.75 parts by weight of dicumyl peroxide. Half shells were formed from this rubber composition. The center was covered with two of these half shells. The center and the half shells were placed into a mold including upper and lower mold halves each having a hemispherical cavity, and heated at 150°C for 20 minutes to obtain a core with a diameter of 37.1 mm. An envelope layer was formed from the rubber composition. The amount of barium sulfate was adjusted such that the specific gravity of the envelope layer coincides with the specific gravity of the center and the weight of a golf ball is 45.4 g.

A resin composition was obtained by kneading 24 parts by weight of an ionomer resin (the aforementioned "Himilan AM7337"), 50 parts by weight of another ionomer resin (the aforementioned "Himilan AM7329"), 26 parts by weight of a styrene block-containing thermoplastic elastomer (the aforementioned "Rabalon T3221C"), 6 parts by weight of titanium dioxide with a twin-screw kneading extruder. The core was placed into a mold including upper and lower mold halves each having a hemispherical cavity. The resin composition was injected around the core by injection molding to form an inner cover with a thickness of 1.0 mm.

A resin composition was obtained by kneading 51 parts by weight of an ionomer resin (the aforementioned "Himilan AM7337"), 40 parts by weight of another ionomer resin (the aforementioned "Himilan AM7329"), 9 parts by weight of a styrene block-containing thermoplastic elastomer (the aforementioned "Rabalon T3221C", and 6 parts by weight of titanium dioxide with a twin-screw kneading extruder. The sphere consisting of the core and the inner cover was placed into a mold including upper and lower mold halves each having a hemispherical cavity. The resin composition was injected around the sphere by injection molding to form a mid cover with a thickness of 1.0 mm.

A resin composition was obtained by kneading 5 parts by weight of an ionomer resin (the aforementioned "Himilan AM7337"), 10 parts by weight of another ionomer resin (the aforementioned "Himilan 1555"), 55 parts by weight of still another ionomer resin (the aforementioned "Himilan AM7329"), 30 parts by weight of an ethylene-methacrylic acid copolymer (the aforementioned "NUCREL N1050H"), 3 parts by weight of titanium dioxide, and 0.2 parts by weight of an ultraviolet absorber (trade name "TINUVIN 770", manufactured by Ciba Japan K.K.) with a twin-screw kneading extruder. The sphere consisting of the core, the inner cover, and the mid cover was placed into a final mold having a large number of pimples on its cavity face. The resin composition was injected around the sphere by injection molding to form an outer cover with a thickness of 0.8 mm. Dimples having a shape that is the inverted shape of the pimples were formed on the outer cover. A clear paint including a two-component curing type polyurethane as a base material was applied to this outer cover to obtain a golf ball of Example IV-1 with a diameter of 42.7 mm.

### [Examples IV-2 to IV-15 and Comparative Examples IV-1 to IV-7]

Golf balls of Examples IV-2 to IV-15 and Comparative Examples IV-1 to IV-7 were obtained in the same manner as Example IV-1, except the specifications of the core, the envelope layer, the inner cover, the mid cover, and the outer cover were as shown in Tables IV-11 to IV-15 below. The composition of the center is shown in detail in Table IV-1 below. The composition of the envelope layer is shown in detail in Tables IV-2 and IV-3 below. The compositions of the inner cover, the mid cover, and the outer cover are shown in detail in Tables IV-4 and IV-5 below. A hardness distribution of the core is shown in Tables IV-6 to IV-10 below.

### [Hit with Driver (W#1)]

A driver with a titanium head (trade name "XXIO", manufactured by DUNLOP SPORTS CO. LTD., shaft hardness: R, loft angle: 11°) was attached to a swing machine manufactured by True Temper Co. A golf ball was hit under the condition of a head speed of 40 m/sec. The spin rate was measured immediately after the hit. Furthermore, the distance from the launch point to the stop point was measured. The average value of data obtained by 10 measurements is shown in Tables IV-11 to IV-15 below.

### [Feel at Impact with Driver (W#1)]

Ten golf players hit golf balls with drivers with titanium heads (trade name "XXIO", manufactured by DUNLOP SPORTS CO. LTD., shaft hardness: R, loft angle: 11°). The feel at impact was evaluated on the basis of the following criteria.
- A:: very favorable (soft)
- B:: favorable (soft)
- C:: slightly poor (slightly hard)
- D:: poor (hard)

**Table IV-1 Composition of Center (parts by weight)**

| Type | A | B | C |
|---|---|---|---|
| BR-730 | 100 | 100 | 100 |
| MAGSARAT 150ST | 34 | - | - |
| Methacrylic acid | 28 | - | - |
| Sanceler SR | - | 20 | 26 |
| Zinc oxide | - | 5 | 5 |
| Barium sulfate | - | * | * |
| 2-thionaphthol | - | 0.2 | 0.2 |
| Zinc octoate | - | 5 | - |
| Zinc stearate | - | - | 10 |
| Dicumyl peroxide | 0.75 | 0.75 | 0.75 |
| Amount of acid/salt | 0 | 5 | 10 |

| | | | |
|---|---|---|---|
| * Appropriate amount | | | |

**Table IV-2 Composition of Envelope Layer (parts by weight)**

| Type | E1 | E2 | E3 | E4 | E5 | E6 |
|---|---|---|---|---|---|---|
| BR-730 | 100 | 100 | 100 | 100 | 100 | 100 |
| Sanceler SR | 26.0 | 27.5 | 29.5 | 31.5 | 27.0 | 26.5 |
| Zinc oxide | 5 | 5 | 5 | 5 | 5 | 5 |
| Barium sulfate | * | * | * | * | * | * |
| 2-thionaphthol | 0.2 | 0.2 | 0.2 | 0.2 | 0.2 | 0.2 |
| Zinc octoate | - | - | - | - | - | - |
| Zinc laurate | - | - | - | - | - | - |
| Zinc myristate | - | - | - | - | - | - |
| Zinc stearate | 10 | 20 | 30 | 40 | - | 0.5 |
| Dicumyl peroxide | 0.75 | 0.75 | 0.75 | 0.75 | 0.75 | 0.75 |
| Amount of acid/salt | 10 | 20 | 30 | 40 | 0 | 0.5 |

| | | | | | | |
|---|---|---|---|---|---|---|
| * Appropriate amount | | | | | | |

**Table IV-3 Composition of Envelope Layer (parts by weight)**

| Type | E7 | E8 | E9 | E10 | E11 |
|---|---|---|---|---|---|
| BR-730 | 100 | 100 | 100 | 100 | 100 |
| Sanceler SR | 25.5 | 25.0 | 25.5 | 26.0 | 25.5 |
| Zinc oxide | 5 | 5 | 5 | 5 | 5 |
| Barium sulfate | * | * | * | * | * |
| 2-thionaphthol | 0.2 | 0.2 | 0.2 | 0.2 | 0.2 |
| Zinc octoate | 2.5 | 5 | - | - | - |
| Zinc laurate | - | - | 10 | - | - |
| Zinc myristate | - | - | - | 5 | 10 |
| Zinc stearate | - | - | - | - | - |
| Dicumyl peroxide | 0.75 | 0.75 | 0.75 | 0.75 | 0.75 |
| Amount of acid/salt | 2.5 | 5 | 10 | 5 | 10 |

| | | | | | |
|---|---|---|---|---|---|
| * Appropriate amount | | | | | |

The details of the compounds listed in Tables IV-1 to IV-3 are as follows.
BR-730: a high-cis polybutadiene manufactured by JSR Corporation (cis-1,4-bond content: 96% by weight, 1,2-vinyl bond content: 1.3% by weight, Mooney viscosity (ML₁₊₄ (100°C)): 55, molecular weight distribution (Mw/Mn): 3)
MAGSARAT 150ST: magnesium oxide manufactured by Kyowa Chemical Industry Co., Ltd.
Methacrylic acid: a product of MITSUBISHI RAYON CO., LTD.
Sanceler SR: zinc diacrylate manufactured by SANSHIN CHEMICAL INDUSTRY CO., LTD. (a product coated with 10% by weight of stearic acid)
Zinc oxide: trade name "Ginrei R" manufactured by Toho Zinc Co., Ltd.
Barium sulfate : trade name "Barium Sulfate BD" manufactured by Sakai Chemical Industry Co., Ltd.
2-thionaphthol: a product of Tokyo Chemical Industry Co., Ltd.
Zinc octoate: a product of Mitsuwa Chemicals Co., Ltd. (purity: 99% or greater)
Zinc stearate: a product of Wako Pure Chemical Industries, Ltd. (purity: 99% or greater)
Zinc laurate: a product of Mitsuwa Chemicals Co., Ltd. (purity: 99% or greater)
Zinc myristate: a product of NOF Corporation (purity: 90 or greater)
Dicumyl peroxide: a product of NOF Corporation

**Table IV-4 Composition of Cover (parts by weight)**

| Type | (a) | (b) | (c) | (d) |
|---|---|---|---|---|
| Himilan AM7337 | 5 | 51 | 45 | 40 |
| Himilan 1555 | 10 | - | - | - |
| Himilan AM7329 | 55 | 40 | 40 | 40 |
| NUCREL N1050H | 30 | - | - | - |
| Rabalon T3221C | - | 9 | 15 | 20 |
| Titanium dioxide | 3 | 6 | 6 | 6 |
| TINUVIN 770 | 0.2 | - | - | - |

**Table IV-5 Composition of Cover (parts by weight)**

| Type | (e) | (f) | (g) | (h) | (i) |
|---|---|---|---|---|---|
| Himilan AM7337 | 24 | 26 | 30 | 26 | 30 |
| Himilan 1555 | - | - | - | - | - |
| Himilan AM7329 | 50 | 40 | 30 | 26 | 30 |
| NUCREL N1050H | - | - | - | - | - |
| Rabalon T3221C | 26 | 34 | 40 | 48 | 40 |
| Titanium dioxide | 6 | 6 | 6 | 6 | 6 |
| TINUVIN 770 | - | - | - | - | 0.2 |

**Table IV-6 Hardness Distribution of Core (JIS-C hardness)**

| | Ex. IV-1 | Ex. IV-2 | Ex. IV-3 | Ex. IV-4 | Ex. IV-5 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(7.5) | - | - | - | - | - |
| H(8.0) | 64.6 | 64.6 | 64.6 | 64.6 | 64.6 |
| H(9.5) | - | - | - | - | - |
| H(10.0) | 67.0 | 67.0 | 67.0 | 67.0 | 67.0 |
| H(10.5) | - | - | - | - | - |
| H(12.5) | 71.8 | 71.8 | 71.8 | 71.8 | 71.8 |
| H(15.0) | 76.0 | 76.0 | 76.0 | 76.0 | 76.0 |
| H(17.5) | 79.5 | 79.5 | 79.5 | 79.5 | 79.5 |
| Hs | 82.5 | 82.5 | 82.5 | 82.5 | 82.0 |

**Table IV-7 Hardness Distribution of Core (JIS-C hardness)**

| | Ex. IV-6 | Ex. IV-7 | Ex. IV-8 | Ex. IV-9 | Ex. IV-10 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(7.5) | - | - | - | - | - |
| H(8.0) | 64.6 | 62.8 | 64.0 | 68.8 | 65.2 |
| H(9.5) | - | - | - | - | - |
| H(10.0) | 67.0 | 66.6 | 66.8 | 70.0 | 67.4 |
| H(10.5) | - | - | - | - | - |
| H(12.5) | 71.8 | 73.7 | 71.0 | 71.2 | 71.0 |
| H(15.0) | 76.0 | 75.4 | 72.1 | 74.8 | 75.3 |
| H(17.5) | 79.5 | 78.2 | 73.0 | 78.8 | 80.6 |
| Hs | 81.5 | 81.1 | 78.6 | 82.4 | 83.6 |

**Table IV-8 Hardness Distribution of Core (JIS-C hardness)**

| | Ex. IV-11 | Ex. IV-12 | Ex. IV-13 | Ex. IV-14 | Ex. IV-15 |
|---|---|---|---|---|---|
| H(0.0) | 55.0 | 55.0 | 55.0 | 55.0 | 55.0 |
| H(2.5) | 56.0 | 56.0 | 56.0 | 56.0 | 58.5 |
| H(5.0) | 58.0 | 58.0 | 58.0 | 58.0 | 60.5 |
| H(7.0) | 60.0 | 60.0 | 60.0 | 60.0 | - |
| H(7.5) | - | - | - | - | 62.5 |
| H(8.0) | 63.8 | 64.4 | 67.0 | 65.5 | - |
| H(9.5) | - | - | - | - | 65.0 |
| H(10.0) | 67.9 | 66.4 | 68.5 | 67.4 | - |
| H(10.5) | - | - | - | - | 68.6 |
| H(12.5) | 73.8 | 71.0 | 70.1 | 71.8 | 70.6 |
| H(15.0) | 77.8 | 77.0 | 76.7 | 77.5 | 74.1 |
| H(17.5) | 82.0 | 80.7 | 80.5 | 81.3 | 79.0 |
| Hs | 84.4 | 82.8 | 82.9 | 84.0 | 82.5 |

**Table IV-9 Hardness Distribution of Core (JIS-C hardness)**

| | Comp. Ex. IV-1 | Comp. Ex. IV-2 | Comp. Ex. IV-3 | Comp. Ex. IV-4 |
|---|---|---|---|---|
| H(0.0) | 55.0 | 54.0 | 55.0 | 55.0 |
| H(2.5) | 56.0 | 59.8 | 56.0 | 56.0 |
| H(5.0) | 58.0 | 63.0 | 58.0 | 58.0 |
| H(7.0) | 60.0 | - | 60.0 | 60.0 |
| H(7.5) | - | 64.6 | - | - |
| H(8.0) | 64.6 | - | 64.6 | 64.6 |
| H(9.5) | - | - | - | - |
| H(10.0) | 67.0 | 67.0 | 67.0 | 67.0 |
| H(10.5) | - | - | - | - |
| H(12.5) | 71.8 | 71.8 | 71.8 | 71.8 |
| H(15.0) | 76.0 | 76.0 | 76.0 | 76.0 |
| H(17.5) | 79.5 | 79.5 | 79.5 | 79.5 |
| Hs | 82.5 | 82.5 | 82.5 | 82.5 |

**Table IV-10 Hardness Distribution of Core (JIS-C hardness)**

| | Comp. Ex. IV-5 | Comp. Ex. IV-6 | Comp. Ex. IV-7 |
|---|---|---|---|
| H(0.0) | 55.0 | 55.0 | 55.0 |
| H(2.5) | 56.0 | 56.0 | 56.0 |
| H(5.0) | 58.0 | 58.0 | 58.0 |
| H(7.0) | 60.0 | 60.0 | 60.0 |
| H(7.5) | - | - | - |
| H(8.0) | 64.3 | 67.7 | 64.6 |
| H(9.5) | - | - | - |
| H(10.0) | 67.0 | 68.6 | 67.0 |
| H(10.5) | - | - | - |
| H(12.5) | 70.4 | 70.6 | 71.8 |
| H(15.0) | 70.5 | 74.1 | 76.0 |
| H(17.5) | 68.5 | 79.0 | 79.5 |
| Hs | 70.2 | 82.5 | 82.5 |

**Table IV-11 Results of Evaluation**

| | | Ex. IV-1 | Ex. IV-2 | Ex. IV-3 | Ex. IV-4 | Ex. IV-5 |
|---|---|---|---|---|---|---|
| Center | Comp. | A | A | A | A | A |
| | Diameter (mm) | 15 | 15 | 15 | 15 | 15 |
| Envelop e layer | Comp. | E1 | E1 | E1 | E1 | E1 |
| Core | | | | | | |
| Hs - H(0.0) | | 27.5 | 27.5 | 27.5 | 27.5 | 27.0 |
| Diameter (mm) | | 37.1 | 37.1 | 37.1 | 37.1 | 36.5 |
| Dc (mm) | | 3.90 | 3.90 | 3.90 | 3.90 | 3.90 |
| Inner cover Comp. | | (e) | (f) | (g) | (h) | (f) |
| Ti (mm) | | 1.0 | 1.0 | 1.0 | 1.0 | 1.0 |
| Hi (JIS-C) | | 83.0 | 76.0 | 71.0 | 65.0 | 76.0 |
| Mid cover Comp. | | (b) | (b) | (d) | (g) | (b) |
| Tm (mm) | | 1.0 | 1.0 | 1.0 | 1.0 | 1.0 |
| Hm (JIS-C) | | 89.0 | 89.0 | 85.0 | 71.0 | 89.0 |
| Outer cover Comp. | | (a) | (a) | (a) | (a) | (a) |
| To (mm) | | 0.8 | 0.8 | 0.8 | 0.8 | 1.1 |
| Ho (JIS-C) | | 92.0 | 92.0 | 92.0 | 92.0 | 92.0 |
| Ti + Tm + To (mm) | | 2.8 | 2.8 | 2.8 | 2.8 | 3.1 |
| Hi - Hs (JIS-C) | | 0.5 | -6.5 | -11.5 | -17.5 | -6.0 |
| Ho - Hi (JIS-C) | | 9.0 | 16.0 | 21.0 | 27.0 | 16.0 |
| Hm - Hi (JIS-C) | | 6.0 | 13.0 | 14.0 | 6.0 | 13.0 |
| Ho - Hm (JIS-C) | | 3.0 | 3.0 | 7.0 | 21.0 | 3.0 |
| Db (mm) | | 2.94 | 2.95 | 2.98 | 3.03 | 2.93 |
| W#1 spin(rpm) | | 2480 | 2470 | 2455 | 2475 | 2490 |
| W#1 distance(m) | | 201.0 | 201.3 | 201.6 | 201.1 | 200.8 |
| W#1 feel | | B | A | A | B | B |

**Table IV-12 Results of Evaluation**

| | | Ex. IV-6 | Ex. IV-7 | Ex. IV-8 | Ex. IV-9 | Ex. IV-10 |
|---|---|---|---|---|---|---|
| Center | Comp. | A | A | A | A | A |
| | Diameter (mm) | 15 | 15 | 15 | 15 | 15 |
| Envelop e layer | Comp. | E1 | E2 | E3 | E6 | E7 |
| Core | | | | | | |
| Hs - H(0.0) | | 26.5 | 26.1 | 23.6 | 27.4 | 28.6 |
| Diameter (mm) | | 35.9 | 37.1 | 37.1 | 37.1 | 37.1 |
| Dc (mm) | | 3.90 | 3.91 | 3.90 | 3.85 | 3.94 |
| Inner cover Comp. | | (f) | (g) | (g) | (e) | (e) |
| Ti (mm) | | 1.0 | 1.0 | 1.0 | 1.0 | 1.0 |
| Hi (JIS-C) | | 76.0 | 71.0 | 71.0 | 83.0 | 83.0 |
| Mid cover Comp. | | (b) | (d) | (b) | (b) | (b) |
| Tm (mm) | | 1.0 | 1.0 | 1.0 | 1.0 | 1.0 |
| Hm (JIS-C) | | 89.0 | 85.0 | 89.0 | 89.0 | 89.0 |
| Outer cover Comp. | | (a) | (a) | (a) | (a) | (a) |
| To (mm) | | 1.4 | 0.8 | 0.8 | 0.8 | 0.8 |
| Ho (JIS-C) | | 92.0 | 92.0 | 92.0 | 92.0 | 92.0 |
| Ti + Tm + To (mm) | | 3.4 | 2.8 | 2.8 | 2.8 | 2.8 |
| Hi - Hs (JIS-C) | | -5.5 | -10.1 | -7.6 | 0.6 | -0.6 |
| Ho - Hi (JIS-C) | | 16.0 | 21.0 | 21.0 | 9.0 | 9.0 |
| Hm - Hi (JIS-C) | | 13.0 | 14.0 | 18.0 | 6.0 | 6.0 |
| Ho - Hm (JIS-C) | | 3.0 | 7.0 | 3.0 | 3.0 | 3.0 |
| Db (mm) | | 2.91 | 2.99 | 2.98 | 2.89 | 2.98 |
| W#1 spin (rpm) | | 2500 | 2505 | 2510 | 2515 | 2465 |
| W#1 distance (m) | | 200.7 | 200.6 | 200.5 | 200.1 | 201.4 |
| W#1 feel | | C | B | B | B | B |

**Table IV-13 Results of Evaluation**

| | | Ex. IV-11 | Ex. IV-12 | Ex. IV-13 | Ex. IV-14 | Ex. IV-15 |
|---|---|---|---|---|---|---|
| Center | Comp. | A | A | A | A | B |
| | Diameter (mm) | 15 | 15 | 15 | 15 | 20 |
| Envelop e layer | Comp. | E8 | E9 | E10 | E11 | E5 |
| Core | | | | | | |
| Hs - H(0.0) | | 29.4 | 27.8 | 27.9 | 29.0 | 27.5 |
| Diameter (mm) | | 37.1 | 37.1 | 37.1 | 37.1 | 37.1 |
| Dc (mm) | | 3.83 | 3.95 | 3.87 | 3.82 | 3.93 |
| Inner cover Comp. | | (e) | (e) | (e) | (e) | (e) |
| Ti (mm) | | 1.0 | 1.0 | 1.0 | 1.0 | 1.0 |
| Hi (JIS-C) | | 83.0 | 83.0 | 83.0 | 83.0 | 83.0 |
| Mid cover Comp. | | (b) | (b) | (b) | (b) | (b) |
| Tm (mm) | | 1.0 | 1.0 | 1.0 | 1.0 | 1.0 |
| Hm (JIS-C) | | 89.0 | 89.0 | 89.0 | 89.0 | 89.0 |
| Outer cover Comp. | | (a) | (a) | (a) | (a) | (a) |
| To (mm) | | 0.8 | 0.8 | 0.8 | 0.8 | 0.8 |
| Ho (JIS-C) | | 92.0 | 92.0 | 92.0 | 92.0 | 92.0 |
| Ti + Tm + To (mm) | | 2.8 | 2.8 | 2.8 | 2.8 | 2.8 |
| Hi - Hs (JIS-C) | | -1.4 | 0.2 | 0.1 | -1.0 | 0.5 |
| Ho - Hi (JIS-C) | | 9.0 | 9.0 | 9.0 | 9.0 | 9.0 |
| Hm - Hi (JIS-C) | | 6.0 | 6.0 | 6.0 | 6.0 | 6.0 |
| Ho - Hm (JIS-C) | | 3.0 | 3.0 | 3.0 | 3.0 | 3.0 |
| Db (mm) | | 2.87 | 2.99 | 2.91 | 2.86 | 2.97 |
| W#1 spin(rpm) | | 2435 | 2460 | 2475 | 2445 | 2485 |
| W#1 distance (m) | | 202.0 | 201.5 | 201.2 | 201.8 | 200.9 |
| W#1 feel | | A | A | B | A | B |

**Table IV-14 Results of Evaluation**

| | | Comp. Ex. IV-1 | Comp. Ex. IV-2 | Comp. Ex. IV-3 | Comp. Ex. IV-4 | Comp. Ex. IV-5 |
|---|---|---|---|---|---|---|
| Center | Comp. | A | C | A | A | A |
| | Diameter(mm) | 15 | 37.1 | 15 | 15 | 15 |
| Envelop e layer | Comp. | E1 | - | E1 | E1 | E4 |
| Core | | | | | | |
| Hs - H(0.0) | | 27.5 | 28.5 | 27.5 | 27.5 | 15.2 |
| Diameter (mm) | | 37.1 | 37.1 | 37.1 | 37.1 | 37.1 |
| Dc (mm) | | 3.90 | 3.85 | 3.90 | 3.90 | 3.91 |
| Inner cover Comp. | | (c) | (a) | (a) | (d) | (e) |
| Ti (mm) | | 1.0 | 1.0 | 1.0 | 1.4 | 1.0 |
| Hi (JIS-C) | | 87.0 | 92.0 | 92.0 | 85.0 | 83.0 |
| Mid cover Comp. | | (b) | (a) | (a) | (a) | (b) |
| Tm (mm) | | 1.0 | 1.0 | 1.0 | 0.6 | 1.0 |
| Hm (JIS-C) | | 89.0 | 92.0 | 92.0 | 92.0 | 89.0 |
| Outer cover Comp. | | (a) | (a) | (a) | (a) | (a) |
| To (mm) | | 0.8 | 0.8 | 0.8 | 0.8 | 0.8 |
| Ho (JIS-C) | | 92.0 | 92.0 | 92.0 | 92.0 | 92.0 |
| Ti + Tm + To (mm) | | 2.8 | 2.8 | 2.8 | 2.8 | 2.8 |
| Hi - Hs (JIS-C) | | 4.5 | 9.5 | 9.5 | 2.5 | 12.8 |
| Ho - Hi (JIS-C) | | 5.0 | 0 | 0 | 7.0 | 9.0 |
| Hm - Hi (JIS-C) | | 2.0 | 0 | 0 | 7.0 | 6.0 |
| Ho - Hm (JIS-C) | | 3.0 | 0 | 0 | 0 | 3.0 |
| Db (mm) | | 2.92 | 2.85 | 2.90 | 2.93 | 2.95 |
| W#1 spin(rpm) | | 2530 | 2540 | 2535 | 2525 | 2645 |
| W#1 distance (m) | | 199.6 | 199.4 | 199.5 | 199.7 | 197.9 |
| W#1 feel | | D | D | D | D | D |

**Table IV-15 Results of Evaluation**

| | | Comp. Ex. IV-6 | Comp. Ex. IV-7 |
|---|---|---|---|
| Center | Comp. | A | A |
| | Diameter (mm) | 15 | 15 |
| Envelop e layer | Comp. | E5 | E1 |
| Core | | | |
| Hs - H(0.0) | | 27.5 | 27.5 |
| Diameter (mm) | | 37.1 | 37.1 |
| Dc (mm) | | 3.91 | 3.90 |
| Inner cover Comp. | | (e) | (e) |
| Ti (mm) | | 1.0 | 1.0 |
| Hi (JIS-C) | | 83.0 | 83.0 |
| Mid cover Comp. | | (b) | (f) |
| Tm (mm) | | 1.0 | 1.0 |
| Hm (JIS-C) | | 89.0 | 76.0 |
| Outer cover Comp. | | (a) | (i) |
| To (mm) | | 0.8 | 0.8 |
| Ho (JIS-C) | | 92.0 | 71.0 |
| Ti + Tm + To (mm) | | 2.8 | 2.8 |
| Hi - Hs (JIS-C) | | 0.5 | 0.5 |
| Ho - Hi (JIS-C) | | 9.0 | -12.0 |
| Hm - Hi (JIS-C) | | 6.0 | -7.0 |
| Ho - Hm (JIS-C) | | 3.0 | -5.0 |
| Db (mm) | | 2.95 | 3.06 |
| W#1 spin(rpm) | | 2565 | 2685 |
| W#1 distance(m) | | 199.2 | 197.7 |
| W#1 feel | | D | D |

As shown in Tables IV-11 to IV-15, the golf balls according to Examples are excellent in flight performance and feel at impact particularly when being hit with a driver. From the results of evaluation, advantages of the present invention are clear.

The golf ball according to the present invention can be used for playing golf on golf courses and practicing at driving ranges.

## Claims

1. A golf ball comprising a core, an inner cover positioned outside the core, and an outer cover positioned outside the inner cover, wherein
the core comprises a center and an envelope layer positioned outside the center,
the center has a diameter of equal to or greater than 10 mm and equal to or less than 20 mm,
the center is formed by a rubber composition being crosslinked,
the envelope layer is formed by a rubber composition being crosslinked,
the rubber composition of the envelope layer includes:
(a) a base rubber;
(b) a co-crosslinking agent;
(c) a crosslinking initiator;
a filler; and
(d) an acid and/or a salt, wherein the acid and/or salt excludes the co-crosslinking agent (b) and is selected from carboxylic acids, phosphoric acid, hydroacids and salts thereof,
the co-crosslinking agent (b) is:
(b1) an α,β-unsaturated carboxylic acid having 3 to 8 carbon atoms; or
(b2) a metal salt of an α,β-unsaturated carboxylic acid having 3 to 8 carbon atoms,
a JIS-C hardness Hi of the inner cover is greater than a JIS-C hardness Hs at a surface of the core, and
a JIS-C hardness Ho of the outer cover is less than the hardness Hi,
wherein the JIS-C hardnesses are measured with a -C hardness scale mounted to an automated rubber hardness measurement machine with the trade name "P1", manufactured by Kobunshi Keiki Co., Ltd.).

2. The golf ball according to claim 1, wherein a difference (Hi-Hs) between the hardness Hi and the hardness Hs is equal to or greater than 2.

3. The golf ball according to claim 1 or 2, wherein a difference (Hi-Ho) between the hardness Hi and the hardness Ho is equal to or greater than 1.

4. The golf ball according to any of claims 1 to 3, wherein an amount of the acid and/or the salt (d) is equal to or greater than 1.0 parts by weight but less than 40 parts by weight, per 100 parts by weight of the base rubber (a).

## Patentansprüche

1. Golfball, umfassend einen Kern, eine innere Abdeckung, die außerhalb des Kerns angeordnet ist, und eine äußere Abdeckung, die außerhalb der inneren Abdeckung angeordnet ist, wobei
der Kern ein Zentrum und eine Umhüllungsschicht umfasst, die außerhalb des Zentrums angeordnet ist,
das Zentrum einen Durchmesser von gleich oder größer als 10 mm und gleich oder kleiner als 20 mm aufweist,
das Zentrum durch eine vernetzte Kautschukzusammensetzung gebildet ist,
die Umhüllungsschicht durch eine vernetzte Kautschukzusammensetzung gebildet ist,
die Kautschukzusammensetzung der Umhüllungsschicht umfasst:
(a) einen Basiskautschuk;
(b) ein Vernetzungsmittel;
(c) einen Vernetzungsinitiator;
einen Füllstoff; und
(d) eine Säure und/oder ein Salz, wobei die Säure und/oder das Salz das Vernetzungsmittel (b) ausschließt und ausgewählt ist aus Carbonsäuren, Phosphorsäuren, Wasserstoffsäuren und deren Salzen,
das Vernetzungsmittel (b) ist:
(b1) eine α,β-ungesättigte Carbonsäure mit 3 bis 8 Kohlenstoffatomen; oder
(b2) ein Metallsalz einer α,β-ungesättigten Carbonsäure mit 3 bis 8 Kohlenstoffatomen,
eine JIS-C-Härte Hi der inneren Abdeckung größer ist als eine JIS-C-Härte Hs an der Oberfläche des Kerns, und
eine JIS-C-Härte Ho der äußeren Abdeckung kleiner ist als die Härte Hi,
wobei die JIS-C-Härten mit einer C-Härteskala gemessen sind, die an einer von Kobunshi Keiki Co., Ltd. hergestellten, automatisierten Kautschukhärtemessmaschine mit dem Handelsnamen "P1" montiert ist).

2. Golfball nach Anspruch 1, wobei die Differenz (Hi-Hs) zwischen der Härte Hi und der Härte Hs gleich oder größer als 2 ist.

3. Golfball nach Anspruch 1 oder 2, wobei eine Differenz (Hi-Ho) zwischen der Härte Hi und der Härte Ho gleich oder größer als 1 ist.

4. Golfball nach einem der Ansprüche 1 bis 3, wobei eine Menge der Säure und/oder des Salzes (d) gleich oder größer als 1,0 Gewichtsteile aber kleiner als 40 Gewichtsteile bezogen auf 100 Gewichtsteile des Basiskautschuks (a) ist.

## Revendications

1. Balle de golf comprenant un noyau, une couverture intérieure positionnée à l'extérieur du noyau, et une couverture extérieure positionnée à l'extérieur de la couverture intérieure, et dans laquelle
le noyau comprend un centre et une couche enveloppe positionnée à l'extérieur du centre,
le centre a un diamètre égal ou supérieur à 10 mm et égal ou inférieur à 20 mm,
le centre est formé par une composition en caoutchouc qui est réticulée,
la couche enveloppe est formée par une composition en caoutchouc qui est réticulée,
la composition en caoutchouc de la couche enveloppe inclut :
(a) un caoutchouc de base ;
(b) un agent de co-réticulation ;
(c) un initiateur de réticulation ;
une charge ; et
(d) un acide et/ou un sel, dans laquelle l'acide et/ou le sel exclut l'agent de co-réticulation (b) et est sélectionné parmi les acides carboxyliques, acide phosphorique, hydracides et sels de ceux-ci,
l'agent de co-réticulation (b) est :
(b1) un acide carboxylique α,β-insaturé ayant de 3 à 8 atomes de carbone ; ou
(b2) un sel métallique d'un acide carboxylique α,β-insaturé ayant de 3 à 8 atomes de carbone,
une dureté JIS-C Hi de la couverture intérieure est supérieure à une dureté JIS-C Hs d'une surface du noyau, et
une dureté JIS Ho de la couverture extérieure est inférieure à la dureté Hi, dans laquelle les duretés JIS-C sont mesurées avec une jauge de dureté C montée sur un appareil de mesure de dureté de caoutchouc automatisé portant le nom commercial "P1", fabriqué par Kobunshi Keiki Co., Ltd.).

2. Balle de golf selon la revendication 1, dans laquelle une différence (Hi-Hs) entre la dureté Hi et la dureté Hs est égale ou supérieure à 2.

3. Balle de golf selon la revendication 1 ou 2, dans laquelle une différence (Hi-Ho) entre la dureté Hi et la dureté Ho est égale ou supérieure à 1.

4. Balle de golf selon l'une quelconque des revendications 1 à 3, dans laquelle une quantité d'acide et/ou de sel (d) est égale ou supérieure à 1,0 partie en poids mais inférieure à 40 parties en poids, pour 100 parties en poids du caoutchouc de base (a).
